# EUROPÄISCHE PATENTSCHRIFT

(11) **EP 4 436 904 B1**
(45) Veröffentlichungstag und Bekanntmachung des Hinweises auf die Patenterteilung: **11.11.2026**
(21) Anmeldenummer: 22818342.2
(22) Anmeldetag: 17.11.2022
(51) Int. Cl.: B65G 47/68, B65G 47/51

(54) **PUFFERVORRICHTUNG**
BUFFER DEVICE
DISPOSITIF TAMPON

(30) Priorität: 22.11.2021 DE 102021130465
(43) Veröffentlichungstag der Anmeldung: 02.10.2024
(73) Patentinhaber: Krones AG, 93073 Neutraubling (DE)
(72) Erfinder: LUECKE, Jens, 93073 Neutraubling (DE); DEPNER, Christian, 93073 Neutraubling (DE); CLAUSEN, Niels, 93073 Neutraubling (DE)
(74) Vertreter: Grünecker Patent- und Rechtsanwälte PartG mbB
(86) Internationale Anmeldenummer: PCT/EP2022/082179
(87) Internationale Veröffentlichungsnummer: WO 2023/088989

(56) Entgegenhaltungen:
- EP-A1- 2 161 226
- EP-A1- 3 495 291
- DE-A1- 102015 202 660
- GB-A- 919 770
- US-A- 3 604 551
- US-A- 4 401 207
- US-B1- 9 845 201

## Beschreibung

Die Erfindung betrifft eine Puffervorrichtung gemäß dem Oberbegriff des Anspruchs 1.

### Stand der Technik

Aus dem Gebiet der Abfülltechnik ist bekannt, dass in einer Anlage mit einem Füller in Behälter abgefülltes Produkt beispielsweise in einem Pasteur pasteurisiert werden muss. Auf den Pasteurisierungsprozess können weitere Prozesse wie Inspektion der Behälter in einer Inspektionsmaschine und Trocknen der Behälter in einem Trockenteil folgen. Um in diesen Maschinen - Füller, Pasteur, Inspektionsmaschine, Trockenteil - möglicherweise auftretenden Störungen Rechnung tragen zu können, kann zwischen Füller und Pasteur, zwischen Pasteur und Inspektionsmaschine und zwischen Inspektionsmaschine und Trockenteil jeweils ein Puffer vorgesehen werden. Die Puffer können jeweils derart ausgebildet sein, die Behälter für eine Zeitdauer von bis zu 60 Sekunden zu puffern. Mittels dieser mehreren Puffer können mögliche Störungen in den einzelnen Maschinen behoben werden, ohne die ganze Produktionslinie anhalten zu müssen.

Die Liniennennleistung in einer solchen Anlage kann der Nennleistung des Pasteurs entsprechen. Der Füller vor dem Pasteur kann beispielsweise um 10% bis 20% überdimensioniert sein, um beispielsweise den Puffer zwischen Füller und Pasteur nach einer Störung im Füller wieder befüllen zu können. Die Maschinen, die dem Pasteur nachfolgen, können beispielsweise um 20% überdimensioniert sein, um den Linienwirkungsgrad hochzuhalten zu können und um beispielsweise die auf dem jeweiligen Puffer nach einer Störung angesammelten Behälter zahlenmäßig wieder abbauen zu können
Durch die Umsetzung die Puffer im Massentransport wird viel Platz benötigt. Zudem wird beispielsweise der Puffer zwischen dem Füller und dem Pasteur lediglich zur Pufferung von Behältern bei Störungen des Füllers eingesetzt. Es ist nicht vorgesehen, den Puffer zwischen dem Füller und dem Pasteur zur Pufferung bei Störungen des Pasteurs und/oder der Inspektionsmaschine und/oder des Trockenteils zu verwenden.

DE 44 34 176 A1 offenbart ein Verfahren für eine leistungsbezogene Versorgung von Maschinen in Gefäßbehandlungsanlagen, sodass ansonsten unvermeidbare Maschinenstopps innerhalb einer solchen Gefäßbehandlungsanlage vermieden oder reduziert werden können. Das Verfahren sieht vor, dass in Abhängigkeit von der Durchsatzleistung bzw. dem Befüllungsgrad der der Reinigungsmaschine vor- und nachgeordneten Transporteure und/oder Maschinen der Befüllungszustand der Reinigungsmaschine durch veränderte zahlenmäßige Zuführung von zu reinigenden Gefäßen anpassbar ist. Bei einem Gefäßmangel in der Anlage können ohne weiteres die nachgeordneten Maschinen aufgrund der Reserve in der Reinigungsmaschine problemlos weiterfahren, ohne dass deren vorzeitiger Stopp erforderlich wird.

Die US9845201 B1 sowie die DE102019204536A1 offenbaren jeweils eine Puffervorrichtung nach dem Oberbegriff des Anspruchs 1.

### Aufgabe

Die Aufgabe der Erfindung besteht darin, eine Puffervorrichtung zur Verfügung zu stellen, die platzsparend betrieben werden kann und in der auf die Behälter einwirkende Kräfte reduzierbar sind.

### Lösung

Diese Aufgabe wird gelöst durch die Puffervorrichtung nach Anspruch 1. Weitere Merkmale der Erfindung sind in den Unteransprüchen offenbart.

Die Puffervorrichtung umfasst eine Behälterzuführvorrichtung, einen der Behälterzuführvorrichtung nachfolgenden Puffer und eine dem Puffer nachfolgende Behälterabführvorrichtung. Die Behälterzuführvorrichtung zum Zuführen von Behältern zu dem Puffer ist ausgebildet, Behälter mittels erster Transportbänder in eine erste Richtung zu transportieren. Der Puffer umfasst ein antreibbares Pufferband oder mehrere parallel oder in Reihe angeordnete, antreibbare Pufferbänder, das ausgebildet ist/die jeweils ausgebildet sind, Behälter in eine zweite Richtung zu transportieren, wobei die zweite Richtung quer zur ersten Richtung verläuft. Die Behälterabführvorrichtung ist zum Abführen und Vereinzeln von Behältern von dem Puffer in die erste Richtung oder in eine dritte Richtung, die zur ersten Richtung entgegengesetzt ist.

Die Behälterabführvorrichtung kann auf einer gegenüberliegenden Seite der Behälterzuführvorrichtung liegen. Die Behälterabführvorrichtung kann in die gleiche oder entgegengesetzte Richtung wie die Behälterzuführvorrichtung arbeiten.

Das antreibbare Pufferband kann ausgebildet sein oder die mehreren parallel angeordneten, antreibbaren Pufferbänder können jeweils ausgebildet sein, nun in die zweite Richtung antreibbar zu sein, oder stillzustehen. Es kann vorgesehen sein, dass ein Antreiben des antreibbaren Pufferbands oder der mehreren parallel angeordneten, antreibbaren Pufferbänder in eine Richtung, die entgegengesetzt zu der zweiten Richtung ist, nicht möglich ist. Behälter können nicht in eine Richtung transportiert werden, die entgegengesetzt zu der zweiten Richtung ist.

Das antreibbare Pufferband kann weiter ausgebildet sein oder die mehreren parallel angeordneten, antreibbaren Pufferbänder können weiter jeweils ausgebildet sein, Behälter in eine vierte Richtung zu transportieren, wobei die zweite und die vierte Richtung entgegengesetzt zueinander sein können und die vierte Richtung quer zur ersten Richtung verlaufen kann.

Das Pufferband kann oder die Pufferbänder können jeweils mit einer Geschwindigkeit von 0 m/min bis 20 m/min antreibbar sein, beispielsweise in die zweite Richtung oder in die vierte Richtung.

Die Bezeichnungen "erste", "zweite", "dritte" bzw. "vierte" dienen hier und im Folgenden lediglich der Unterscheidung gleicher Begriffe und haben keine weitere einschränkende Bedeutung.

Durch das Zuführen von vereinzelten Behältern mittels der Behälterzuführvorrichtung, die Behälter in die erste Richtung quer zu dem Puffer transportiert und die Behälter derart dem Puffer zuführt und durch das Abführen und Vereinzeln von Behältern von dem Puffer mittels der Behälterabführvorrichtung, die Behälter in die erste oder dritte Richtung quer zu dem Puffer abführt und vereinzelt, ist eine kompakte und platzsparende Bauweise der Puffervorrichtung möglich.

Zwischen der Behälterzuführvorrichtung und dem Puffer kann mindestens ein Übergangsbereich angeordnet sein, wobei eine Länge des Übergangsbereichs kürzer als eine Länge des Puffers sein kann. Es wäre auch denkbar, dass eine Länge des Übergangsbereichs größer als eine Länge des Puffers sein kann. Beispielsweise kann der Übergangsbereich als ein einziges antreibbares Band ausgebildet sein, das Behälter in die zweite Richtung oder in die dritte Richtung transportieren kann. Oder beispielsweise kann der Übergangsbereich eine gleiche Anzahl von antreibbaren Bänder umfassen, wie der Puffer, wobei die antreibbaren Bänder ausgebildet sein können, Behälter in die zweite oder in die dritte Richtung zu transportieren. Der Übergangsbereich kann dabei auch derart ausgebildet sein, dass er Behälter nur in die zweite Richtung, aber nicht in die dritte Richtung transportieren kann; der Übergangsbereich kann auch stillstehen. Der Übergangsbereich kann nur in die zweite Richtung antriebbar ausgebildet sein.

Der Übergangsbereich kann als ein Vorlauf des Puffers dienen, sodass Behälter, die von der Behälterzuführvorrichtung zugeführt werden können, zunächst in den Übergangsbereich gelangen und erst danach in den Puffer, also beispielsweise auf das eine oder die mehreren Pufferbänder.

Das Pufferband oder die Pufferbänder können mit einer Geschwindigkeit von -20 m/min bis 60 m/min (m/min entspricht Meter pro Minute), beispielsweise -10 m/min bis 30 m/min oder beispielsweise -5 m/min bis 15 m/min antreibbar sein. Beispielsweise kann bei mehreren parallel angeordneten, antreibbaren Pufferbändern ein separater Antrieb für jedes der Pufferbänder vorgesehen sein oder beispielsweise kann ein gemeinsamer Antrieb für die Pufferbänder vorgesehen sein. Bei einem separaten Antrieb für jedes der Pufferbänder können die Pufferbänder gleiche oder verschiedene Geschwindigkeiten aufweisen. Bei einem gemeinsamen Antrieb wiesen die Pufferbänder jeweils gleiche Geschwindigkeiten auf. Die Pufferbänder können auch gemeinsam angetrieben werden, jedoch nicht gleiche Geschwindigkeit aufweisen. Dazu sind die einzelnen Kettenräder der Pufferbänder unterschiedlich groß und haben aufgrund einer anderen Übersetzung unterschiedliche Geschwindigkeiten.

Die angegebenen Grenzwerte der Geschwindigkeitsbereiche können miteingeschlossen sein. Eine Geschwindigkeit mit einem positiven Wert kann einem Antrieb entsprechen, bei dem Behälter in die zweite Richtung transportierbar sind, beispielsweise durch das antreibbare Pufferband oder eines oder mehrere oder alle der mehreren parallel angeordneten Pufferbänder. Eine Geschwindigkeit von 0 m/min kann einem Stillstand des antreibbaren Pufferbands oder einem oder mehreren oder allen der mehreren parallel angeordneten Pufferbändern entsprechen. Eine Geschwindigkeit mit einem negativen Wert kann einem Antrieb entsprechen, bei dem Behälter in die dritte Richtung transportierbar sind, beispielsweise durch das antreibbare Pufferband oder eines oder mehrere oder alle der mehreren parallel angeordneten Pufferbänder
Eine Länge des oder der Pufferbänder kann derart bemessen sein, dass in einem Pufferbetrieb ein Puffern von Behältern auf dem oder den Pufferbändern für eine Zeitdauer von 0 bis 30 Minuten, 0 bis 20 Minuten, 0 bis 10 Minuten, 0,15 bis 15 Minuten oder beispielweise 0,1 bis 10 Minuten oder beispielweise 0,1 bis 5 Minuten möglich sein kann.

Zur Bestimmung der Länge kann beispielsweise eine Geschwindigkeit des Pufferbands oder der Pufferbänder, im Allgemeinen eine gemittelte Geschwindigkeit, während des Pufferbetriebes berücksichtigt werden.

Die Puffervorrichtung umfasst erfindungsgemäss weiter eine Steuerungsvorrichtung für den Puffer, die ausgebildet ist, ein Verfahren zum Steuern des Puffers auszuführen.

Die Steuerungsvorrichtung kann weiter ausgebildet sein
- nach Auftreten einer Störung stromab des Puffers, die ein Puffern von Behältern auf dem Pufferband oder den Pufferbändern erforderlich macht:
- Umstellen eines Normalbetriebs des Puffers zu einem Pufferbetrieb des Puffers, wobei das Umstellen umfasst:
- Beibehalten einer ersten Geschwindigkeit der Behälterzuführvorrichtung in der ersten Richtung, wobei die erste Geschwindigkeit einen ersten Wert aufweist und
- gleichzeitiges Abbremsen des Pufferbands von einer zweiten Geschwindigkeit mit einem zweiten Wert in der zweiten Richtung auf eine dritte Geschwindigkeit mit einem dritten Wert in der zweiten Richtung,
oder
gleichzeitiges Abbremsen der Pufferbänder von einer zweiten Geschwindigkeit mit jeweils einem zweiten Wert in der zweiten Richtung auf eine dritte Geschwindigkeit mit jeweils einem dritten Wert in der zweiten Richtung.

Im Normalbetrieb kann die Behälterzuführvorrichtung mit der ersten Geschwindigkeit mit dem ersten Wert in der ersten Richtung und das Pufferband mit der zweiten Geschwindigkeit mit dem zweiten Wert in der zweiten Richtung angetrieben werden.

Weiter kann das Umstellen umfassen:
- wenn die Störung behoben wurde, Umstellen des Pufferbetriebs des Puffers zum Normalbetrieb, wobei dieses Umstellen umfasst:
- weiterhin Beibehalten der ersten Geschwindigkeit der Behälterzuführvorrichtung in der ersten Richtung, wobei die erste Geschwindigkeit den ersten Wert aufweist und
- gleichzeitiges Erhöhen der dritten Geschwindigkeit des Pufferbands zurück zur zweiten Geschwindigkeit in die zweite Richtung und Beibehalten der zweiten Geschwindigkeit in die zweite Richtung
oder
gleichzeitiges Erhöhen der jeweils dritten Geschwindigkeit der Pufferbänder zurück zur zweiten Geschwindigkeit in die zweite Richtung und Beibehalten der zweiten Geschwindigkeit in die zweite Richtung.

Das gleichzeitige Erhöhen der dritten Geschwindigkeit des Pufferbands/der Pufferbänder zurück zur zweiten Geschwindigkeit in die zweite Richtung kann schrittweise über eine oder mehrere, jeweils größere Zwischengeschwindigkeiten oder kontinuierlich erfolgen.

Schrittweise kann umfassen, dass ein Erhöhen von der dritten Geschwindigkeit um jeweils einen gegebenen oder anpassbaren Prozentwert zu einer jeweiligen Zwischengeschwindigkeit vorgenommen werden kann, bis die zweite Geschwindigkeit erreicht ist. Beispielsweise kann ein Erhöhen um jeweils 15 bis 20% vorgesehen sein. Die erreichte Zwischengeschwindigkeit kann für eine gegebene oder anpassbare Zeitdauer beibehalten werden, bevor ein Erhöhen zu einer nächsten Zwischengeschwindigkeit oder der zweiten Geschwindigkeit erfolgen kann. Die gegebenen oder anpassbaren Zeitdauern können für die verschiedenen Zwischengeschwindigkeiten verschieden groß oder gleich groß sein.

Alternativ kann das Umstellen des Normalbetriebs zum Pufferbetrieb der thermischen Behälterbehandlungsvorrichtung weiter umfassen:
- weiterhin Beibehalten der ersten Geschwindigkeit der Behälterzuführvorrichtung in der ersten Richtung, wobei die erste Geschwindigkeit den ersten Wert aufweist und
- gleichzeitiges Abbremsen des Pufferbands von der dritten Geschwindigkeit mit einem dritten Wert in der zweiten Richtung auf eine Geschwindigkeit von 0 m/min und anschließendes Beschleunigen des Pufferbands von der Geschwindigkeit von 0 m/min auf eine vierte Geschwindigkeit in die dritte Richtung, wobei die vierte Geschwindigkeit einen vierten Wert aufweist, der kleiner als der zweite Wert ist, und Beibehalten der vierten Geschwindigkeit in die dritte Richtung
oder
gleichzeitiges Abbremsen der Pufferbänder von der dritten Geschwindigkeit mit jeweils einem dritten Wert in der zweiten Richtung auf eine Geschwindigkeit von 0 m/min und anschließendes Beschleunigen der Pufferbänder von der Geschwindigkeit von 0 m/min auf jeweils eine vierte Geschwindigkeit in die dritte Richtung, wobei die vierte Geschwindigkeit jeweils einen vierten Wert aufweist, der kleiner als der zweite Wert ist, und Beibehalten der jeweils vierten Geschwindigkeit in die dritte Richtung.

Das Abbremsen des Pufferbands von der zweiten Geschwindigkeit mit dem zweiten Wert in der zweiten Richtung (über die dritte Geschwindigkeit mit dem dritten Wert in der zweiten Richtung) auf die vierte Geschwindigkeit mit dem vierten Wert in der dritten Richtung kann kontinuierlich oder im Wesentlichen kontinuierlich erfolgen; stattdessen kann das Abbremsen auch schrittweise erfolgen.

Das Umstellen des Normalbetriebs zum Pufferbetrieb des Pufferbands kann weiter umfassen:
- wenn die von der Behälterzuführvorrichtung auf das Pufferband transportierten Behälter und die vom Pufferband zurückgeführten Behälter einen Anfangsbereich des Pufferbands füllen,
- weiterhin Beibehalten der ersten Geschwindigkeit der Behälterzuführvorrichtung in der ersten Richtung, wobei die erste Geschwindigkeit den ersten Wert aufweist und
- gleichzeitiges Abbremsen des Pufferbands von der vierten Geschwindigkeit in die dritte Richtung auf eine fünfte Geschwindigkeit mit einem fünften Wert von 0 m/min und anschließendes Beschleunigen des Pufferbands von der fünften Geschwindigkeit auf eine sechste Geschwindigkeit in die zweite Richtung, wobei die sechste Geschwindigkeit einen sechsten Wert aufweist, der gleich dem ersten Wert ist
   oder
- wenn die von der Behälterzuführvorrichtung auf die Pufferbänder transportierten Behälter und die von den Pufferbändern zurückgeführten Behälter einen Anfangsbereich der Pufferbänder füllen,
- weiterhin Beibehalten der ersten Geschwindigkeit der Behälterzuführvorrichtung in der ersten Richtung, wobei die erste Geschwindigkeit den ersten Wert aufweist und
- gleichzeitiges Abbremsen der Pufferbänder von der jeweils vierten Geschwindigkeit in die dritte Richtung auf eine fünfte Geschwindigkeit mit einem fünften Wert von 0 m/min und anschließendes Beschleunigen der Pufferbänder von der fünften Geschwindigkeit auf eine sechste Geschwindigkeit in die zweite Richtung, wobei die sechste Geschwindigkeit einen sechsten Wert aufweist, der gleich dem ersten Wert ist.

Es können beispielsweise 30% bis 40% des Pufferbands oder der Pufferbänder gefüllt sein, wenn die von der Behälterzuführvorrichtung auf das Pufferband oder die Pufferbänder transportierten Behälter und die vom Pufferband oder von den Pufferbändern zurückgeführten Behälter den Anfangsbereich des Pufferbands füllen.

Die sechste Geschwindigkeit in die zweite Richtung kann beibehalten werden, solange die Störung stromab des Puffers nicht behoben wurde und bis das Pufferband oder die Pufferbänder ganz mit Behältern gefüllt ist oder solange das Pufferband oder die Pufferbänder nicht ganz oder im Wesentlichen nicht ganz mit Behältern gefüllt ist, beispielsweise solange das Pufferband weniger als 90% bis 95% mit Behältern gefüllt ist.

Das Verfahren zum Steuern kann weiter umfassen:
- wenn die Störung behoben wurde, Umstellen des Pufferbetriebs des Puffers zum Normalbetrieb, wobei dieses Umstellen umfasst:
- weiterhin Beibehalten der ersten Geschwindigkeit der Behälterzuführvorrichtung in der ersten Richtung, wobei die erste Geschwindigkeit den ersten Wert aufweist und
- gleichzeitiges Erhöhen der sechsten Geschwindigkeit des Pufferbands auf eine siebte Geschwindigkeit in die zweite Richtung, wobei der siebte Wert gleich dem zweiten Wert ist und Beibehalten der siebten Geschwindigkeit in die zweite Richtung
oder
gleichzeitiges Erhöhen der sechsten Geschwindigkeit der Pufferbänder auf eine jeweils siebte Geschwindigkeit in die zweite Richtung, wobei der jeweils siebte Wert gleich dem jeweils zweiten Wert ist und Beibehalten der jeweils siebten Geschwindigkeit in die zweite Richtung.

Das gleichzeitige Erhöhen kann schrittweise über eine oder mehrere, jeweils größere Zwischengeschwindigkeiten oder kontinuierlich erfolgen.

Schrittweise kann umfassen, dass das Erhöhen von der sechsten Geschwindigkeit um jeweils einen gegebenen oder anpassbaren Prozentwert zu einer jeweiligen Zwischengeschwindigkeit vorgenommen werden kann, bis die siebte Geschwindigkeit erreicht ist. Beispielsweise kann ein Erhöhen um jeweils 15 bis 20% vorgesehen sein. Die erreichte Zwischengeschwindigkeit kann für eine gegebene oder anpassbare Zeitdauer beibehalten werden, bevor ein Erhöhen zu einer nächsten Zwischengeschwindigkeit oder der siebten Geschwindigkeit erfolgen kann. Die gegebenen oder anpassbaren Zeitdauern können für die verschiedenen Zwischengeschwindigkeiten verschieden groß oder gleich groß sein.

Wenn die Störung stromab des Puffers nicht behoben wurde und das Pufferband oder die Pufferbänder ganz oder im Wesentlichen ganz mit Behältern gefüllt ist/sind, beispielsweise wenn das Pufferband oder die Pufferbänder gleich oder mehr als 90% bis 95% mit Behältern gefüllt ist/sind, kann das Verfahren weiter umfassen:
- Abbremsen der Behälterzuführvorrichtung von der ersten Geschwindigkeit in der ersten Richtung auf eine neunte Geschwindigkeit mit einem neunten Wert von 0 m/min und
- gleichzeitig Abbremsen des Pufferbands oder der Pufferbänder von der jeweils sechsten Geschwindigkeit in der zweiten Richtung auf eine zehnte Geschwindigkeit mit einem zehnten Wert von 0 m/min.

Diese Schritte des Verfahrens können ebenfalls zum Umstellen des Normalbetriebs zum Pufferbetrieb des Puffers gehören. Zum Verfahren kann ebenfalls bei einem Abbremsen des Pufferbandes oder der Pufferbänder der Übergangsbereich abgebremst werden.

Das Verfahren kann weiter umfassen:
- wenn die Störung behoben wurde, Umstellen des Pufferbetriebs des Puffers zum Normalbetrieb, wobei dieses Umstellen umfasst:
- Erhöhen von der neunten Geschwindigkeit der Behälterzuführvorrichtung auf eine elfte Geschwindigkeit in der ersten Richtung, wobei der elfte Wert gleich dem ersten Wert ist und Beibehalten der elften Geschwindigkeit in die erste Richtung und
- gleichzeitiges Erhöhen von der zehnten Geschwindigkeit des Pufferbands auf eine zwölfte Geschwindigkeit in die zweite Richtung
oder
gleichzeitiges Erhöhen von der zehnten Geschwindigkeit der Pufferbänder auf eine jeweils zwölfte Geschwindigkeit in die zweite Richtung.

Der zwölfte Wert kann sich aus einer zulässigen Überleistung des Pufferbands ergeben, die ermöglicht, die auf dem Pufferband vorhandenen Behälter mit der zulässigen Überleistung an die Auslaufbänder zu übergeben.

Das gleichzeitige Erhöhen kann schrittweise über eine oder mehrere, jeweils größere Zwischengeschwindigkeiten oder kontinuierlich erfolgen.

Beispielsweise können die eine oder die mehreren, jeweils größeren Zwischengeschwindigkeiten beim gleichzeitigen Erhöhen (a) ausgehend von der sechsten Geschwindigkeit zum Erreichen der siebten Geschwindigkeit und (b) ausgehend von der zehnten Geschwindigkeit (0 m/min) zum Erreichen der zwölften Geschwindigkeit jeweils gleich sein. Dabei können in den beiden Fällen (a) und (b) die gegebenen oder anpassbaren Zeitdauern, für die erreichte Zwischengeschwindigkeiten beibehalten werden, bevor ein Erhöhen zu einer nächsten Zwischengeschwindigkeit oder der siebten bzw. zwölften Geschwindigkeit erfolgen kann, gleich oder verschieden lang sein. Die gegebenen oder anpassbaren Zeitdauern können für die verschiedenen Zwischengeschwindigkeiten verschieden groß oder gleich groß sein.

Die Steuerungsvorrichtung ist erfindungsgemäss weiter ausgebildet zum:
Erfassen von Störungsdaten einer Störung vor oder nach dem Puffer, beispielsweise von Störungsdaten einer weiteren Vorrichtung, die dem Puffer vor- oder nachgeordnet sein kann, Analysieren der Störungsdaten und Erhalten von Steuerungsdaten zum Steuern des Puffers und Steuern eines Füllgrads des Pufferbands oder der Pufferbänder während eines Normalbetriebs anhand der Steuerungsdaten.

Um möglicherweise auftretenden Störungen vor oder nach dem Puffer durch Puffern von Behältern auf dem Pufferband oder den Pufferbändern flexibel Rechnung tragen zu können, werden die Stördaten und/oder Steuerungsdaten der Störung vor oder nach dem Puffer erfasst. Durch das Analysieren der Störungsdaten werden Steuerungsdaten erhalten, die im Weiteren für das Steuern des Puffers und eines Füllgrads des Pufferbands oder der Pufferbänder während des Normalbetriebes verwendet werden. Während einer Störung kann der Füllgrad des Pufferbands oder der Pufferbänder vom Füllgrad während des Normalbetriebes abweichen.

Bei einer Störung vor dem Puffer kann das Pufferband oder die Pufferbänder während der Störung allmählich leerlaufen. Bei einer Störung nach dem Puffer kann das Pufferband während der Störung allmählich volllaufen.

Daher kann durch eine Steuerung des Füllgrads des Pufferbands oder der Pufferbänder während des Normalbetriebs eine Anpassung der zur Verfügung stehenden Pufferzeit bei Störungen erreicht werden. Beispielsweise wenn in Betracht gezogen wird, dass vermehrt Störungen vor dem Puffer auftreten, kann ein größer Füllgrad des Pufferbands oder der Pufferbänder während des Normalbetriebs für eine längere Pufferzeit sorgen als ein kleinerer Füllgrad. Beispielsweise wenn in Betracht gezogen wird, dass vermehrt Störungen hinter dem Puffer auftreten, kann ein kleinerer Füllgrad des Pufferbands oder der Pufferbänder während des Normalbetriebs für eine längere Pufferzeit sorgen als ein größerer Füllgrad.

Eine weitere Vorrichtung, die dem Puffer vorgeordnet sein kann, kann ein Füller sein. Der Füller kann auch eine Inspektion, eine Ausschleusung und/oder einen Dosenwender neben dem Füller umfassen. Zudem kann ein Verschließer vorgesehen sein. Im Falle von Glasbehältern kann eine Waschvorrichtung und im Falle von PET-Behältern kann ein Necksterilisierer vorgesehen sein.

Eine weitere Vorrichtung, die dem Puffer nachgeordnet sein kann, kann eine Inspektionsmaschine oder ein Trockenteil sein. Es können auch sowohl Inspektionsmaschine wie Trockenteil vorgesehen sein. Zudem kann eine Etikettiermaschine vorgesehen sein. Im Falle von Glasbehältern kann ein Packer vorgesehen sein.

Bei einer Steuerung auf einen Füllgrad von 30%, auch erster Füllgrad genannt, kann eine Störung vor dem Puffer durch das Pufferband oder die Pufferbänder für mindestens 20, 30, 40, 50 oder 60 Sekunden und eine Störung nach dem Puffer durch das Pufferband oder die Pufferbänder für mindestens 20, 30, 40, 50, 60, 70, 80, 90, 100, 110 oder 120 Sekunden pufferbar sein.

Weiter kann bei einer Steuerung auf einen zweiten Füllgrad, der kleiner als der erste Füllgrad ist, eine Störung vor dem Pufferdurch das Pufferband oder die Pufferbänder für weniger als 60 Sekunden und eine Störung nach dem Puffer durch das Pufferband oder die Pufferbänder für mehr als 120 Sekunden pufferbar sein.

Durch das Vorsehen eines kleineren Füllgrads kann beispielsweise der Tatsache Rechnung getragen werden, das festgestellt wurde, dass vermehrt Störungen nach dem Puffer auftreten.

So kann bei einer Steuerung auf einen dritten Füllgrad, der größer als der erste Füllgrad ist, eine Störung vor dem Puffer durch das Pufferband oder die Pufferbänder für mehr als 60 Sekunden und eine Störung nach dem Puffer durch das Pufferband oder die Pufferbänder für weniger als 120 Sekunden pufferbar sein.

Durch das Vorsehen eines größeren Füllgrads kann beispielsweise der Tatsache Rechnung getragen werden, das festgestellt wurde, dass vermehrt Störungen vor dem Puffer auftreten.

Die Bezeichnung "erster", "zweiter" und "dritter" Füllgrad dient lediglich der Unterscheidung der erwähnten unterschiedlichen Füllgrade.

Das Steuern kann den Füllgrad des Pufferbands oder der Pufferbänder auf 30% steuern.

Eine Pufferzeit für eine Störung vor dem Puffer kann mindestens 60 Sekunden betragen.

Es kann vorgesehen sein, dass eine Pufferzeit für eine Störung nach dem Puffer mindestens 120 Sekunden betragen kann.

Alternativ kann vorgesehen sein, dass eine erste Pufferzeit für eine erste Störung vor dem Puffer mindestens 60 Sekunden betragen kann und dass eine zweite Pufferzeit für eine zweite Störung einer zweiten Störung nach dem Puffer mindestens 60 Sekunden betragen kann.

Die Störungsdaten können umfassen: Information, dass eine Störung vor oder nach dem Puffer aufgetreten ist und/oder Information zu Stillstandzeiten, umfassend beispielsweise Häufigkeiten von Störungen, Störungsdauer und/oder Minderleistungen und/oder Information zu Zeitabhängigkeiten von Störungen während einer Produktion und/oder Information zu Umgebungsdruck und/oder Umgebungstemperatur und/oder Tageszeit während Störungen und/oder eine Anzahl von Störungen vor und/oder nach dem Puffer und/oder eine Anzahl von Störungen vor und/oder nach dem Puffer, die das Pufferband oder die Pufferbänder ganz leelaufen oder ganz volllaufen haben lassen und/oder akkumulierte Störungsdauern und/oder klassifizierte Störungsdaten.

Beispielsweise kann bei einer Klassifizierung berücksichtigt werden, warum eine Störung entstanden ist und ob diese innerhalb eines gegebenen Zeitrahmens noch einmal auftreten könnte. Wenn die Störung innerhalb des gegebenen Zeitrahmens noch einmal auftreten könnte, kann das für eine Steuerung der Puffervorrichtung innerhalb des gegebenen Zeitrahmens berücksichtigt werden. Wenn die Störung innerhalb des gegebenen Zeitrahmens nicht noch einmal auftreten könnte, braucht die Störung für eine Steuerung der Puffervorrichtung nicht berücksichtigt werden.

Beispielsweise kann es zu einer Störung am Trockenteil kommen, wenn nicht rechtzeitig Folie nachgelegt hat. Der Trockenteil steht dann still, weil keine Folie mehr vorhanden ist. Nach Auffüllen des Folienvorrats ist die Störung beendet und wird innerhalb eines gegebenen Zeitrahmens, von beispielsweise einer Stunde, nicht noch einmal auftreten, da der Folienvorrat aufgefüllt worden ist.

Die Steuerungsdaten können mittels automatischer Analyse, beispielsweise mittels eines Analyseprogramms und/oder durch maschinelles Lernen, erhalten werden.

Ein Sollwert des Füllgrads des Pufferbandes oder der Pufferbänder kann anhand der Störungsdaten erhöht oder erniedrigt werden und der erhöhte oder erniedrigte Sollwert kann für die Steuerung des Füllgrads genutzt werden.

Das Erfassen der Störungsdaten der Störung, das Analysieren der Störungsdaten und das Erhalten der Steuerungsdaten und das Steuern des Füllgrads des Pufferbands oder der Pufferbänder während des Normalbetriebs anhand der Steuerungsdaten kann in regelmäßigen Abstanden erfolgen kann, beispielsweise alle 10 Sekunden bis 20 Sekunden, alle 5 Minuten bis 45 Minuten, einmal pro Stunde, einmal pro Tag oder einmal pro Woche.

Es kann auch vorgesehen sein, dass lediglich die Störungsdaten der Störung in regelmäßigen Abstanden erfasst werden, beispielsweise alle 10 Sekunden bis 20 Sekunden, alle 5 Minuten bis 45 Minuten, einmal pro Stunde, einmal pro Tag oder einmal pro Woche. Ein Analysieren der Störungsdaten, das Erhalten der Steuerungsdaten und Steuern des Füllgrads des Pufferbands oder der Pufferbänder während des Normalbetriebs anhand der Steuerungsdaten wird beispielsweise nicht direkt an das in regelmäßigen Abständen erfolgende Erfassen der Störungsdaten der Störung durchgeführt.

Alternativ kann vorgesehen sein, dass das Erfassen der Störungsdaten der Störung und das Analysieren der Störungsdaten und das Erhalten der Steuerungsdaten in regelmäßigen Abstanden erfolgen kann, beispielsweise alle 10 Sekunden bis 20 Sekunden, alle 5 Minuten bis 45 Minuten, einmal pro Stunde, einmal pro Tag oder einmal pro Woche. Ein Steuern des Füllgrads des Pufferbands oder der Pufferbänder während des Normalbetriebs anhand der Steuerungsdaten wird beispielsweise nicht direkt an das in regelmäßigen Abständen erfolgende Erfassen der Störungsdaten der Störung, Analysieren der Störungsdaten und Erhalten der Steuerungsdaten durchgeführt.

Ein Steuern des Füllgrads des Pufferbands oder der Pufferbänder während des Normalbetriebs anhand der Steuerungsdaten kann nach dem Erfassen der Störungsdaten der Störung und das Analysieren der Störungsdaten und das Erhalten der Steuerungsdaten erfolgen.

Das Steuern des Füllgrads des Pufferbands oder der Pufferbänder während des Normalbetriebs anhand der Steuerungsdaten kann erfolgen: nach Überschreiten einer ersten gegebenen Maximalanzahl von Störungen vor und/oder nach dem Puffer und/oder nach Überschreiten einer zweiten gegebenen Maximalanzahl von Störungen vor und/oder nach dem Puffer, die das Pufferband oder die Pufferbänder ganz leelaufen oder ganz volllaufen haben lassen.

Das Steuern des Füllgrads des Pufferbands oder der Pufferbänder während des Normalbetriebs anhand der Steuerungsdaten kann nach Überschreiten einer gegebenen Maximalanzahl von akkumulierten Störungsdauern von Störungen vor und/oder nach dem Pufferband erfolgen.

Die Behälterzuführvorrichtung umfasst einen einspurigen Einlaufförderer, der in die dritte Richtung antreibbar und ausgebildet ist, Behälter in die dritte Richtung zu fördern. Weiter umfasst die Behälterzuführvorrichtung parallel anschließend an den einspurigen Einlaufförderer eine erste Gruppe von mehreren parallel angeordneten ersten Förderern, die in die dritte Richtung antreibbar und ausgebildet sind, Behälter in die dritte Richtung zu fördern, und parallel anschließend an die erste Gruppe von mehreren parallel angeordneten ersten Förderern eine zweite Gruppe von mehreren parallel angeordneten zweiten Förderern, die in die erste Richtung antreibbar und ausgebildet sind, Behälter in die erste Richtung zu fördern. Die Behälter sind von der zweiten Gruppe von mehreren parallel angeordneten zweiten Förderern quer zur ersten Richtung in die zweite Richtung zum Puffer abgebbar.

Die Behälter können Glas-Flaschen, PET-Flaschen und/oder Dosen umfassen. Ebenfalls umfasst sind Schraubgläser für Lebensmittel sowie Konserven- bzw. Blechdosen.

Der einspurige Einlaufförderer kann als ein Einlauf zu der ersten Gruppe angesehen werden. Die erste Gruppe kann eine Anzahl von n > 1 ersten Förderern umfassen, beispielsweise n = 3. Der erste (n = 1) der ersten Förderer kann benachbart zu dem einspurigen Einlaufförderer angeordnet sein, der zweite (n = 2) der ersten Förderer kann benachbart zu dem ersten (n = 1) der ersten Förderer angeordnet sein und der dritte (n = 3) der ersten Förderer kann benachbart zu dem zweiten (n = 2) der ersten Förderer angeordnet sein.

Die zweite Gruppe kann eine Anzahl von m > 1 zweiten Förderern umfassen, beispielsweise m = 3 (die Anzahl von Förderern in der ersten und zweiten Gruppe kann aber auch verschieden sein). Der erste (m = 1) der zweiten Förderer kann benachbart zu dem dritten (n = 3) der ersten Förderer angeordnet sein, der zweite (m = 2) der zweiten Förderer kann benachbart zu dem ersten (m = 1) der zweiten Förderer angeordnet sein und der dritte (m = 3) der zweiten Förderer kann benachbart zu dem zweiten (m = 2) der zweiten Förderer und dem Puffer angeordnet sein.

Parallel anschließend kann bedeuten, dass zwischen dem einspurigen Einlaufförderer und/oder den Förderern und/oder einem Förderer und dem Puffer ein Abstand vorgesehen sein kann, der kleiner als ein Durchmesser eines Behälters sein kann, oder ein Überschubblech mit einer Breite, die kleiner als ein Durchmesser eines Behälters sein kann.

Die erste Gruppe kann zusammenfassend die mehreren ersten Förderer beschreiben, die in die erste Richtung antreibbar sind. Dabei können die mehreren ersten Förderer individuell antreibbar ausgebildet sein. Eine Steuerung von Antriebsgeschwindigkeiten kann mittels einer Steuerungsvorrichtung erfolgen, die von der Behälterzuführvorrichtung umfasst sein kann. Die Antriebsgeschwindigkeiten können für die mehreren ersten Förderer gleich oder verschieden sein. Die ersten Förderer können jeweils eine Transportoberfläche umfassen, wobei die Transportoberfläche koplanar ausgerichtet sein können. Das Gleiche gilt für die zweite Gruppe, die zusammenfassend die mehreren zweiten Förderer beschreiben kann, die in die erste Richtung antreibbar sind.

Die Behälterabführvorrichtung kann anschließend an den Puffer eine erste Gruppe von mehreren parallel angeordneten ersten Förderern umfassen, die in eine erste Richtung quer zur zweiten Richtung des Puffers antreibbar und ausgebildet sind, Behälter zu vereinzeln und in die erste Richtung zu fördern. Weiter umfasst die Behälterabführvorrichtung parallel anschließend an die erste Gruppe von mehreren parallel angeordneten ersten Förderern eine zweite Gruppe von mehreren parallel angeordneten zweiten Förderern, die in die dritte Richtung antreibbar und ausgebildet sind, die vereinzelten Behälter in die dritte Richtung zu fördern und einen oder mehrere dritte Förderer, deren Anzahl kleiner als eine Anzahl der zweiten Förderer ist, wobei der dritte oder die dritten Förderer ausgebildet ist/sind, die vereinzelten Behälter abzutransportieren.

Durch das Vorsehen von parallel angeordneten Förderern, die quer zum Puffer angeordnet sind und die zudem zur Vereinzelung der Behälter dienen, ist eine kompakte Bauweise und somit eine Platzersparnis erreichbar.

Die Bezeichnung "erste", "zweite", "dritte" bzw. "vierte" dient lediglich zur Unterscheidung, ist aber sonst nicht als weiter einschränkend zu verstehen.

Eine nicht erfindungsgemässe Puffervorrichtung umfasst eine Behälterreinigungsvorrichtung, einen der Behälterreinigungsvorrichtung nachfolgenden Puffer und eine dem Puffer nachfolgende Behälterabführvorrichtung, wobei die Behälterreinigungsvorrichtung ausgebildet Behälter in eine erste Richtung zu transportieren. Der Puffer umfasst ein antreibbares Pufferband oder mehrere parallel angeordnete, antreibbare Pufferbänder, das ausgebildet ist/die jeweils ausgebildet sind, Behälter in eine zweite Richtung zu transportieren, wobei die erste Richtung und die zweite Richtung gleich verlaufen. Die Behälterabführvorrichtung ist ausgebildet zum Abführen und Vereinzeln von Behältern von dem Puffer in eine dritte Richtung, die quer zur ersten und zweiten Richtung ist. Eigenschaften der Behälterabführvorrichtung können den Beispielen und Ausführungsformen der Behälterabführvorrichtung entsprechen, wie sie weiter oben und weiter unten beschrieben werden. Die dort im Zusammenhang mit der Behälterabführvorrichtung erwähnte erste Richtung ist dann eine vierte Richtung (um sie von der ersten Richtung der Behälterreinigungsvorrichtung zu unterscheiden), wobei die vierte Richtung entgegengesetzt zu der dritten Richtung sein kann. Eigenschaften des Puffers können den Beispielen und Ausführungsformen des Puffers entsprechen, wie sie weiter oben und weiter unten beschrieben werden.

Das antreibbare Pufferband kann weiter ausgebildet sein oder die mehreren parallel angeordneten, antreibbaren Pufferbänder können weiter jeweils ausgebildet sein, Behälter in eine vierte Richtung zu transportieren, wobei die zweite und die vierte Richtung entgegengesetzt zueinander sein können, wobei die dritte Richtung quer zur vierten Richtung sein kann. Eigenschaften der Behälterabführvorrichtung können den Beispielen und Ausführungsformen der Behälterabführvorrichtung entsprechen, wie sie weiter oben und weiter unten beschrieben werden. Die dort im Zusammenhang mit der Behälterabführvorrichtung erwähnte erste Richtung ist dann eine fünfte Richtung (um sie von der ersten Richtung der Behälterreinigungsvorrichtung zu unterscheiden), wobei die fünfte Richtung entgegengesetzt zu der vierten Richtung sein kann. Eigenschaften des Puffers können den Beispielen und Ausführungsformen des Puffers entsprechen, wie sie weiter oben und weiter unten beschrieben werden.

Die Behälterreinigungsvorrichtung kann für Mehrwegglasbehälter verwendet werden.

Die Behälter können aus Kisten, in denen sie beispielsweise transportiert werden können, entpackt und dann auf ein Massentransportband gestellt werden, das die Behälter einem Einlauf einer Behälterreinigungsvorrichtung zuführen kann. Im Einlauf können die Behälter auf einer festgelegten Breite (beispielsweise 3 bis 5 Meter) in Gassen geführt und in die Behälterreinigungsvorrichtung eingebracht werden, beispielsweise mittels Flaschenträgern.

### Kurze Figurenbeschreibung

Die beigefügten Figuren stellen beispielhaft zum besseren Verständnis und zur Veranschaulichung Aspekte und Ausführungsformen der Erfindung dar. Es zeigt:
Figur 1A eine schematische Draufsicht auf eine erste Ausführungsform einer Puffervorrichtung,
Figur 1B eine schematische Draufsicht auf eine zweite Ausführungsform einer Puffervorrichtung,
Figur 2A eine schematische Draufsicht auf eine dritte Ausführungsform einer Puffervorrichtung,
Figur 2B eine schematische Draufsicht auf eine vierte Ausführungsform einer Puffervorrichtung,
Figur 2C eine schematische Draufsicht auf eine fünfte Ausführungsform einer Puffervorrichtung,
Figur 3A eine schematische Draufsicht auf eine erste Ausführungsform der Behälterabführvorrichtung,
Figur 3B eine schematische Seitenansicht der ersten Ausführungsform der Behälterabführvorrichtung,
Figur 3C eine schematische Schrägansicht der ersten Ausführungsform der Behälterabführvorrichtung von oben mit Blickrichtung in die erste Richtung,
Figur 3D eine schematische Draufsicht auf die erste Ausführungsform der Behälterabführvorrichtung mit darin befindlichen Behältern,
Figur 4A eine schematische Draufsicht auf eine zweite Ausführungsform der Behälterabführvorrichtung,
Figur 4B eine schematische Seitenansicht der zweiten Ausführungsform der Behälterabführvorrichtung,
Figur 4C eine schematische Schrägansicht der zweiten Ausführungsform der Behälterabführvorrichtung von oben mit Blickrichtung in die erste Richtung,
Figur 4D eine schematische Draufsicht auf die zweite Ausführungsform der Behälterabführvorrichtung mit darin befindlichen Behältern,
Figur 5A eine schematische Draufsicht auf eine dritte Ausführungsform der Behälterabführvorrichtung,
Figur 5B eine schematische Seitenansicht der dritten Ausführungsform der Behälterabführvorrichtung,
Figur 5C eine schematische Schrägansicht der dritten Ausführungsform der Behälterabführvorrichtung von oben mit Blickrichtung in die erste Richtung,
Figur 5D eine schematische Draufsicht auf die dritten Ausführungsform der Behälterabführvorrichtung mit darin befindlichen Behältern,
Figur 6A eine schematische Draufsicht auf eine vierte Ausführungsform der Behälterabführvorrichtung,
Figur 6B eine schematische Seitenansicht der vierten Ausführungsform der Behälterabführvorrichtung,
Figur 6C eine schematische Schrägansicht der vierten Ausführungsform der Behälterabführvorrichtung von oben mit Blickrichtung in die erste Richtung,
Figur 6D eine schematische Draufsicht auf die vierten Ausführungsform der Behälterabführvorrichtung mit darin befindlichen Behältern,
Figur 7A eine schematische Draufsicht auf eine fünfte Ausführungsform der Behälterabführvorrichtung,
Figur 7B eine schematische Seitenansicht der fünften Ausführungsform der Behälterabführvorrichtung,
Figur 7C eine schematische Schrägansicht der fünften Ausführungsform der Behälterabführvorrichtung von oben mit Blickrichtung in die erste Richtung,
Figur 7D eine schematische Draufsicht auf die fünften Ausführungsform der Behälterabführvorrichtung mit darin befindlichen Behältern,
Figur 8A eine schematische Draufsicht auf eine sechste Ausführungsform der Behälterabführvorrichtung,
Figur 8B eine schematische Seitenansicht der sechsten Ausführungsform der Behälterabführvorrichtung,
Figur 8C eine schematische Schrägansicht der sechsten Ausführungsform der Behälterabführvorrichtung von oben mit Blickrichtung in die erste Richtung,
Figur 8D eine schematische Schrägansicht der sechsten Ausführungsform der Behälterabführvorrichtung von oben mit Blickrichtung in die zweite Richtung und
Figur 8E eine schematische Draufsicht auf die sechsten Ausführungsform der Behälterabführvorrichtung mit darin befindlichen Behältern.
Figur 9 eine Draufsicht auf eine schematische Ansicht einer ersten Ausführungsform einer Behälterzuführvorrichtung,
Figur 10 eine Draufsicht auf eine schematische Ansicht einer zweiten Ausführungsform einer Behälterzuführvorrichtung,
Figur 11 eine Seitenansicht der Figur 9 mit Blick in die zweite Richtung, wobei die Transportoberflächen geneigt angeordnet sind,
Figur 12 eine Seitenansicht der Figur 10 mit Blick in die zweite Richtung, wobei die Transportoberflächen geneigt angeordnet sind,
Figur 13 einen ersten zeitabhängigen Verlauf der Geschwindigkeit und der Belegung des Pufferbands,
Figur 14 einen zweiten zeitabhängigen Verlauf der Geschwindigkeit und der Belegung des Pufferbands,
Figur 15 ein Diagramm für einen Normalbetrieb ohne Störung,
Figur 16 ein Diagramm für einen Betrieb bei Störung vor dem Puffer,
Figur 17 ein Diagramm für einen Betrieb bei Störung nach dem Puffer,
Figur 18 ein Diagramm für einen Betrieb bei zeitlich versetzt auftretenden Störungen vor und nach dem Puffer,
Figur 19 ein Diagramm für einen Betrieb bei sich zeitlich überschneidenden Störungen vor und nach dem Puffer,
Figur 20 ein Diagramm für ein erstes Verhältnis von Störungen über einen Zeitabschnitt,
Figur 21 ein Diagramm für ein zweites Verhältnis von Störungen über einen Zeitabschnitt,
Figur 22 ein Diagramm für ein drittes Verhältnis von Störungen über einen Zeitabschnitt,
Figur 23 ein Diagramm für eine exemplarische dynamische Pufferregelung mit Anpassung der Pufferzeiten,
Figur 24A eine schematische Draufsicht auf eine sechste Ausführungsform einer Puffervorrichtung,
Figur 24B eine schematische Draufsicht auf eine siebte Ausführungsform einer Puffervorrichtung,
Figur 25A eine schematische Draufsicht auf eine achte Ausführungsform einer Puffervorrichtung,
Figur 25B eine schematische Draufsicht auf eine neunte Ausführungsform einer Puffervorrichtung, und
Figur 25C eine schematische Draufsicht auf eine zehnte Ausführungsform einer Puffervorrichtung.

### Ausführliche Beschreibung

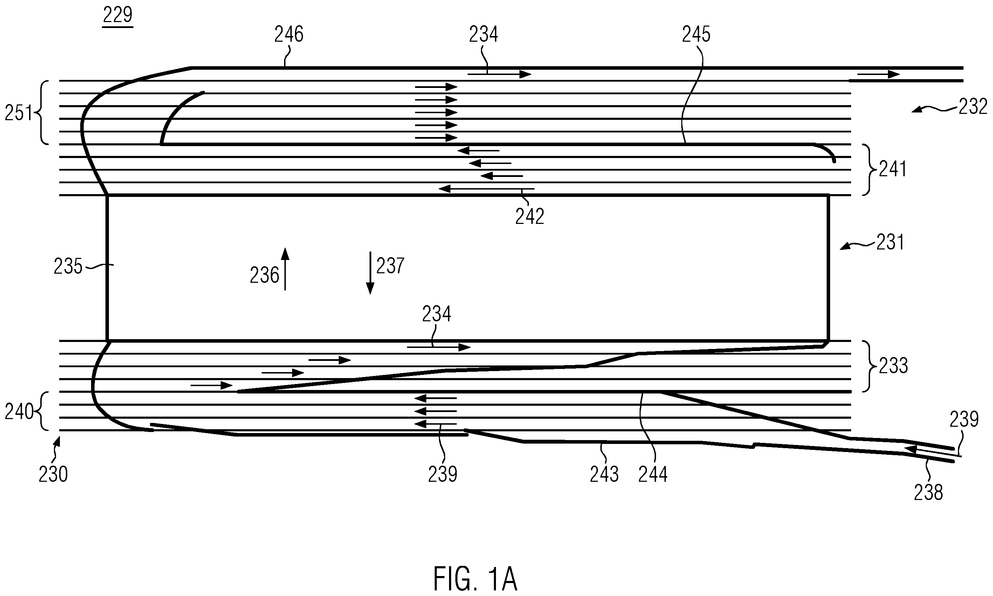

Die Figur 1A zeigt eine schematische Draufsicht auf eine erste Ausführungsform einer Puffervorrichtung 229. Die Puffervorrichtung 229 umfasst eine Behälterzuführvorrichtung 230, einen der Behälterzuführvorrichtung 230 nachfolgenden Puffer 231 und eine dem Puffer 231 nachfolgende Behälterabführvorrichtung 232. Die Behälterzuführvorrichtung 230 zum Zuführen von Behältern zu dem Puffer 231 ist ausgebildet, Behälter mittels erster Transportbänder in eine erste Richtung 234 zu transportieren. Der Puffer 231 umfasst ein antreibbares Pufferband 235, das ausgebildet ist, Behälter in eine zweite Richtung 236 zu transportieren oder Behälter in eine dritte Richtung 237 zu transportieren, wobei die zweite 236 und die dritte Richtung 237 entgegengesetzt zueinander sind und jeweils quer zur ersten Richtung 234 verlaufen. Alternativ kann vorgesehen sein, dass das antreibbare Pufferband 235 nicht ausgebildet ist, Behälter in die dritte Richtung zu transportieren, dass es also nicht in die dritte Richtung antreibbar ist. Die Behälterabführvorrichtung 232 zum Abführen und Vereinzeln von Behältern von dem Puffer 231 in eine vierte Richtung 242, die zur ersten Richtung 234 entgegengesetzt ist.

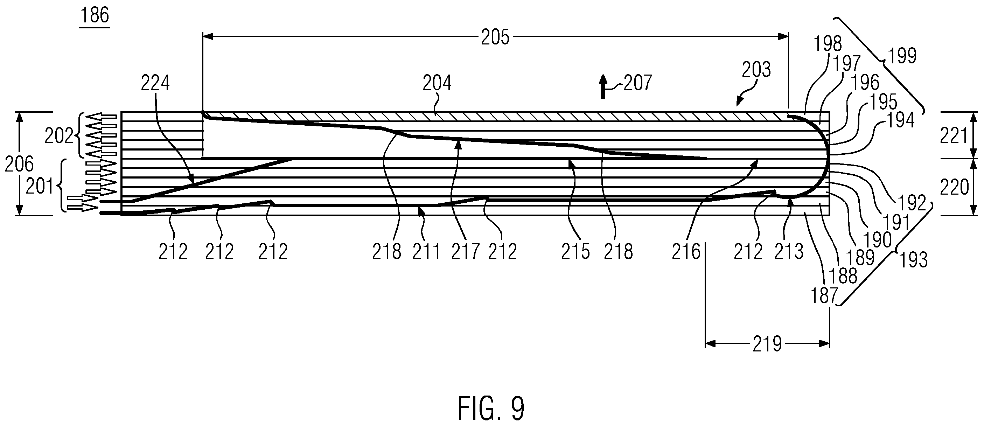

Die Behälterzuführung 230 wird in den Figuren 9 bis 12 näher erläutert.

Die in der Figur 1A dargestellte Behälterzuführvorrichtung 229 umfasst einen einspurigen Einlaufförderer 238, der in die vierte Richtung 239 antreibbar ist und beispielsweise auf seiner Transportoberfläche transportierte Behälter in die vierte Richtung 239 fördern kann.

Parallel anschließend an den einspurigen Einlaufförderer 238 ist eine erste Gruppe 240 von mehreren parallel angeordneten ersten Förderern vorgesehen, die jeweils in die vierte Richtung 239 antreibbar sind. Auf den jeweiligen Transportoberflächen der ersten Förderer können Behälter in die vierte Richtung 239 gefördert werden.

Parallel anschließend an die erste Gruppe 240 ist eine zweite Gruppe 233 von mehreren parallel angeordneten zweiten Förderern vorgesehen, die jeweils in die erste Richtung 234 antreibbar sind. Auf den jeweiligen Transportoberflächen der zweiten Förderer können Behälter in die erste Richtung 234 gefördert werden. Die erste und vierte Richtung 234, 239 sind zueinander entgegengesetzt.

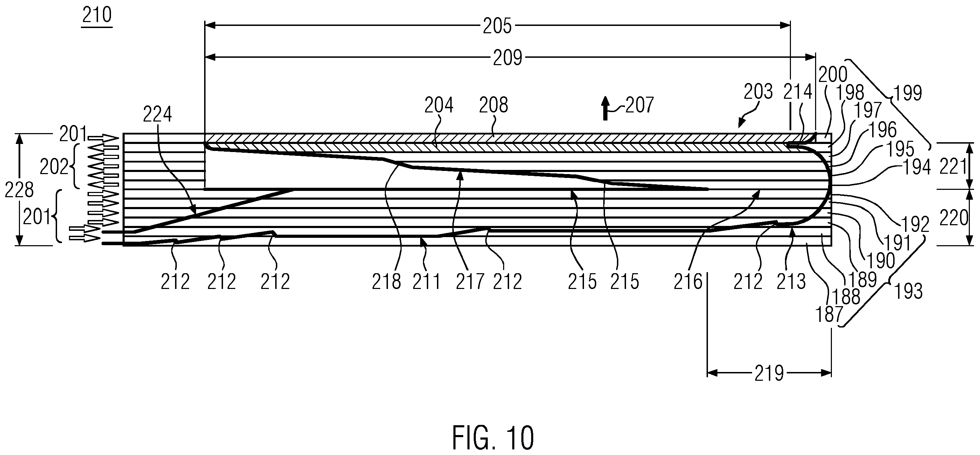

Oberhalb der Transportoberflächen des einspurigen Einlaufförderers 238 und der Transportoberflächen der ersten und zweiten Gruppe 240, 233 sind Geländer 243, 244 vorgesehen, die im Zusammenhang mit den Figuren 9 und 10 näher erläutert werden.

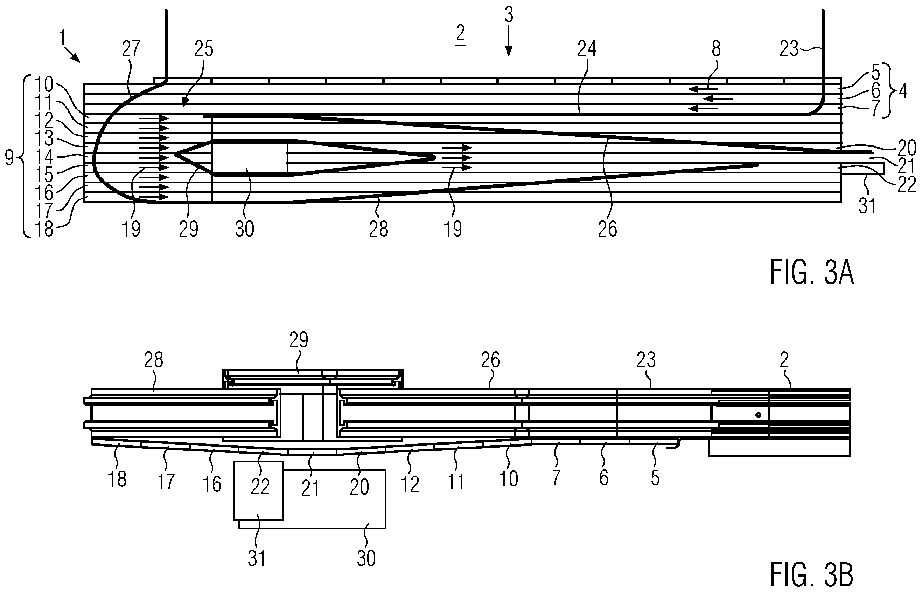

Die Behälterabführvorrichtung wird in den Figuren 3A bis 8E näher erläutert.

Die in der Figur 1A dargestellte Behälterabführvorrichtung 232 umfasst, anschließend an den Puffer 231 eine erste Gruppe 241 von parallel angeordneten ersten Förderern, die in die vierte Richtung 242 quer zur zweiten Richtung 236 des Puffers 231 antreibbar sind. Die ersten Förderer sind derart ausgebildet, dass sie Behälter vereinzeln und in die vierte Richtung 242 fördern können.

Weiter umfasst die Behälterabführvorrichtung 232 parallel anschließend an die erste Gruppe 241 eine zweite Gruppe 251 von parallel angeordneten zweiten Förderern, die in eine erste Richtung 234 antreibbar sind. Die zweiten Förderer sind derart ausgebildet, dass sie die vereinzelten Behälter in die erste Richtung 234 fördern können.

Zudem umfasst die Behälterabführvorrichtung 232 hier einen dritten Förderer, der derart ausgebildet ist, dass er die vereinzelten Behälter in die erste Richtung 234 abtransportieren kann.

Oberhalb der Transportoberflächen des dritten Förderers und der Transportoberflächen der ersten und zweiten Gruppe 241, 251 sind Geländer 245, 246 vorgesehen, die im Zusammenhang mit den Figuren 3A bis 8E näher erläutert werden.

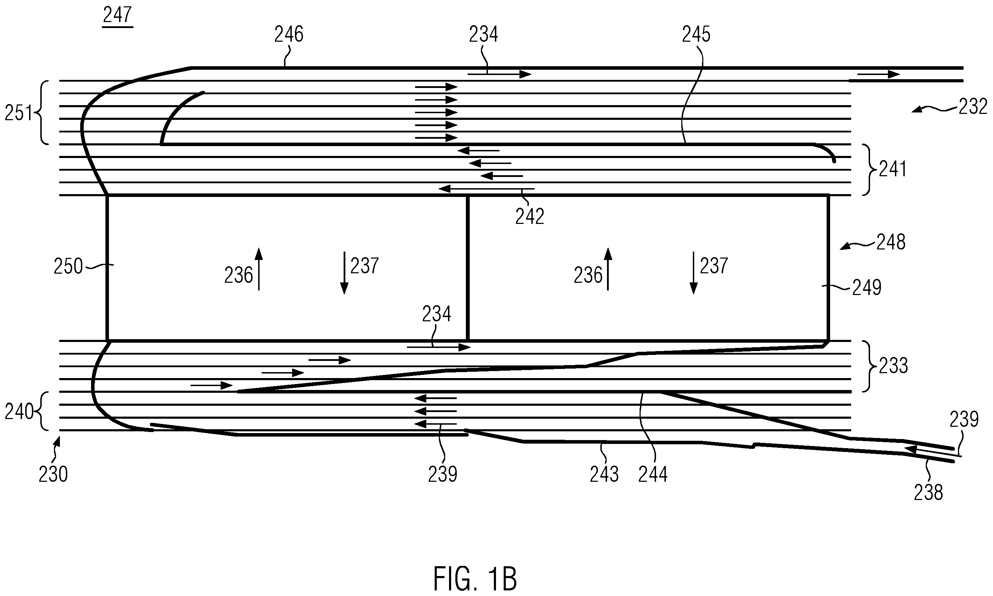

Die Figur 1B zeigt eine schematische Draufsicht auf eine zweite Ausführungsform einer Puffervorrichtung 247. Die Behälterzuführvorrichtung 230 und die Behälterabführvorrichtung 232 sind baugleich zu denen der Figur 1A. Der Puffer 248 umfasst hier aber zwei parallel angeordnete, antreibbare Pufferbänder 249, 250, die jeweils ausgebildet sind, Behälter in die zweite Richtung 236 zu transportieren oder Behälter in die dritte Richtung 237 zu transportieren. Alternativ kann vorgesehen sein, dass die beiden Pufferbänder 249, 250 nicht ausgebildet sind, Behälter in die dritte Richtung zu transportieren, dass sie also nicht in die dritte Richtung antreibbar sind.

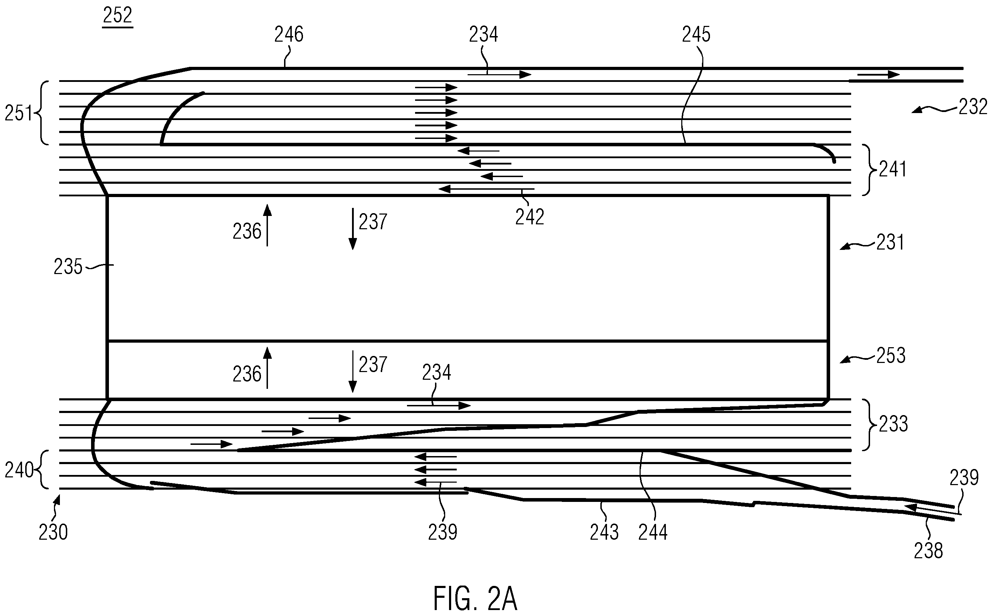

Die Figur 2A zeigt eine schematische Draufsicht auf eine dritte Ausführungsform einer Puffervorrichtung 252. Die Behälterzuführvorrichtung 230, der Puffer 231 und die Behälterabführvorrichtung sind baugleich zu denen der Figur 1A. Zwischen der Behälterzuführvorrichtung 230 und dem Puffer 231 ist ein Übergangsbereich 253 angeordnet, der als ein einziges antreibbares Band ausgebildet ist, das Behälter in die zweite Richtung 236 oder in die dritte Richtung 237 transportieren kann. Alternativ kann vorgesehen sein, dass das antreibbare Pufferband 235 nicht ausgebildet ist, Behälter in die dritte Richtung zu transportieren, dass es also nicht in die dritte Richtung antreibbar ist, sondern nur in die zweite Richtung; das antreibbare Pufferband 235 kann auch stillstehen. Der Übergangsbereich 253 kann dabei derart ausgebildet sein, dass er Behälter nur in die zweite Richtung 236, aber nicht in die dritte Richtung transportieren kann; der Übergangsbereich 253 kann auch stillstehen.

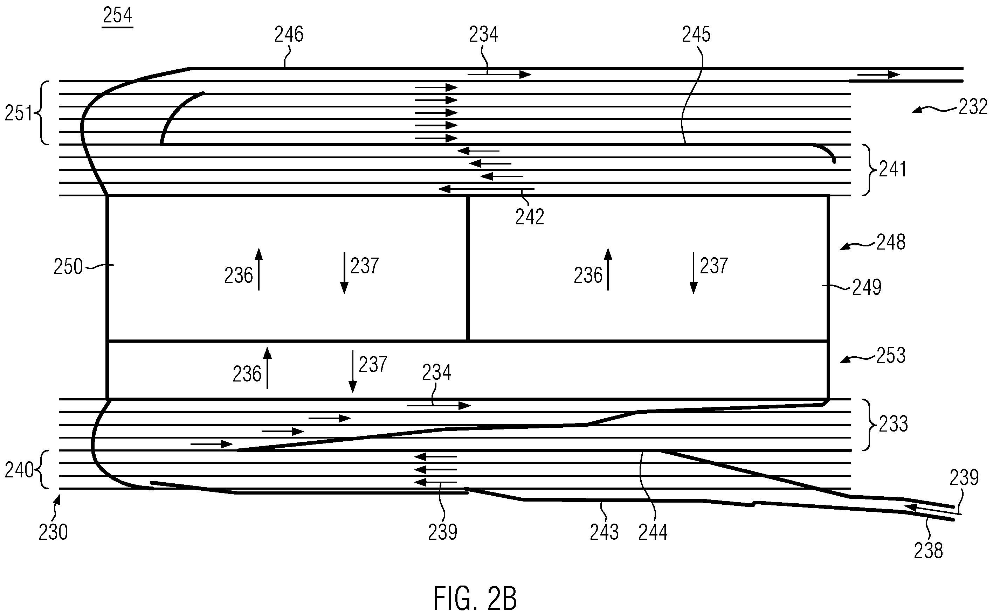

Die Figur 2B zeigt eine schematische Draufsicht auf eine vierte Ausführungsform einer Puffervorrichtung 254. Die Behälterzuführvorrichtung 230, der Puffer 248 und die Behälterabführvorrichtung 232 sind baugleich zu denen der Figur 1B. Zwischen der Behälterzuführvorrichtung 230 und dem Puffer 231 ist ein Übergangsbereich 253 angeordnet, der als ein einziges antreibbares Band ausgebildet ist, das Behälter in die zweite Richtung 236 oder in die dritte Richtung 237 transportieren kann. Alternativ kann vorgesehen sein, dass die beiden Pufferbänder 249, 250 nicht ausgebildet sind, Behälter in die dritte Richtung zu transportieren, dass sie also nicht in die dritte Richtung antreibbar sind, sondern nur in die zweite Richtung; die Pufferbänder 249, 250 können auch stillstehen. Der Übergangsbereich 253 kann dabei derart ausgebildet sein, dass er Behälter nur in die zweite Richtung 236, aber nicht in die dritte Richtung transportieren kann; der Übergangsbereich 253 kann auch stillstehen.

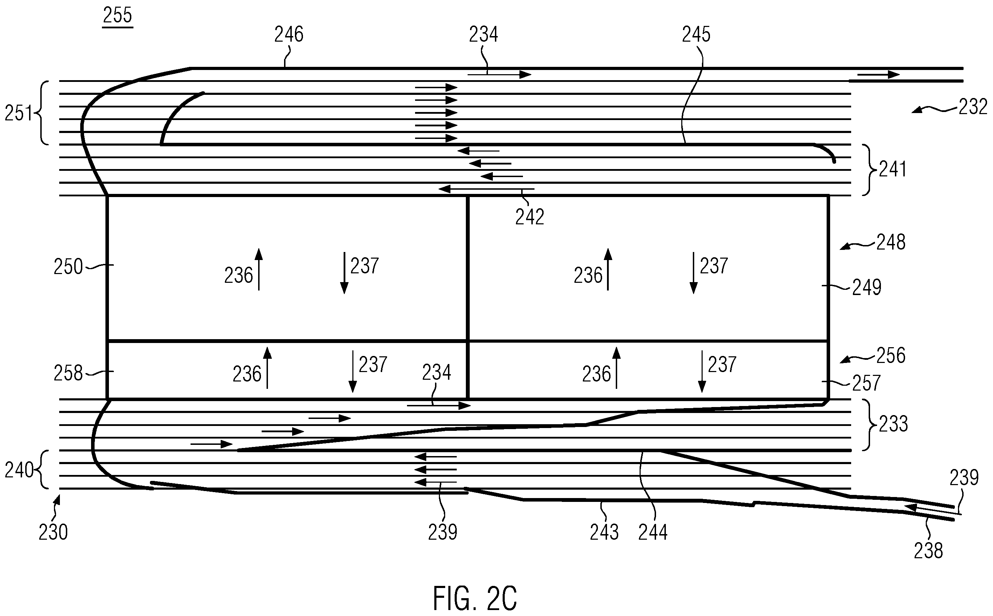

Die Figur 2C zeigt eine schematische Draufsicht auf eine fünfte Ausführungsform einer Puffervorrichtung 255. Die Behälterzuführvorrichtung 230, der Puffer 248 und die Behälterabführvorrichtung 232 sind baugleich zu denen der Figur 1B. Zwischen der Behälterzuführvorrichtung 230 und dem Puffer 248 ist ein Übergangsbereich 256 angeordnet, der eine gleiche Anzahl von antreibbaren Bänder 257, 258, hier also zwei, umfasst wie der Puffer 248, wobei die antreibbaren Bänder 257, 258 ausgebildet sind, Behälter in die zweite 236 oder in die dritte Richtung 237 zu transportieren. Alternativ kann vorgesehen sein, dass die beiden Pufferbänder 249, 250 nicht ausgebildet sind, Behälter in die dritte Richtung zu transportieren, dass sie also nicht in die dritte Richtung antreibbar sind, sondern nur in die zweite Richtung; die Pufferbänder 249, 250 können auch stillstehen. Die Bänder 257, 258 des Übergangsbereichs 256 können dabei derart ausgebildet sein, dass sie Behälter nur in die zweite Richtung 236, aber nicht in die dritte Richtung transportieren können; die Bänder 257, 258 des Übergangsbereichs 256 können auch stillstehen.

Die Figur 3A zeigt eine schematische Draufsicht auf eine erste Ausführungsform der Behälterabführvorrichtung 1 zum Abführen von Behältern von einem Puffer 2 und zum Vereinzeln der Behälter. Der Puffer 2 kann Behälter in eine Transportrichtung 3 transportieren. Die Behälterabführvorrichtung 1 umfasst, anschließend an den Puffer 2 eine erste Gruppe 4 von hier drei parallel angeordneten ersten Förderern 5, 6, 7, die in eine erste Richtung 8 quer zur Transportrichtung 3 des Puffers 2 antreibbar sind. Die ersten Förderer 5-7 sind derart ausgebildet, dass sie Behälter vereinzeln und in die erste Richtung 8 fördern können.

Weiter umfasst die Behälterabführvorrichtung 1 parallel anschließend an die erste Gruppe 4 der drei parallel angeordneten ersten Förderer 5, 6, 7 eine zweite Gruppe 9 von hier neun parallel angeordneten zweiten Förderern 10, 11, 12, 13, 14, 15, 16, 17, 18, die in eine zweite Richtung 19 antreibbar sind. Die zweite Richtung 19 ist entgegengesetzt zu der ersten Richtung 8. Die zweiten Förderer 10-18 sind derart ausgebildet, dass sie die vereinzelten Behälter in die zweite Richtung 19 fördern können.

Zudem umfasst die Behälterabführvorrichtung 1 hier drei dritte Förderer 20, 21, 22, die derart ausgebildet sind, dass sie die vereinzelten Behälter in die zweite Richtung 19 abtransportieren können.

Am Anfang der ersten Förderer 5-7 ist oberhalb der Transportoberflächen der ersten Förderer 5-7 ein erstes Geländer 23 angeordnet, dessen gerader Bereich sich quer zu den ersten Förderern 5-7 erstreckt, wobei an den geraden Bereich eine 90° Kurve anschließt.

Oberhalb der Transportoberflächen ist zwischen der ersten Gruppe 4 und der zweiten Gruppe 9 ein zweites Geländer 24 vorgesehen, das gerade und derart ausgebildet ist, dass ein Übergangsbereich 25 für Behälter zwischen der ersten Gruppe 4 und der zweiten Gruppe 9 vorhanden ist. Das zweite Geländer 24 schließt an das erste Geländer 23 an.

Oberhalb der Transportoberflächen von drei der zweiten Förderer 10, 11, 12 ist ein drittes Geländer 26 vorgesehen, das den Übergangsbereich 25 frei lässt und sich bis zum mittleren der dritten Förderer 21 erstreckt. Das dritte Geländer 26 ist gerade ausgebildet und schließt an das zweite Geländer 24 an.

Am Ende der drei ersten Förderer 5-7 und am Anfang der neun zweiten Förderer 10-18 ist oberhalb der Transportoberflächen ein konkav ausgebildetes Geländer 27 vorgesehen. Hier umfasst das konkav ausgebildete Geländer 27 eine Kurve, die einen Winkel von 180° beschreibt.

Anschließend an das konkave Geländer 27 ist ein viertes Geländer 28 vorgesehen, das zunächst oberhalb und seitlich einem der zweiten Förderer 18 und dann oberhalb von drei der zweiten Förderer 16, 17, 18 vorgesehen ist und sich bis zum mittleren der dritten Förderer 21 erstreckt.

Weiter umfasst die Behälterabführvorrichtung 1 ein flexibles Element 29, das beabstandet oberhalb, also oberhalb der Transportoberflächen, von fünf der zweiten Förderer 12-16 vorgesehen ist. Zudem erstreckt sich das flexible Element 29 beabstandet oberhalb, also oberhalb der Transportoberflächen, der drei dritten Förderer 20-22. Dadurch, dass das flexible Element 29 beabstandet oberhalb der Transportoberflächen von fünf der zweiten Förderer 12-16 vorgesehen ist, können beispielsweise umgefallene Behälter und Behälterbruch in eine erste Auffangvorrichtung 30 ausgeschleust werden, die unter der Behälterabführvorrichtung 1 angeordnet ist. Drei zweite Förderer 13-15 der fünf zweiten Förderer 12-16 sind kürzer ausgebildet als die restlichen zweiten Förderer 10-12, 16-18. Dadurch ist ein Zugang zu der ersten Auffangvorrichtung 30 gewährleistet.

Unterhalb, neben dem mittleren der dritten Förderer 21 kann im Anschluss an einen der dritten Förderer 22 eine zweite Auffangvorrichtung 31 vorgesehen sein. Beispielsweise können umgefallene Behälter und Behälterbruch in die zweite Auffangvorrichtung 31 ausgeschleust werden.

Die Figur 3B zeigt eine schematische Seitenansicht der ersten Ausführungsform der Behälterabführvorrichtung 1 mit Blickrichtung in die erste Richtung 8. Neben dem ersten Geländer 23, dem dritten Geländer 26, dem vierten Geländer 28 und dem flexiblen Element 29 sind die ersten Förderer 5-7, die zweiten Förderer 10-12, 16-18, die dritten Förderer 20-22, die erste Auffangvorrichtung 30 und die zweite Auffangvorrichtung 31 zu sehen.

Die Transportoberflächen der ersten Förderer 5-7 sind in aneinandergrenzenden Bereichen stufenfrei angeordnet und die einzelnen Transportoberflächen schließen mit einer zur Wirkrichtung der Schwerkraft senkrechten Ebene einen Winkel von 0° ein, d.h. sie verlaufen horizontal.

Die Transportoberfläche des ersten Förderers 7 und die Transportoberfläche des zweiten Förderers 10 sind in aneinandergrenzenden Bereichen stufenfrei angeordnet.

Die Transportoberflächen von vier der zweiten Förderer 10-13 (nur die zweiten Förderer 10-12 sind sichtbar) sind in aneinandergrenzenden Bereichen stufenfrei angeordnet und die einzelnen Transportoberflächen schließen mit einer zur Wirkrichtung der Schwerkraft senkrechten Ebene einen Winkel von -5° ein. Die Transportoberfläche des zweiten Förderers 14 (nicht sichtbar) schließt mit einer zur Wirkrichtung der Schwerkraft senkrechten Ebene einen Winkel von 0° ein. Die Transportoberflächen von vier der zweiten Förderer 15-18 (nur die zweiten Förderer 16-18 sichtbar) sind in aneinandergrenzenden Bereichen stufenfrei angeordnet und die einzelnen Transportoberflächen schließen mit einer zur Wirkrichtung der Schwerkraft senkrechten Ebene einen Winkel von +5° ein. Alle Transportoberflächen der zweiten Förderer 10-18 sind in aneinandergrenzenden Bereichen stufenfrei angeordnet.

Die Transportoberfläche des dritten Förderers 20 schließt mit einer zur Wirkrichtung der Schwerkraft senkrechten Ebene einen Winkel von -5° ein. Die Transportoberfläche des dritten Förderers 21 schließt mit einer zur Wirkrichtung der Schwerkraft senkrechten Ebene einen Winkel von 0° ein. Die Transportoberfläche des dritten Förderers 22 schließt mit einer zur Wirkrichtung der Schwerkraft senkrechten Ebene einen Winkel von +5° ein.

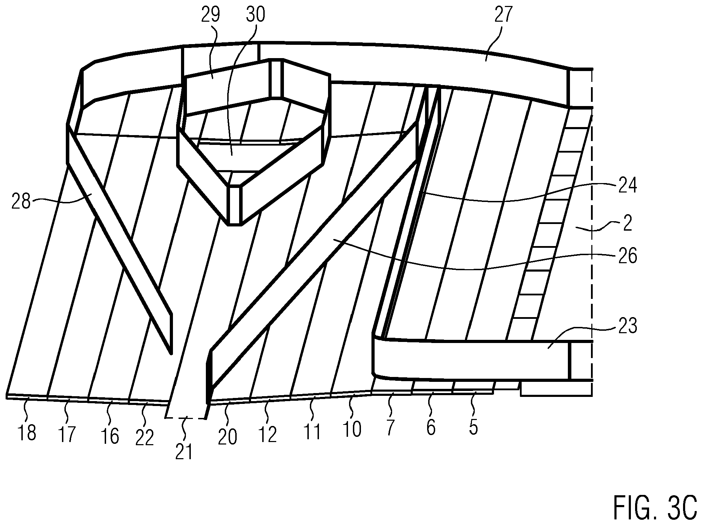

Die Figur 3C zeigt eine schematische Schrägansicht der ersten Ausführungsform der Behälterabführvorrichtung 1 von oben mit Blickrichtung in die erste Richtung 8. Neben dem ersten Geländer 23, dem zweiten Geländer 24, dem dritten Geländer 26, dem konkaven Geländer 27, dem vierten Geländer 28 und dem flexiblen Element 29 sind die ersten Förderer 5-7, die zweiten Förderer 10-18, die dritten Förderer 20-22, die erste Auffangvorrichtung 30 und die zweite Auffangvorrichtung 31 zu sehen.

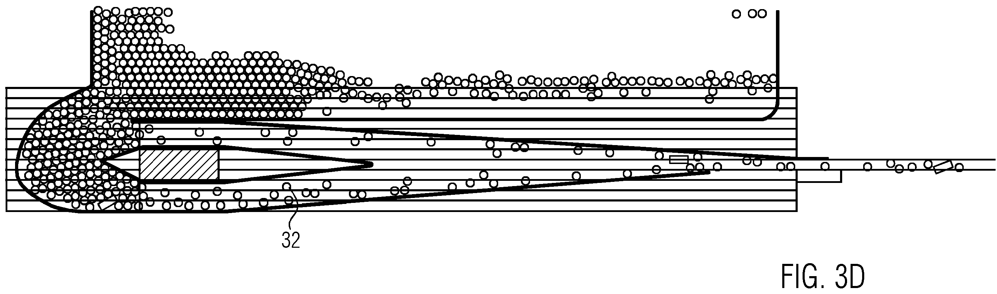

Die Figur 3D zeigt eine schematische Draufsicht auf die erste Ausführungsform der Behälterabführvorrichtung 1 mit darin befindlichen Behältern 32. Durch den Transport von Behältern mittels der ersten Förderer 5-7 in die erste Richtung 8 drängeln sich die Behälter am Ende der ersten Förderer 5-7 und gelangen dadurch und durch das konkave Geländer 27 in den Übergangsbereich 25 und zu den zweiten Förderern 10-18, von denen sie in die zweite Richtung 19 bewegt werden. Durch das dritte Geländer 26 und durch das vierte Geländer 28 sowie die geneigte Ausbildung der zweiten Förderer 10-13, 15-18 und der dritten Förderer 20, 22 werden die Behälter 55 auf den dritten Förderer 21 zu transportiert, der die vereinzelten Behälter 55 abtransportieren kann.

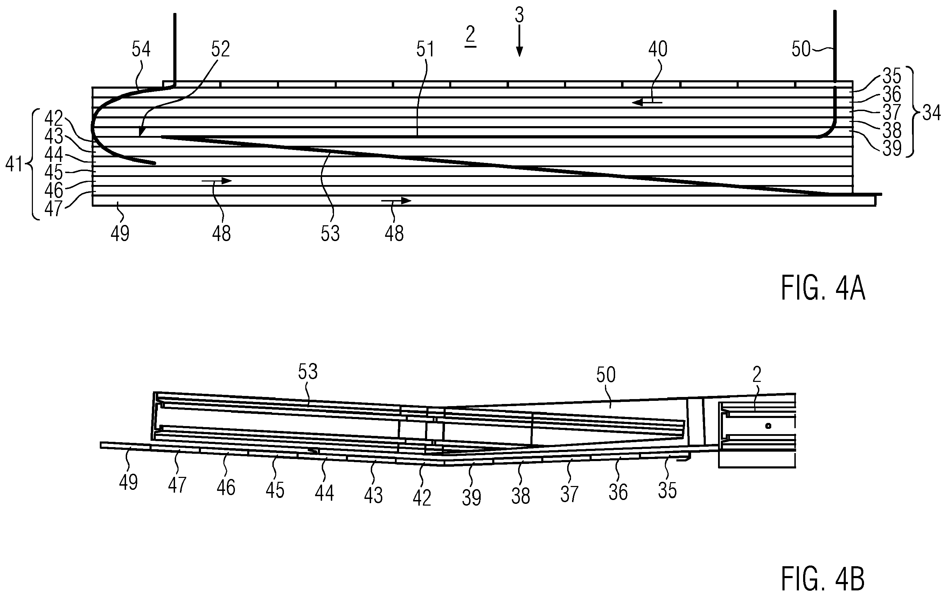

Die Figur 4A zeigt eine schematische Draufsicht auf eine zweite Ausführungsform der Behälterabführvorrichtung 33 zum Abführen von Behältern von dem Puffer 2 und zum Vereinzeln der Behälter. Die Behälterabführvorrichtung 33 umfasst, anschließend an den Puffer 2 eine erste Gruppe 34 von hier fünf parallel angeordneten ersten Förderern 35, 36, 37, 38, 39 die in eine erste Richtung 40 quer zur Transportrichtung 3 des Puffers 2 antreibbar sind. Die ersten Förderer 35- 39 sind derart ausgebildet, dass sie Behälter vereinzeln und in die erste Richtung 40 fördern können.

Weiter umfasst die Behälterabführvorrichtung 33 parallel anschließend an die erste Gruppe 34 der fünf parallel angeordneten ersten Förderer 35-39 eine zweite Gruppe 41 von hier sechs parallel angeordneten zweiten Förderern 42, 43, 44, 45, 46, 47 die in eine zweite Richtung 48 antreibbar sind. Die zweite Richtung 48 ist entgegengesetzt zu der ersten Richtung 40. Die zweiten Förderer 42-46 sind derart ausgebildet, dass sie die vereinzelten Behälter in die zweite Richtung 47 fördern können.

Zudem umfasst die Behälterabführvorrichtung 33 hier einen dritten Förderer 49, der derart ausgebildet ist, dass er die vereinzelten Behälter in die zweite Richtung 48 abtransportieren kann.

Am Anfang der ersten Förderer 35-39 ist oberhalb der Transportoberflächen der ersten Förderer 35-39 ein erstes Geländer 50 angeordnet, dessen gerader Bereich sich quer zu den ersten Förderern 35-39 erstreckt, wobei an den geraden Bereich eine 90° Kurve anschließt.

Oberhalb der Transportoberflächen ist zwischen der ersten Gruppe 34 und der zweiten Gruppe 41 ein zweites Geländer 51 vorgesehen, das gerade und derart ausgebildet ist, dass ein Übergangsbereich 52 für Behälter zwischen der ersten Gruppe 34 und der zweiten Gruppe 41 vorhanden ist. Das zweite Geländer 51 schließt an das erste Geländer 50 an.

Oberhalb der Transportoberflächen der zweiten Förderer 42-47 ist ein drittes Geländer 53 vorgesehen, das den Übergangsbereich 52 frei lässt und sich bis zum dritten Förderer 49 erstreckt. Das dritte Geländer 53 ist gerade ausgebildet und schließt an das zweite Geländer 51 an.

Am Ende der fünf ersten Förderer 35-39 und am Anfang von drei der sechs zweiten Förderer 42-44 ist oberhalb der Transportoberflächen ein konkav ausgebildetes Geländer 54 vorgesehen. Hier umfasst das konkav ausgebildete Geländer 54 eine Kurve, die einen Winkel von 180° beschreibt.

Die Figur 4B zeigt eine schematische Seitenansicht der zweiten Ausführungsform der Behälterabführvorrichtung 33 mit Blickrichtung in die erste Richtung 40. Neben dem ersten Geländer 50 und dem dritten Geländer 53 sind die ersten Förderer 35-39, die zweiten Förderer 42-47 und der dritte Förderer 48 zu sehen.

Die Transportoberflächen der ersten Förderer 35-39 sind in aneinandergrenzenden Bereichen stufenfrei angeordnet und die einzelnen Transportoberflächen schließen mit einer zur Wirkrichtung der Schwerkraft senkrechten Ebene einen Winkel von -10° ein.

Die Transportoberfläche des ersten Förderers 39 und die Transportoberfläche des zweiten Förderers 42 sind in aneinandergrenzenden Bereichen stufenfrei angeordnet.

Die Transportoberflächen der zweiten Förderer 42-47 sind in aneinandergrenzenden Bereichen stufenfrei angeordnet und die einzelnen Transportoberflächen schließen mit einer zur Wirkrichtung der Schwerkraft senkrechten Ebene einen Winkel von +5° ein.

Die Transportoberfläche des dritten Förderers 49 schließt mit einer zur Wirkrichtung der Schwerkraft senkrechten Ebene einen Winkel von +5° ein.

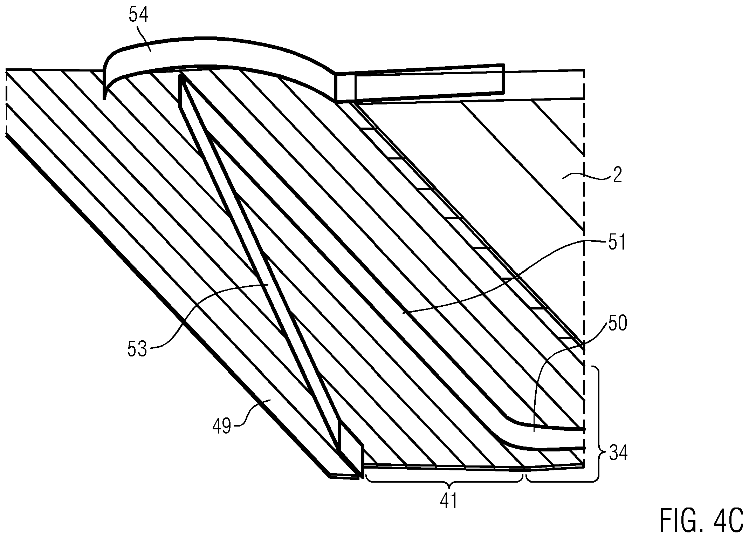

Die Figur 4C zeigt eine schematische Schrägansicht der zweiten Ausführungsform der Behälterabführvorrichtung 33 von oben mit Blickrichtung in die erste Richtung 40. Neben dem ersten Geländer 50, dem zweiten Geländer 51, dem dritten Geländer 53 und dem konkaven Geländer 54 sind die ersten Förderer 35-39, die zweiten Förderer 42-47 und der dritte Förderer 49 zu sehen.

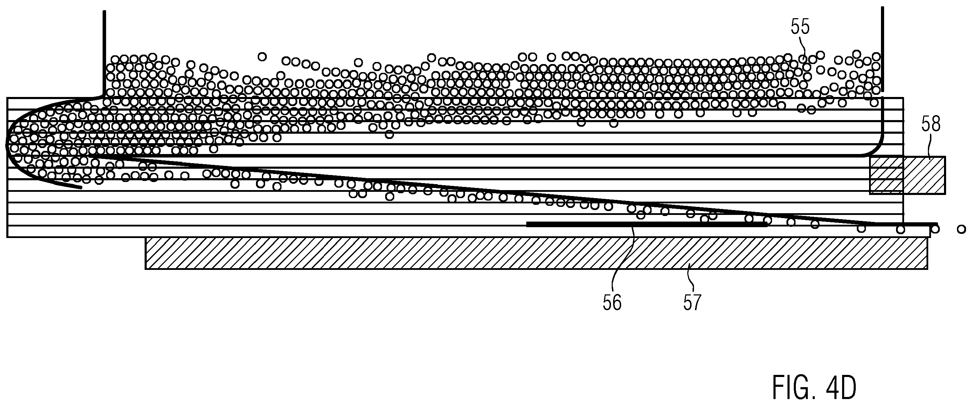

Die Figur 4D zeigt eine schematische Draufsicht auf die zweite Ausführungsform der Behälterabführvorrichtung mit darin befindlichen Behältern 55. Durch den Transport von Behältern 55 mittels der ersten Förderer 35-39 in die erste Richtung 40 drängeln sich die Behälter am Ende der ersten Förderer 35- 39 und gelangen dadurch und durch das konkave Geländer 54 in den Übergangsbereich 52 und zu den zweiten Förderern 42-47, von denen sie in die zweite Richtung 48 bewegt werden. Durch das dritte Geländer 53 und den Transport in die zweite Richtung 47 durch die zweiten Förderer 42-47 werden die Behälter 55 auf den dritten Förderer 49 zu transportiert, der die vereinzelten Behälter 55 abtransportieren kann.

Optional kann die Behälterabführvorrichtung 33 ein flexibles Element 56 umfassen, das in einem Bereich zwischen dem zweiten Förderer 47 und dem dritten Förderer 49 angeordnet ist. Parallel unterhalb und neben dem dritten Förderer 49 kann eine erste Auffangvorrichtung 57 vorgesehen sein. Teilweise unterhalb dem Ende der zweiten Förderer 42-44 angeordnet kann eine zweite Auffangvorrichtung 58 vorgesehen sein.

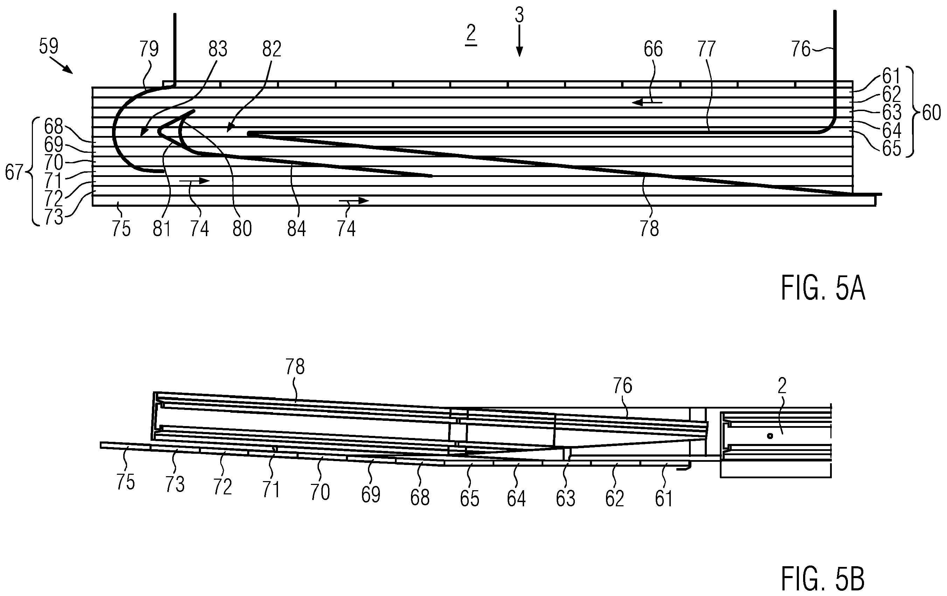

Die Figur 5A zeigt eine schematische Draufsicht auf eine dritte Ausführungsform der Behälterabführvorrichtung 59 zum Abführen von Behältern von dem zuvor beschriebenen Puffer 2 und zum Vereinzeln der Behälter. Die Behälterabführvorrichtung 59 umfasst, anschließend an den Puffer 2 eine erste Gruppe 60 von hier fünf parallel angeordneten ersten Förderern 61, 62, 63, 64, 65 die in eine erste Richtung 66 quer zur Transportrichtung 3 des Puffers 2 antreibbar sind. Die ersten Förderer 61-65 sind derart ausgebildet, dass sie Behälter vereinzeln und in die erste Richtung 66 fördern können.

Weiter umfasst die Behälterabführvorrichtung 59 parallel anschließend an die erste Gruppe 60 eine zweite Gruppe 67 von hier sechs parallel angeordneten zweiten Förderern 68, 69, 70, 71, 72, 73 die in eine zweite Richtung 74 antreibbar sind. Die zweite Richtung 74 ist entgegengesetzt zu der ersten Richtung 66. Die zweiten Förderer68-73 sind derart ausgebildet, dass sie die vereinzelten Behälter in die zweite Richtung 74 fördern können.

Zudem umfasst die Behälterabführvorrichtung 59 hier einen dritten Förderer 75, der derart ausgebildet ist, dass er die vereinzelten Behälter in die zweite Richtung 74 abtransportieren kann.

Am Anfang der ersten Förderer 61-65 ist oberhalb der Transportoberflächen der ersten Förderer 61-65 ein erstes Geländer 76 angeordnet, dessen gerader Bereich sich quer zu den ersten Förderern 61-65 erstreckt, wobei an den geraden Bereich eine 90° Kurve anschließt.

Oberhalb der Transportoberflächen ist zwischen der ersten Gruppe 60 und der zweiten Gruppe 67 ein zweites Geländer 77 vorgesehen, das gerade und derart ausgebildet ist, dass ein Übergangsbereich für Behälter zwischen der ersten Gruppe 60 und der zweiten Gruppe 67 vorhanden ist. Das zweite Geländer 77 schließt an das erste Geländer 76 an.

Oberhalb der Transportoberflächen der zweiten Förderer 68-73 ist ein drittes Geländer 78 vorgesehen, das den Übergangsbereich frei lässt und sich bis zum dritten Förderer 75 erstreckt. Das dritte Geländer 78 ist gerade ausgebildet und schließt an das zweite Geländer 77 an.

Am Ende der fünf ersten Förderer 61-65 und am Anfang von vier der sechs zweiten Förderer 68-71 ist oberhalb der Transportoberflächen ein erstes konkav ausgebildetes Geländer 79 vorgesehen. Hier umfasst das erste konkav ausgebildete Geländer 79 eine Kurve, die einen Winkel von 180° beschreibt.

Der Übergangsbereich wird durch ein zweites konkav ausgebildetes Geländer 80 in einen ersten Teilübergangsbereich 82 und einen zweiten Teilübergangsbereich 83 unterteilt, wobei das zweite konkave Geländer 80 oberhalb von drei der ersten Förderer 63, 64, 65 und von zwei der zweiten Förderer 68, 69 angeordnet ist. Das zweite konkav ausgebildete Geländer 80 ist auf der der konkaven Fläche gegenüberliegenden Fläche 81 dreieckig zulaufend ausgebildet. Anschließend an das Ende des zweiten konkaven Geländers 80, das sich oberhalb der zweiten Förderers 69 befindet, ist ein viertes Geländer 84 vorgesehen, das sich parallel zu dem dritten Geländer 78 und bis zum zweiten Förderer 72 erstreckt.

Die Figur 5B zeigt eine schematische Seitenansicht der dritten Ausführungsform der Behälterabführvorrichtung 59 mit Blickrichtung in die erste Richtung 66. Neben dem ersten Geländer 76 und dem dritten Geländer 78 sind die ersten Förderer 361-65, die zweiten Förderer 68-73 und der dritte Förderer 75 zu sehen.

Die Transportoberflächen der ersten Förderer 61-65 sind in aneinandergrenzenden Bereichen stufenfrei angeordnet und die einzelnen Transportoberflächen schließen mit einer zur Wirkrichtung der Schwerkraft senkrechten Ebene einen Winkel von 0° ein.

Die Transportoberfläche des ersten Förderers 65 und die Transportoberfläche des zweiten Förderers 68 sind in aneinandergrenzenden Bereichen stufenfrei angeordnet.

Die Transportoberflächen der zweiten Förderer 68-73 sind in aneinandergrenzenden Bereichen stufenfrei angeordnet und die einzelnen Transportoberflächen schließen mit einer zur Wirkrichtung der Schwerkraft senkrechten Ebene einen Winkel von +15° ein.

Die Transportoberfläche des dritten Förderers 75 schließt mit einer zur Wirkrichtung der Schwerkraft senkrechten Ebene einen Winkel von +15° ein.

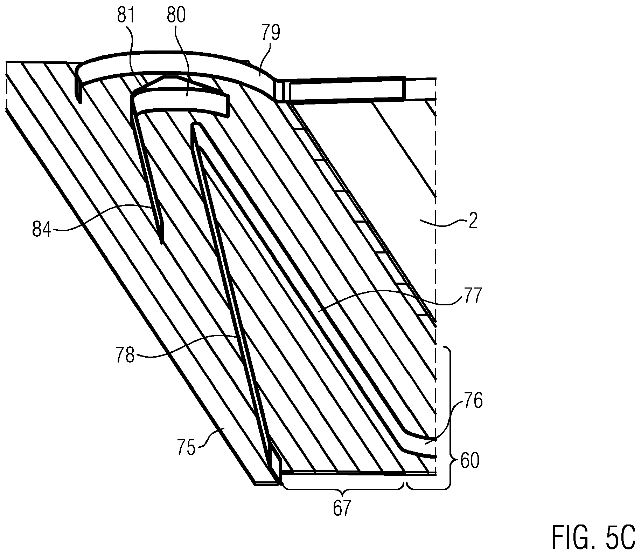

Die Figur 5C zeigt eine schematische Schrägansicht der dritten Ausführungsform der Behälterabführvorrichtung 59 von oben mit Blickrichtung in die erste Richtung 66. Neben dem ersten Geländer 76, dem zweiten Geländer 77, dem dritten Geländer 78, dem ersten konkaven Geländer 79, dem zweiten konkave Geländer 80 mit dreieckig zulaufend ausgebildeten Fläche 81 und dem vierten Geländer 84 sind die ersten Förderer 61-65, die zweiten Förderer 68-73 und der dritte Förderer 75 zu sehen.

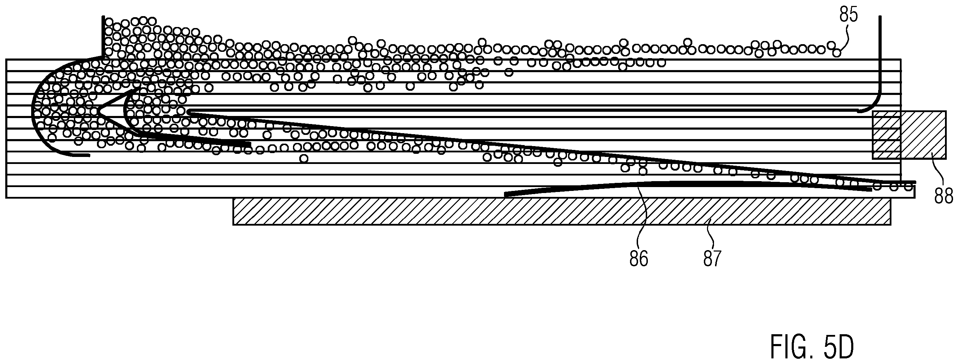

Die Figur 5D zeigt eine schematische Draufsicht auf die dritte Ausführungsform der Behälterabführvorrichtung 59 mit darin befindlichen Behältern 85. Durch den Transport von Behältern 85 mittels der ersten Förderer 61-65 in die erste Richtung 66 drängeln sich die Behälter (i) am zweiten konkaven Geländer 80, gelangen dadurch in den ersten Teilübergangsbereich 82 und zu den zweiten Förderern 68-73 und (ii) am Ende der ersten Förderer 61-65 und gelangen dadurch und durch das erste konkave Geländer 79 und die dreieckig zulaufend ausgebildete Fläche 81 in den zweiten Teilübergangsbereich 83 und zu den zweiten Förderern 68-73, von denen sie in die zweite Richtung 74 bewegt werden. Durch das dritte Geländer 78, das vierte Geländer 84 und den Transport in die zweite Richtung 74 durch die zweiten Förderer 68-73 werden die Behälter 85 auf den dritten Förderer 75 zu transportiert, der die vereinzelten Behälter 85 abtransportieren kann.

Optional kann die Behälterabführvorrichtung 59 ein flexibles Element 86 umfassen, das teilweise oberhalb des zweiten Förderers 73 und dem dritten Förderer 75 angeordnet ist. Parallel unterhalb und neben dem dritten Förderer 75 kann eine erste Auffangvorrichtung 87 vorgesehen sein. Teilweise unterhalb dem Ende der zweiten Förderer 68-71 angeordnet kann eine zweite Auffangvorrichtung 88 vorgesehen sein.

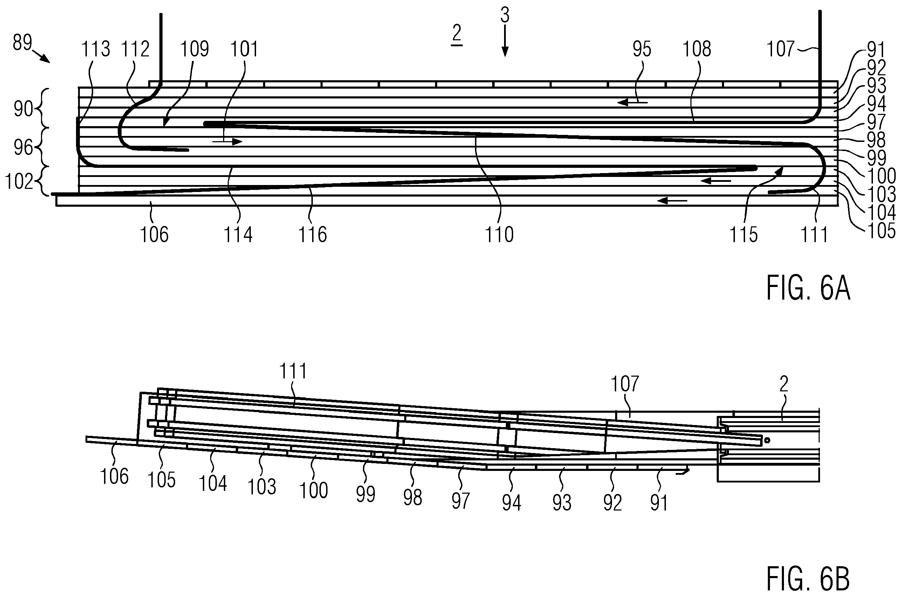

Die Figur 6A zeigt eine schematische Draufsicht auf eine vierte Ausführungsform der Behälterabführvorrichtung 89 zum Abführen von Behältern von dem zuvor beschriebenen Puffer 2 und zum Vereinzeln der Behälter. Die Behälterabführvorrichtung 89 umfasst, anschließend an den Puffer 2 eine erste Gruppe 90 von hier vier parallel angeordneten ersten Förderern 91, 92, 93, 94, die in eine erste Richtung 95 quer zur Transportrichtung 3 des Puffers 2 antreibbar sind. Die ersten Förderer 91-94 sind derart ausgebildet, dass sie Behälter vereinzeln und in die erste Richtung 95 fördern können.

Weiter umfasst die Behälterabführvorrichtung 89 parallel anschließend an die erste Gruppe 90 eine zweite Gruppe 96 von hier vier parallel angeordneten zweiten Förderern 97, 98, 99, 100 die in eine zweite Richtung 101 antreibbar sind. Die zweite Richtung 101 ist entgegengesetzt zu der ersten Richtung 95. Die zweiten Förderer 97- 100 sind derart ausgebildet, dass sie die vereinzelten Behälter in die zweite Richtung 101 fördern können.

Zudem umfasst die Behälterabführvorrichtung 89 parallel anschließend an die zweite Gruppe 96 eine dritte Gruppe 102 von hier drei parallel angeordneten dritten Förderern 103, 104, 105 die in die erste Richtung 95 antreibbar sind. Die dritten Förderer 103-105 sind derart ausgebildet, dass sie die vereinzelten Behälter in die erste Richtung 95 fördern können.

Weiter umfasst die Behälterabführvorrichtung 89 einen vierten Förderer 106, der derart ausgebildet ist, dass er die vereinzelten Behälter in die erste Richtung 95 abtransportieren kann.

Am Anfang der ersten Förderer 91-94 ist oberhalb der Transportoberflächen der ersten Förderer 91-94 ein erstes Geländer 107 angeordnet, dessen gerader Bereich sich quer zu den ersten Förderern 91-94 erstreckt, wobei an den geraden Bereich eine 90° Kurve anschließt.

Oberhalb der Transportoberflächen ist zwischen der ersten Gruppe 90 und der zweiten Gruppe 96 ein zweites Geländer 108 vorgesehen, das gerade und derart ausgebildet ist, dass ein erster Übergangsbereich 109 für Behälter zwischen der ersten Gruppe 90 und der zweiten Gruppe 96 vorhanden ist. Das zweite Geländer 108 schließt an das erste Geländer 107 an.

Oberhalb der Transportoberflächen der zweiten Förderer 97-100 ist ein drittes Geländer 110 vorgesehen, das den ersten Übergangsbereich 109 frei lässt und sich bis zum zweiten Förderer 98 erstreckt. Das dritte Geländer 110 ist gerade ausgebildet und schließt an das zweite Geländer 108 an. Anschließend an das dritte Geländer 110 ist ein erstes konkav ausgebildetes Geländer 111 vorgesehen. Hier umfasst das konkav ausgebildete Geländer 111 eine Kurve, die einen Winkel von 180° beschreibt. Das konkav ausgebildete Geländer 111 erstreckt sich bis zum dritten Förderer 105.

Am Ende der ersten Förderer 91-94 und am Anfang von drei der zweiten Förderer 97-99 ist oberhalb der Transportoberflächen ein zweites konkav ausgebildetes Geländer 112 vorgesehen. Hier umfasst das zweite konkav ausgebildete Geländer 112 eine Kurve, die einen Winkel von 180° beschreibt.

Am Anfang der zweiten Förderer 97-100 ist oberhalb der Transportoberflächen der zweiten Förderer 97-100 ein viertes Geländer 113 angeordnet, dessen gerader Bereich sich quer zu den zweiten Förderern 97-100 erstreckt, wobei an den geraden Bereich eine 90° Kurve anschließt.

Oberhalb der Transportoberflächen ist zwischen der zweiten Gruppe 96 und der dritten Gruppe 102 ein fünftes Geländer 114 vorgesehen, das gerade und derart ausgebildet ist, dass ein zweiter Übergangsbereich 115 für Behälter zwischen der zweiten Gruppe 96 und der dritten Gruppe 102 vorhanden ist. Das fünfte Geländer 114 schließt an das vierte Geländer 113 an.

Oberhalb der Transportoberflächen der dritten Förderer 103-105 ist ein fünftes Geländer 116 vorgesehen, das den zweiten Übergangsbereich 115 frei lässt und sich bis zum vierten Förderer 106 erstreckt. Das fünfte Geländer 116 ist gerade ausgebildet und schließt an das vierte Geländer 114 an.

Die Figur 6B zeigt eine schematische Seitenansicht der vierten Ausführungsform der Behälterabführvorrichtung 89 mit Blickrichtung in die erste Richtung 95. Neben dem ersten Geländer 107 und dem ersten konkaven Geländer 111 sind die ersten Förderer 91-94, die zweiten Förderer 97-100, die dritten Förderer 103-105 und der vierte Förderer 106 zu sehen.

Die Transportoberflächen der ersten Förderer 91-94 sind in aneinandergrenzenden Bereichen stufenfrei angeordnet und die einzelnen Transportoberflächen schließen mit einer zur Wirkrichtung der Schwerkraft senkrechten Ebene einen Winkel von 0° ein.

Die Transportoberfläche des ersten Förderers 94 und die Transportoberfläche des zweiten Förderers 97 sind in aneinandergrenzenden Bereichen stufenfrei angeordnet.

Die Transportoberflächen der zweiten Förderer 97-100 sind in aneinandergrenzenden Bereichen stufenfrei angeordnet und die einzelnen Transportoberflächen schließen mit einer zur Wirkrichtung der Schwerkraft senkrechten Ebene einen Winkel von +10° ein.

Die Transportoberfläche des zweiten Förderers 100 und die Transportoberfläche des dritten Förderers 103 sind in aneinandergrenzenden Bereichen stufenfrei angeordnet.

Die Transportoberflächen der dritten Förderer 103-105 sind in aneinandergrenzenden Bereichen stufenfrei angeordnet und die einzelnen Transportoberflächen schließen mit einer zur Wirkrichtung der Schwerkraft senkrechten Ebene einen Winkel von +10° ein.

Die Transportoberfläche des dritten Förderers 105 und die Transportoberfläche des vierten Förderers 106 sind in aneinandergrenzenden Bereichen stufenfrei angeordnet.

Die Transportoberfläche des vierten Förderers 106 schließt mit einer zur Wirkrichtung der Schwerkraft senkrechten Ebene einen Winkel von +10° ein.

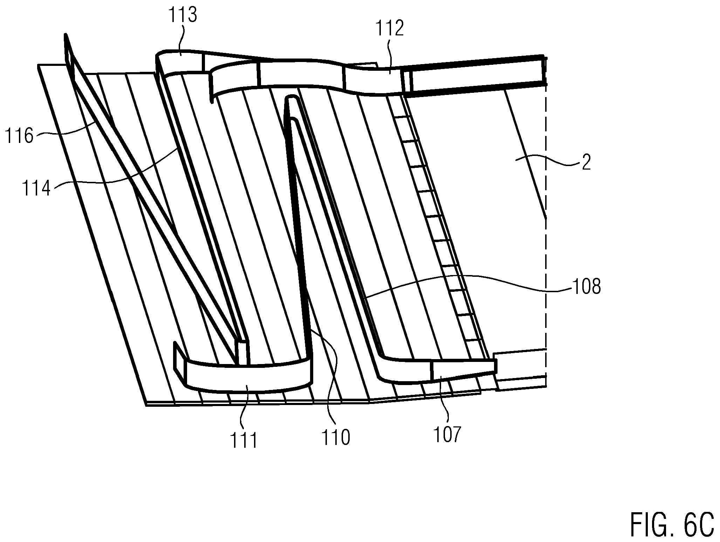

Die Figur 6C zeigt eine schematische Schrägansicht der vierten Ausführungsform der Behälterabführvorrichtung 89 von oben mit Blickrichtung in die erste Richtung 95. Neben dem ersten Geländer 107, dem zweiten Geländer 108, dem dritten Geländer 110, dem ersten konkav ausgebildeten Geländer 111, dem zweiten konkav ausgebildeten Geländer 112, dem vierten Geländer 113, dem fünften Geländer 114 und dem sechsten Geländer 116 sind die ersten Förderer 91-94, die zweiten Förderer 97-100, die dritten Förderer 103-105 und der vierte Förderer 106 zu sehen.

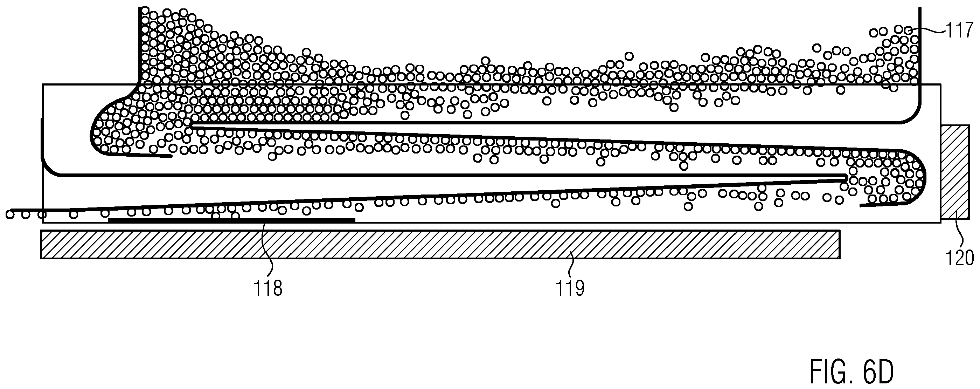

Die Figur 6D zeigt eine schematische Draufsicht auf die vierte Ausführungsform der Behälterabführvorrichtung 89 mit darin befindlichen Behältern 117. Durch den Transport von Behältern 117 mittels der ersten Förderer 91-94 in die erste Richtung 95 drängeln sich die Behälter 117 am Ende der ersten Förderer 91-94 und gelangen dadurch und durch das erste konkave Geländer 111 in den ersten Übergangsbereich 109 und zu den zweiten Förderern 97-100, von denen sie in die zweite Richtung 101 bewegt werden. Durch das dritte Geländer 110 und den Transport in die zweite Richtung 101 durch die zweiten Förderer 97-100 werden die Behälter 117 auf die dritten Förderer 103-105 zu transportiert.

Am Ende der zweiten Förderer 97-100 drängeln sich die Behälter 117 und gelangen dadurch und durch das zweite konkave Geländer 112 in den zweiten Übergangsbereich 115 und zu den dritten Förderern 9103-105, von denen sie in die erste Richtung 95 bewegt werden. Durch das fünfte Geländer 116 und den Transport in die erste Richtung 95 durch die dritten Förderer 103-105 werden die Behälter 117 auf den vierten Förderer 106 zu transportiert.

Optional kann die Behälterabführvorrichtung 89 ein flexibles Element 118 umfassen, das in einem Bereich zwischen dem dritten Förderer 105 und dem vierten Förderer 106 angeordnet ist. Parallel unterhalb und neben dem vierten Förderer 106 kann eine erste Auffangvorrichtung 119 vorgesehen sein. Teilweise unterhalb dem Ende der zweiten Förderer 97-100 und der dritten Förderer 103-105 angeordnet kann eine zweite Auffangvorrichtung 120 vorgesehen sein.

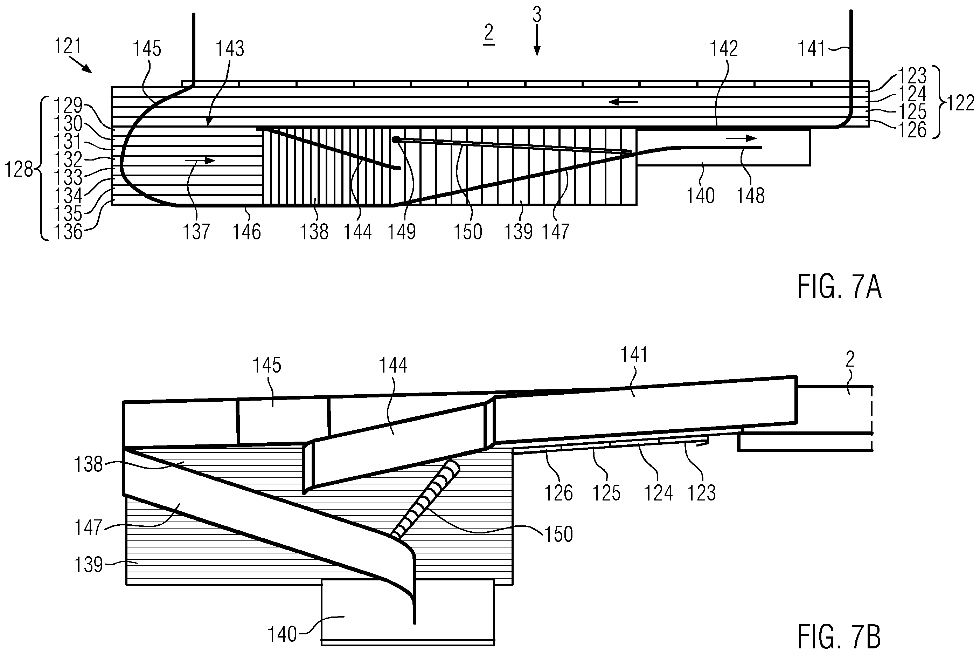

Die Figur 7A zeigt eine schematische Draufsicht auf eine fünfte Ausführungsform der Behälterabführvorrichtung 121 zum Abführen von Behältern von dem zuvor beschriebenen Puffer 2 und zum Vereinzeln der Behälter. Die Behälterabführvorrichtung 121 umfasst, anschließend an den Puffer 2 eine erste Gruppe 122 von hier vier parallel angeordneten ersten Förderern 123, 124, 125, 126, die in eine erste Richtung 127 quer zur Transportrichtung 3 des Puffers 2 antreibbar sind. Die ersten Förderer 123-126 sind derart ausgebildet, dass sie Behälter vereinzeln und in die erste Richtung 127 fördern können.

Weiter umfasst die Behälterabführvorrichtung 121 parallel anschließend an die erste Gruppe 122 eine zweite Gruppe 128 von hier acht parallel angeordneten zweiten Förderern 129, 130, 131, 132, 133, 134, 135, 136, die in eine zweite Richtung 137 antreibbar sind. Die zweite Richtung 137 ist entgegengesetzt zu der ersten Richtung 127. Die zweiten Förderer 129-136 sind derart ausgebildet, dass sie die vereinzelten Behälter in die zweite Richtung 137 fördern können.

Zudem umfasst die Behälterabführvorrichtung 121 anschließend an die zweiten Förderer 129-136 eine quer dazu angeordnete erste Rollenbahn 138 und anschließend an die erste Rollenbahn 138 eine ebenfalls quer zu den zweiten Förderern 129-136 angeordnete zweite Rollenbahn 139. Anschließend an die zweite Rollenbahn 139 ist ein dritter Förderer 140 angeordnet, der in die zweite Richtung 137 antreibbar ist und der derart ausgebildet ist, dass er die vereinzelten Behälter in die zweite Richtung 137 abtransportieren kann.

Am Anfang der ersten Förderer 123-126 ist oberhalb der Transportoberflächen der ersten Förderer 123-126 ein erstes Geländer 141 angeordnet, dessen gerader Bereich sich quer zu den ersten Förderern 123-126 erstreckt, wobei an den geraden Bereich eine 90° Kurve anschließt.

Oberhalb der Transportoberflächen ist zwischen der ersten Gruppe 122 und der zweiten Gruppe 128 ein zweites Geländer 142 vorgesehen, das gerade und derart ausgebildet ist, dass ein Übergangsbereich 143 für Behälter zwischen der ersten Gruppe 122 und der zweiten Gruppe 128 vorhanden ist. Das zweite Geländer 142 schließt an das erste Geländer 141 an.

Oberhalb der Transportoberflächen der ersten Rollenbahn 138 ist ein drittes Geländer 144 vorgesehen, das schräg über die eine Hälfte der ersten Rollenbahn 138 ausgerichtet ist und sich bis zur zweiten Rollenbahn 139 erstreckt. Das dritte Geländer 144 ist gerade ausgebildet und schließt an das zweite Geländer 142 an.

Am Ende der ersten Förderer 123-126 und am Anfang der zweiten Förderer 129-136 ist oberhalb der Transportoberflächen ein konkav ausgebildetes Geländer 145 vorgesehen. Hier umfasst das konkav ausgebildete Geländer 145 eine Kurve, die einen Winkel von 180° beschreibt. Anschließend an das konkav ausgebildete Geländer 145 ist oberhalb und neben dem zweiten Förderer 136 ein viertes Geländer 146 angeordnet, das parallel zu dem zweiten Förderer 136 verläuft und gerade ausgebildet ist. Anschließend an das vierte Geländer 146 ist ein fünftes Geländer 147 angeordnet, das oberhalb der Transportoberflächen der zweiten Rollenbahn 139 schräg über Zweidrittel der zweiten Rollenbahn 139 ausgerichtet ist und sich bis oberhalb des dritten Förderers 140 erstreckt. Anschließend an das fünfte Geländer 147 ist ein sechstes Geländer 148 vorgesehen, das sich oberhalb des dritten Förderers 140 erstreckt und parallel zu dem zweiten Geländer 142 angeordnet ist.

Zudem ist oberhalb der Transportoberfläche der zweiten Rollenbahn 139 in dem Bereich, der für abzuführende und zu vereinzelnde Behälter zugänglich ist, ein flexibles Element 150 angeordnet, das an einem Ende um einen Drehpunkt 149 beweglich ausgebildet ist.

Die Figur 7B zeigt eine schematische Seitenansicht der fünften Ausführungsform der Behälterabführvorrichtung 121 mit Blickrichtung in die erste Richtung 127. Neben dem ersten Geländer 141, dem dritten Geländer 144, dem konkav ausgebildeten Geländer 145, dem fünften Geländer 147 und dem flexiblen Element 150 sind die ersten Förderer 123-126, die erste Rollenbahn 138, die zweite Rollenbahn 139 und der dritte Förderer 140 zu sehen.

Die Transportoberflächen der ersten Förderer 123-126 sind in aneinandergrenzenden Bereichen stufenfrei angeordnet und die einzelnen Transportoberflächen schließen mit einer zur Wirkrichtung der Schwerkraft senkrechten Ebene einen Winkel von -5° ein.

Die Transportoberfläche des ersten Förderers 126 und die Transportoberfläche des zweiten Förderers 129 sind in aneinandergrenzenden Bereichen stufenfrei angeordnet.

Die Transportoberflächen der zweiten Förderer 129-1367 sind in aneinandergrenzenden Bereichen stufenfrei angeordnet und die einzelnen Transportoberflächen schließen mit einer zur Wirkrichtung der Schwerkraft senkrechten Ebene einen Winkel von 0° ein.

Die Transportoberflächen der ersten Rollenbahn 138, der zweiten Rollenbahn 139 und des dritten Förderers 140 schließen mit einer zur Wirkrichtung der Schwerkraft senkrechten Ebene einen Winkel von -15° ein.

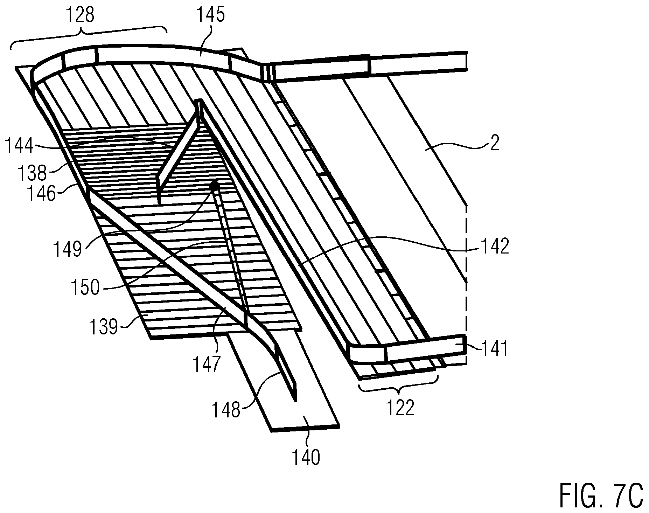

Die Figur 7C zeigt eine schematische Schrägansicht der fünften Ausführungsform der Behälterabführvorrichtung 121 von oben mit Blickrichtung in die erste Richtung 127. Neben dem ersten Geländer 141, dem zweiten Geländer 142, dem dritten Geländer 144, dem konkav ausgebildeten Geländer 145, dem vierten Geländer 146, dem fünften Geländer 147, dem sechsten Geländer 148 und dem flexiblen Element 150 sind die ersten Förderer 123-126, die zweiten Förderer 129-136, die erste Rollenbahn 138, die zweite Rollenbahn 139 und der dritte Förderer 140 zu sehen.

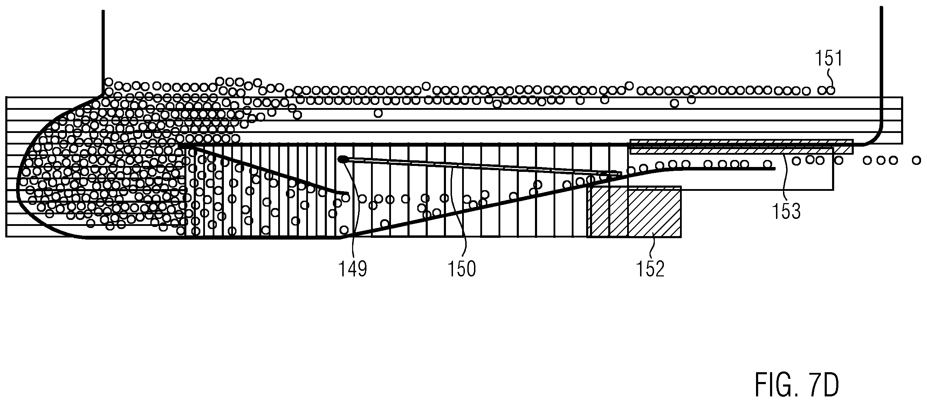

Die Figur 7D zeigt eine schematische Draufsicht auf die fünfte Ausführungsform der Behälterabführvorrichtung mit darin befindlichen Behältern 151. Durch den Transport von Behältern 151 mittels der ersten Förderer 123-126 in die erste Richtung 127 drängeln sich die Behälter 151 am Ende der ersten Förderer 123-126 und gelangen dadurch und durch das konkav ausgebildete Geländer 145 in den Übergangsbereich 143 und zu den zweiten Förderern 129-136, von denen sie in die zweite Richtung 137 bewegt werden. Die Behälter 151 gelangen zu der ersten Rollenbahn 138 und werden durch deren geneigte Anordnung und durch das dritte Geländer 144 und das vierte Geländer 146 zu der zweiten Rollenbahn 139 transportiert. Auf der zweiten Rollenbahn 139 werden die Behälter 151 durch die geneigte Anordnung der zweiten Rollenbahn und das fünfte Geländer 147 zu dem dritten Förderer 140 transportiert, der die vereinzelten Behälter 151 abtransportieren kann.

Optional kann die Behälterabführvorrichtung 121 unterhalb dem Ende der zweiten Rollenbahn eine erste Auffangvorrichtung 152 umfassen. Zudem kann unterhalb des dritten Förderers 140 hin zu den ersten Förderern 123-126 eine zweite Auffangvorrichtung 153 vorgesehen sein.

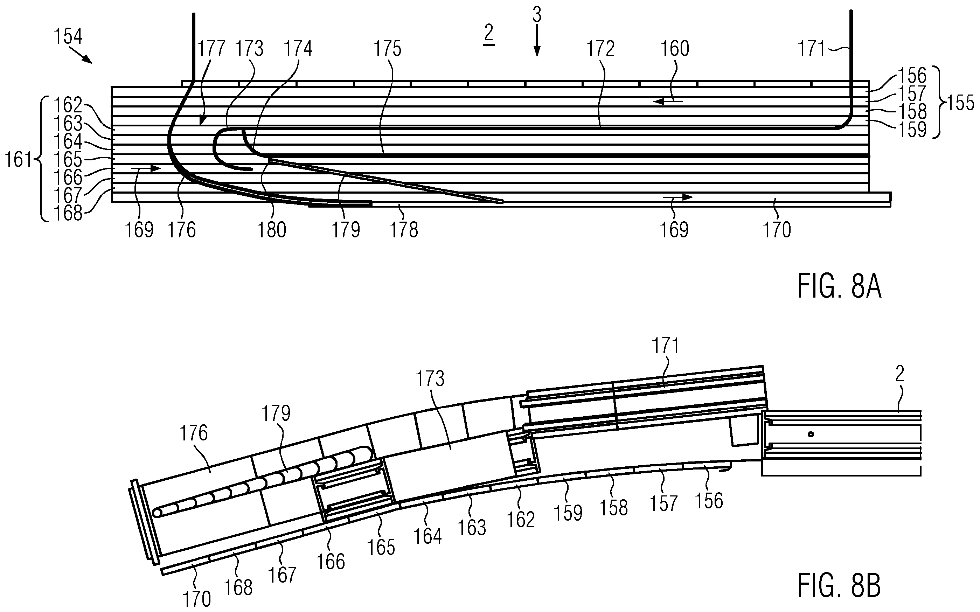

Die Figur 8A zeigt eine schematische Draufsicht auf eine sechste Ausführungsform der Behälterabführvorrichtung 154 zum Abführen von Behältern von dem zuvor beschriebenen Puffer 2 und zum Vereinzeln der Behälter. Die Behälterabführvorrichtung 154 umfasst, anschließend an den Puffer 2 eine erste Gruppe 155 von hier vier parallel angeordneten ersten Förderern 156, 157, 158, 159 die in eine erste Richtung 160 quer zur Transportrichtung 3 des Puffers 2 antreibbar sind. Die ersten Förderer 156-159 sind derart ausgebildet, dass sie Behälter vereinzeln und in die erste Richtung 160 fördern können.

Weiter umfasst die Behälterabführvorrichtung 154 parallel anschließend an die erste Gruppe 155 eine zweite Gruppe 161 von hier sieben parallel angeordneten zweiten Förderern 162, 163, 164, 165, 166, 167, 168, die in eine zweite Richtung 169 antreibbar sind. Die zweite Richtung 169 ist entgegengesetzt zu der ersten Richtung 160. Die zweiten Förderer 162-168 sind derart ausgebildet, dass sie die vereinzelten Behälter in die zweite Richtung 169 fördern können.

Zudem umfasst die Behälterabführvorrichtung 154 hier einen dritten Förderer 170, der derart ausgebildet ist, dass er die vereinzelten Behälter in die zweite Richtung 169 abtransportieren kann.

Am Anfang der ersten Förderer 156-159 ist oberhalb der Transportoberflächen der ersten Förderer 156-159 ein erstes Geländer 171 angeordnet, dessen gerader Bereich sich quer zu den ersten Förderern 156-159 erstreckt, wobei an den geraden Bereich eine 90° Kurve anschließt.

Oberhalb der Transportoberflächen ist zwischen der ersten Gruppe 155 und der zweiten Gruppe 161 ein zweites Geländer 172 vorgesehen, das gerade und derart ausgebildet ist, dass ein Übergangsbereich 177 für Behälter zwischen der ersten Gruppe 155 und der zweiten Gruppe 161 vorhanden ist. Das zweite Geländer 172 schließt an das erste Geländer 171 an. Anschließend an das zweite Geländer 172 ist oberhalb der Transportoberflächen der zweiten Förderer 162-166 ein konvex ausgebildetes Geländer 173 angeordnet, das gerade und derart ausgebildet ist, dass der Übergangsbereich 177 für Behälter zwischen der ersten Gruppe 155 und der zweiten Gruppe 161 vorhanden ist.

Zudem ist oberhalb der Transportoberflächen der zweiten Förderer 162-165 ein gebogenes Geländer 174 angeordnet, das an das zweite Geländer 172 anschließt. Anschließend an das gebogene Geländer 174 ist oberhalb der Transportoberflächen des zweiten Förderers 165 ein drittes Geländer 175 angeordnet. Das dritte Geländer ist gerade ausgebildet.

Am Ende der ersten Förderer 156-159 und am Anfang der zweiten Förderer 162-168 ist oberhalb der Transportoberflächen ein konkav ausgebildetes Geländer 176 vorgesehen. Hier umfasst das konkav ausgebildete Geländer 176 eine Kurve, die einen Winkel von 180° beschreibt. Anschließend an das konkav ausgebildete Geländer 176 ist ein viertes Geländer 178 vorgesehen, das oberhalb und seitlich des dritten Förderers 170 verläuft.

Zudem ist oberhalb der Transportoberflächen der zweiten Förderer 162-168 und dem dritten Förderer 170 ein flexibles Element 179 angeordnet, das an einem Ende um einen Drehpunkt 180 beweglich ausgebildet ist.

Die Figur 8B zeigt eine zweite schematische Seitenansicht der sechsten Ausführungsform der Behälterabführvorrichtung 154 mit Blickrichtung in die erste Richtung 160. Neben dem ersten Geländer 171, dem konvex ausgebildeten Geländer 173, dem konkav ausgebildeten Geländer 176 und dem flexiblen Element 179 sind die ersten Förderer 156-159, die zweiten Förderer 162-168 und der dritte Förderer 170 zu sehen.

Die Transportoberflächen der ersten Förderer 156-159 sind in aneinandergrenzenden Bereichen stufenfrei angeordnet und die einzelnen Transportoberflächen schließen mit einer zur Wirkrichtung der Schwerkraft senkrechten Ebene einen Winkel von -15° ein.

Die Transportoberfläche des ersten Förderers 159 und die Transportoberfläche des zweiten Förderers 162 sind in aneinandergrenzenden Bereichen stufenfrei angeordnet.

Die Transportoberflächen der zweiten Förderer 162-168 sind in aneinandergrenzenden Bereichen stufenfrei angeordnet und die einzelnen Transportoberflächen schließen mit einer zur Wirkrichtung der Schwerkraft senkrechten Ebene einen Winkel von -30° ein.

Die Transportoberfläche des dritten Förderers 170 schließt mit einer zur Wirkrichtung der Schwerkraft senkrechten Ebene einen Winkel von -30° ein. Die Transportoberfläche des zweiten Förderers 168 und die Transportoberfläche des dritten Förderers 170 sind in aneinandergrenzenden Bereichen stufenfrei angeordnet.

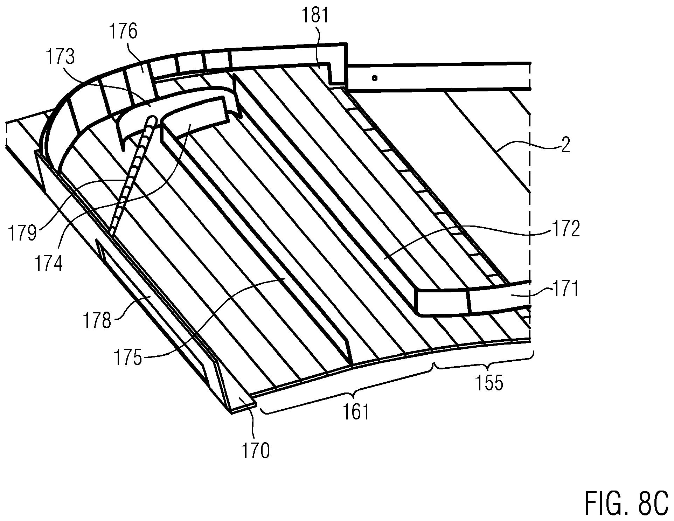

Die Figur 8C zeigt eine schematische Schrägansicht der sechsten Ausführungsform der Behälterabführvorrichtung 154 von oben mit Blickrichtung in die erste Richtung 160. Neben dem ersten Geländer 171, dem zweiten Geländer 172, dem konvex ausgebildeten Geländer 172, dem gebogenen Geländer 174, dem dritten Geländer 175, dem konkav ausgebildeten Geländer 176 und dem vierten Geländer 178 sind die ersten Förderer 156-159, die zweiten Förderer 162-168 und der dritte Förderer 170 zu sehen. Zudem wird eine Aussparung 181 des konkav ausgebildeten Geländers 176 deutlich, durch die beispielsweise umgefallenen Behälter oder Behälterbruch ausgeschleust werden können.

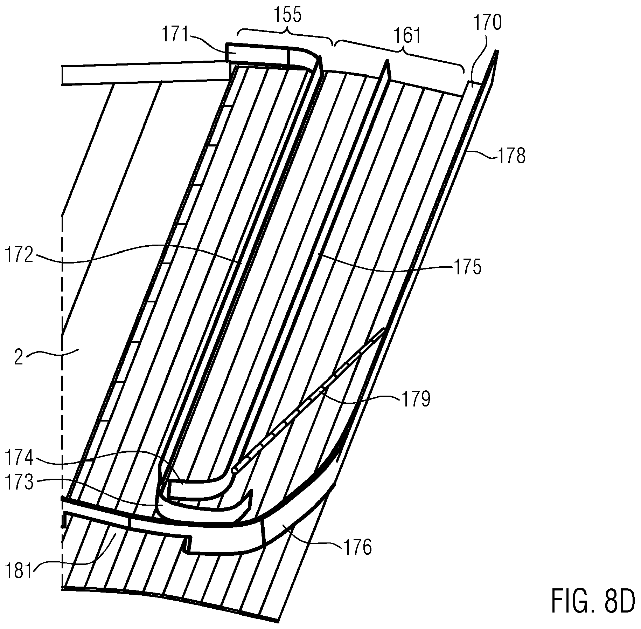

Die Figur 8D zeigt eine schematische Schrägansicht der sechsten Ausführungsform der Behälterabführvorrichtung 154 von oben mit Blickrichtung in die zweite Richtung 169. Auch in dieser Darstellung sind neben dem ersten Geländer 171, dem zweiten Geländer 172, dem konvex ausgebildeten Geländer 172, dem gebogenen Geländer 174, dem dritten Geländer 175, dem konkav ausgebildeten Geländer 176 und dem vierten Geländer 178 die ersten Förderer 156-159, die zweiten Förderer 162-168 und der dritte Förderer 170 zu sehen. Zudem ist die Aussparung 181 des konkav ausgebildeten Geländers 176 sichtbar, durch die beispielsweise umgefallenen Behälter oder Behälterbruch ausgeschleust werden können.

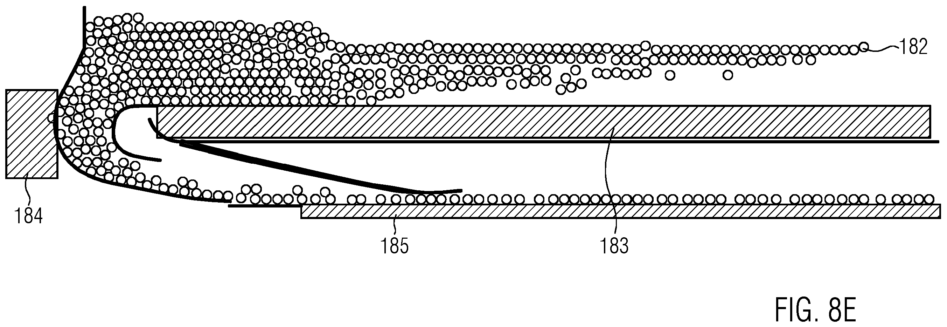

Die Figur 8E zeigt eine schematische Draufsicht auf die sechsten Ausführungsform der Behälterabführvorrichtung 154 mit darin befindlichen Behältern 182. Durch den Transport von Behältern 182 mittels der ersten Förderer 156-159 in die erste Richtung 160 drängeln sich die Behälter 182 am Ende der ersten Förderer 156-159 und gelangen dadurch und durch das konkave Geländer 176 in den Übergangsbereich 177 und zu den zweiten Förderern 162-168, von denen sie in die zweite Richtung 169 bewegt werden. Durch das konvex ausgebildete Geländer 173, das gebogene Geländer 174, das dritte Geländer 175 und das vierte Geländer 178 und den Transport in die zweite Richtung 169 durch die zweiten Förderer 162-168 werden die Behälter 182 auf den dritten Förderer 170 zu transportiert, der die vereinzelten Behälter 182 abtransportieren kann.

Optional kann die Behälterabführvorrichtung 154 eine erste Auffangvorrichtung 183 umfassen, die unterhalb des Bereichs zwischen dem zweiten Geländer 172 und dem dritten Geländer 175 angeordnet sein kann. Eine zweite Auffangvorrichtung 184 kann teilweise unterhalb dem Anfang der zweiten Förderer 162-168 angeordnet sein. Eine dritte Auffangvorrichtung 185 kann teilweise unterhalb und seitlich des dritten Förderers 170 angeordnet sein.

Die Figur 9 zeigt eine Draufsicht auf eine schematische Ansicht einer ersten Ausführungsform einer Behälterzuführvorrichtung 186 zum Zuführen von Behältern zu einem Puffer 203.

Die Behälterzuführvorrichtung 186 umfasst einen einspurigen Einlaufförderer 187, der in eine erste Richtung 201 antreibbar ist und beispielsweise auf seiner Transportoberfläche transportierte Behälter in die erste Richtung fördern kann.

Parallel anschließend an den einspurigen Einlaufförderer 187 ist eine erste Gruppe 193 von mehreren parallel angeordneten ersten Förderern 188, 189, 190, 191, 192 vorgesehen, die jeweils in die erste Richtung 201 antreibbar sind. Auf den jeweiligen Transportoberflächen der ersten Förderer 188-192 können Behälter in die erste Richtung 201 gefördert werden.

Parallel anschließend an die erste Gruppe 193 ist eine zweite Gruppe 199 von mehreren parallel angeordneten zweiten Förderern 194, 195, 196, 197, 198 vorgesehen, die jeweils in eine zweite Richtung 202 antreibbar sind. Auf den jeweiligen Transportoberflächen der zweiten Förderer 194-198 können Behälter in die zweite Richtung 202 gefördert werden. Die erste und zweite Richtung 201, 202 sind zueinander entgegengesetzt.

Oberhalb einer Transportoberfläche des einspurigen Einlaufförderers 187 und der Transportoberflächen des ersten und zweiten der ersten Förderern 188, 189 ist ein Geländer 211 mit fünf Abweisern 212 angeordnet. Diese Geländer 211 geht oberhalb der Transportoberfläche des Endes des zweiten der ersten Förderer 189 in ein konkav ausgebildetes Geländer 213 über, das am Ende des zweiten, dritten, vierten und fünften der ersten Förderer 189-192 und am Anfang des ersten bis fünften der zweiten Förderer 194-198 oberhalb der Transportoberflächen vorgesehen ist. Hier umfasst das konkav ausgebildete Geländer 213 eine Kurve, die einen Winkel von 180° beschreibt.

Oberhalb der Transportoberflächen der ersten und der zweiten Gruppe 193, 199 ist zwischen der ersten Gruppe 193 und der zweiten Gruppe 199 ein gerades Geländer 215 vorgesehen, das derart ausgebildet ist, dass ein Übergangsbereich 216 für Behälter zwischen der ersten Gruppe 193 und der zweiten Gruppe 199 vorhanden ist. Oberhalb der Transportoberflächen der ersten und der zweiten Gruppe 193, 199 zwischen der ersten Gruppe 193 und der zweiten Gruppe 199 kann dabei bedeuten oberhalb zwischen der Transportoberfläche des letzten der ersten Förderer 192 und des ersten der zweiten Förderer 194.

Der Übergangsbereich 216, entlang der ersten oder zweiten Richtung 201, 202 gesehen, weist eine Länge 219 auf, deren Wert um einen Faktor 1,8 bis 3 größer ist als ein Wert einer Förderbreite 220, 221 der ersten oder zweiten Gruppe 193, 199.

Oberhalb der Transportoberflächen der mehreren parallel angeordneten zweiten Förderern 194-198 ist ein Geländer 217 mit zwei Stufen 218 vorgesehen, das den Übergangsbereich 216 für die Behälter frei lässt. Das gerade Geländer 215 geht in das Geländer 217 mit den zwei Stufen 218 über.

Oberhalb der Transportoberflächen der mehreren parallel angeordneten ersten Förderer 188-192 ist ein weiteres gerades Geländer 224 angeordnet, das sich vom einspurigen Einlaufförderer 187 bis zu dem geraden Geländer 217 erstreckt.

Die Behälter sind von der zweiten Gruppe 199 von mehreren parallel angeordneten zweiten Förderern 194-198 quer zur zweiten Richtung 202 in Richtung 207 zum Puffer 2ß03 abgebbar. Beispielsweise können die Behälter von dem fünften der zweiten Förderern 198 quer zur zweiten Richtung 202 in Richtung 207 zum Puffer 203 abgegeben werden.

Ein Abgabebereich 204 (durch die Schraffierung kenntlich gemacht), in dem die Behälter von dem fünften der zweiten Förderern 198 quer zur zweiten Richtung 202 in die Richtung 207 zum Puffer 203 abgebbar sind, weist eine Länge 205 auf, die mindestens doppelt so groß ist wie eine Förderbreite 206 der Behälterzuführvorrichtung 186. Die Förderbreite 206 setzt sich dabei aus der Summe der Förderbreiten 220, 221 des einspurigen Einlaufförderers 187, der ersten Förderer 188-192 und der zweiten Förderer 194-198 zusammen.

Die Antriebsgeschwindigkeiten des einspurigen Einlaufförderers 187, der ersten Förderer 188-192 und der zweiten Förderer 194-198 können individuell mittels einer (nicht dargestellten) Steuerungsvorrichtung gesteuert werden. Dabei kann der mathematische Betrag von Antriebsgeschwindigkeiten ausgehend vom einspurigen Einlaufförderer 187 zu den mehreren parallel angeordneten ersten Förderern 188-192 jeweils abnehmen, der mathematische Betrag von Antriebsgeschwindigkeiten der mehreren parallel angeordneten zweiten Förderern 194-198 kann zunächst zunehmen und dann wieder abnehmen.

Ein mathematischer Betrag einer Antriebsgeschwindigkeit des Puffers 203 in die Richtung 207 kann am kleinsten sein.

Die Figur 10 zeigt eine Draufsicht auf eine schematische Ansicht einer zweiten Ausführungsform einer Behälterzuführvorrichtung 210. In der Figur 10 sind Elemente der ersten Ausführungsform der Figur 9, die auch in der zweiten Ausführungsform vorkommen mit den gleichen Bezugszeichen benannt. Das bezüglich der ersten Ausführungsform Beschriebene gilt für diese Elemente auch in der zweiten Ausführungsform; lediglich der Übergang zu dem Puffer 203 von der Behälterzuführvorrichtung 210 ist verschieden zu dem der Behälterzuführvorrichtung 186.

In der zweiten Ausführungsform der Behälterzuführvorrichtung 210 ist parallel anschließend an die zweite Gruppe 199 von mehreren parallel angeordneten zweiten Förderern 194-198 ein weiterer einspuriger Einlaufförderer 200 vorgesehen. Es können auch mehrere weitere jeweils einspurige Einlaufförderer nebeneinander vorgesehen sein, die sich an die zweite Gruppe anschließen. Der weitere einspurige Einlaufförderer 200 ist in die erste Richtung 201 antreibbar und ausgebildet ist, Behälter in die erste Richtung 201 zu fördern, beispielsweise auf einer Transportoberfläche. Behälter von dem weiteren einspurigen Einlaufförderer 200 können quer zur ersten Richtung 202 in die Richtung 207 zum Puffer 203 abgegeben werden. Entsprechendes gilt für den Fall, dass mehrere weitere einspurige Einlaufförderer vorgesehen sind.

Der weitere einspurige Einlaufförderer 200 umfasst einen Zuführlängenbereich 208 (durch die Schraffierung kenntlich gemacht), entlang dem die Behälter von dem weiteren einspurigen Einlaufförderer 200 dem Puffer 203 zuführbar sind. Der Zuführlängenbereich 208 weist eine Länge 209 auf, die mindestens doppelt so groß ist wie eine Förderbreite 228 der Behälterzuführvorrichtung 210. Entsprechendes gilt für den Fall, dass mehrere weitere einspurige Einlaufförderer vorgesehen sind.

Diese Förderbreite 228 setzt sich dabei aus der Summe der Förderbreiten des einspurigen Einlaufförderers 187, der ersten Förderer 188-192, der zweiten Förderer 194-198 und des weiteren einspurigen Einlaufförderers 200 oder der mehreren weiteren einspurigen Einlaufförderer zusammen. Die Förderbreiten können senkrecht zur ersten oder zweiten Richtung gemessen werden.

Die Länge 209 des Zuführlängenbereichs 208 kann entlang der ersten oder zweiten Richtung 201, 202 gemessen werden. Der Zuführlängenbereich 208 erstreckt sich entlang eines Teils der Transportoberfläche des weiteren einspurigen Einlaufförderers 200. Da die Länge 209 des Zuführlängenbereichs 208 mindestens doppelt so groß ist wie die Förderbreite 228 der Behälterzuführvorrichtung 210 können die Behälter an den Puffer 203 abgegeben werden, ohne dass sich ein hoher Staudruck zwischen den Behältern ausbildet.

Oberhalb der Transportoberfläche am Ende des weiteren einspurigen Einlaufförderers 200 ist ein weiteres konkaves Geländer 214 vorgesehen, das eine 90°-Kurve umfasst. Das weitere konkav ausgebildete Geländer 214 geht in das konkav ausgebildete Geländer 213 über.

Durch das weitere konkave Geländer 214 können Behälter, die von dem weiteren einspurigen Einlaufförderer 200 an den Puffer 203 abgegeben werden, auch gut in einen Bereich des Puffers 203 abgegeben werden, der dem Ende des weiteren einspurigen Einlaufförderers 200 gegenüberliegt (in der Darstellung der rechte Eckbereich des Puffers 203).

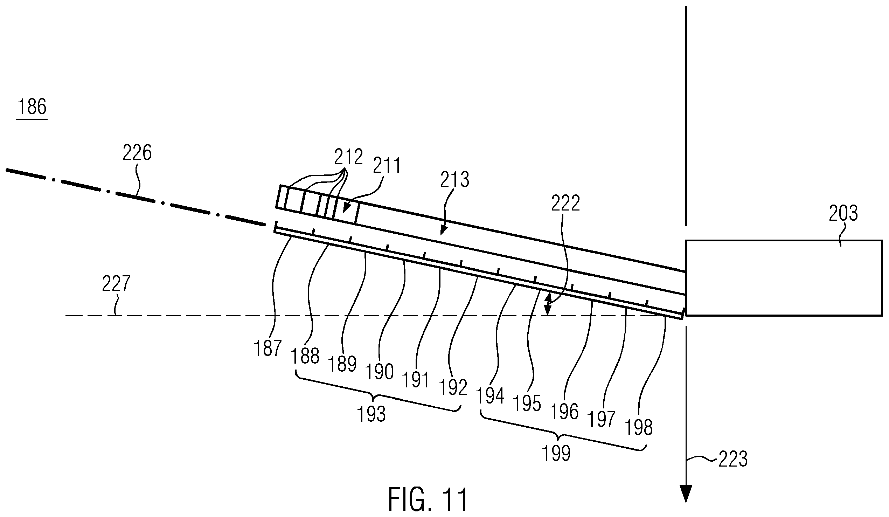

Die Figur 11 zeigt eine Seitenansicht der Figur 9 mit Blick in die zweite Richtung 202, wobei die Transportoberflächen des einspurigen Einlaufförderers 187, der ersten Förderer 188-192 und der zweiten Förderer 194-198 geneigt angeordnet sind. Die Transportoberflächen sind koplanar in einer Ebene 226 angeordnet. Die Ebene 226 schließt mit einer zur Wirkrichtung 223 der Schwerkraft senkrechten Ebene 227 einen Winkel 222 ein, der in einem Bereich von 0,5° bis 14° liegen kann (Bereichsgrenzen miteingeschlossen), oder beispielsweise einen Winkel von 0,5° bis 11°, oder beispielsweise einen Winkel von 0,5° bis 8°.

Das Geländer 211 mit den Abweisern 212, das konkav ausgebildete Geländer 213, das gerade Geländer 215, das Geländer 217 mit den Stufen 218 und das weitere gerade Geländer 224 sind ebenfalls geneigt angeordnet und schließen mit einer zur Wirkrichtung 223 der Schwerkraft senkrechten Ebene 227 einen Winkel ein, der in einem Bereich von 0,5° bis 14° liegen kann (Bereichsgrenzen miteingeschlossen), oder beispielsweise einen Winkel von 0,5° bis 11°, oder beispielsweise einen Winkel von 0,5° bis 8°.

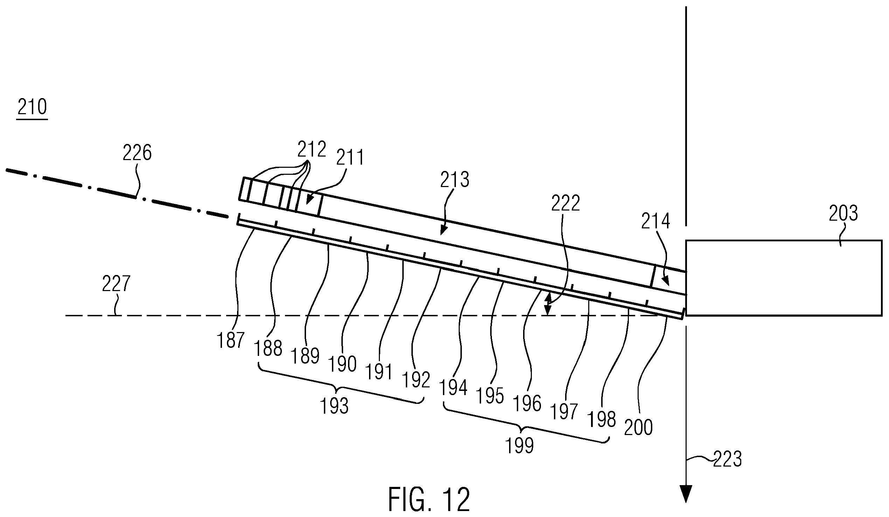

Die Figur 12 zeigt eine Seitenansicht der Figur 10 mit Blick in die zweite Richtung 202, wobei die Transportoberflächen des einspurigen Einlaufförderers 187, der ersten Förderer 188-192, der zweiten Förderer 194-198 und des weiteren einspurigen Einlaufförderers 200 geneigt angeordnet sind. Für den Fall dass mehrere weitere einspurige Einlaufförderer vorgesehen sind, können diese ebenfalls geneigt sein.

Die Transportoberflächen sind koplanar in einer Ebene 226 angeordnet. Die Ebene 226 schließt mit einer zur Wirkrichtung 223 der Schwerkraft senkrechten Ebene 227 einen Winkel 222 ein, der in einem Bereich von 0,5° bis 14° liegen kann (Bereichsgrenzen miteingeschlossen), oder beispielsweise einen Winkel von 0,5° bis 11°, oder beispielsweise einen Winkel von 0,5° bis 8°.

Das Geländer 211 mit den Abweisern 212, das konkav ausgebildete Geländer 213, das gerade Geländer 215, das Geländer 217 mit den Stufen 218, das weitere gerade Geländer 224 und das weitere konkav ausgebildete Geländer 214 sind ebenfalls geneigt angeordnet und schließen mit einer zur Wirkrichtung 223 der Schwerkraft senkrechten Ebene 227 einen Winkel ein, der in einem Bereich von 0,5° bis 14° liegen kann (Bereichsgrenzen miteingeschlossen), oder beispielsweise einen Winkel von 0,5° bis 11°, oder beispielsweise einen Winkel von 0,5° bis 8°.

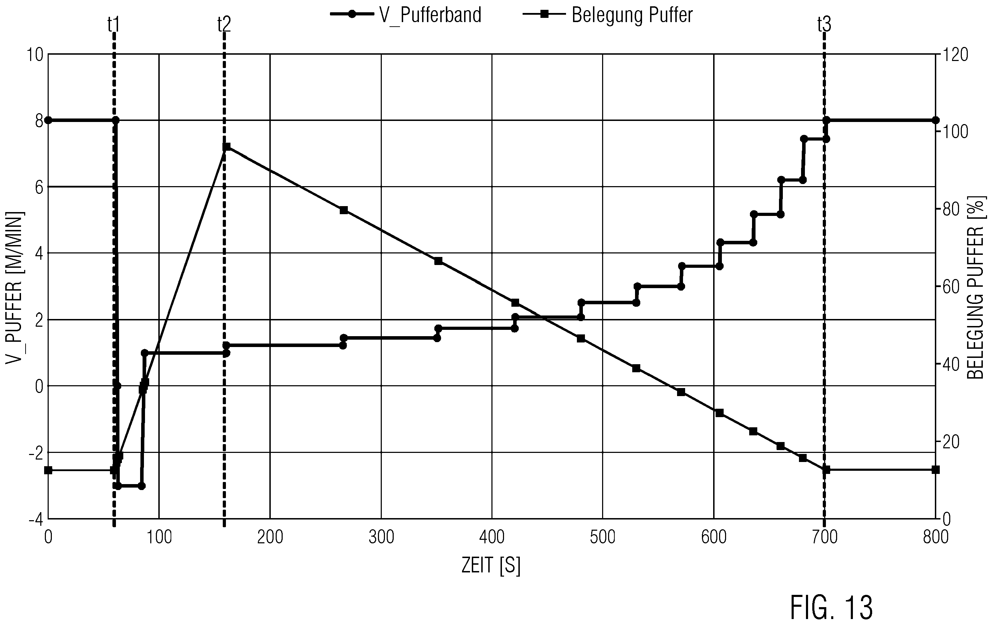

Die Figur 13 zeigt einen ersten zeitabhängigen Verlauf der Geschwindigkeit und der Belegung des Pufferbands 235. Im Normalbetrieb, in der Darstellung bei Zeiten kleiner als t1 und größer als t3, wird das Pufferband 235 mit einer Geschwindigkeit von 8 m/min in der ersten Richtung angetrieben. Die Behälterzuführvorrichtung 230 wird durchgehend, d.h. im Normalbetrieb, im Pufferbetrieb, beim Umstellen von Normal- zu Pufferbetrieb und beim Umstellen von Puffer- zu Normalbetrieb, angetrieben.

Nach dem Auftreten einer Störung stromab des Puffers 231 zurzeit t1 kann ein Puffern von Behältern auf dem Pufferband 235 erforderlich sein. Dazu erfolgt ein Umstellen eines Normalbetriebs des Puffers 231 zu einem Pufferbetrieb des Puffers 231. Das Pufferband 235 wird von 8 m/min in der ersten Richtung 236 kontinuierlich oder im Wesentlichen kontinuierlich auf 0 m/min abgebremst und auf 3 m/min in der zweiten Richtung 237 wieder beschleunigt. Die Beschleunigung kann stufenweise erfolgen. Das Pufferband 235 wird somit rückwärts angetrieben und kann auf dem Pufferband 235 befindliche Behälter zu einem Anfangsbereich des Pufferbands 235 zurück transportieren, wo diese Behälter sich anderen, von der Behälterzuführvorrichtung 230 gelieferten Behältern nähern und diese kontaktieren können.

Die Geschwindigkeit des Pufferbands 235 von 3 m/min in der zweiten Richtung 237 wird solange beibehalten, bis derjenige Behälter auf dem Pufferband 235, der am weitesten zur Behälterzuführvorrichtung 230 angeordnet ist, einen von der Behälterzuführvorrichtung 230 nachdrängelnden Behälter kontaktiert. Dann wird die Geschwindigkeit des Pufferbands von 3 m/min in der zweiten Richtung 237 auf eine Geschwindigkeit von 1 m/min in der ersten Richtung 236 erhöht.

In der Figur 13 ist dies beispielsweise der Fall, wenn etwa 35% des Pufferbands 235 mit Behältern gefüllt sind.

Die Geschwindigkeit von 1 m/min wird beibehalten, solange die Störung besteht und das Pufferband 235 nicht ganz bzw. im Wesentlichen nicht ganz mit Behältern gefüllt ist.

Die Störung wird zurzeit t2 behoben. Es erfolgt dann ein Umstellen des Pufferbetriebs zum Normalbetrieb des Puffers 231.

Die Geschwindigkeit des Pufferbands 235 wird schrittweise über mehrere, jeweils größere Zwischengeschwindigkeiten von den 1 m/min auf 8 m/min in der ersten Richtung 236 erhöht. In der Darstellung betragen die Zwischengeschwindigkeiten etwa 1,2 m/min, 1, 5 m/min, 1,73 m/min, 2,1 m/min, 2,5 m/min, 3 m/min, 3,6 m/min, 4,25 m/min, 5,1 m/min, 6,1 m/min und 7,5 m/min. Die Zeitdauern für die die verschiedenen Zwischengeschwindigkeiten jeweils verwendet werden, sind verschieden groß. In der Darstellung sind die Zeitdauern in etwa so lang, dass ein Abbau der Füllung/Belegung des Pufferbands 235 linear oder im Wesentlichen linear in Abhängigkeit von der Zeit verläuft bis die Füllung des Pufferbands 235 einer Füllung/Belegung im Normalbetrieb entspricht, hier etwa 15%. Diese Füllung des Pufferbands 235 wird zurzeit t3 erreicht.

Danach kann der Puffer 231 wieder im Normalbetrieb betrieben werden, d.h. das Pufferband 235 wird mit einer Geschwindigkeit von 8 m/min in der ersten Richtung 236 angetrieben.

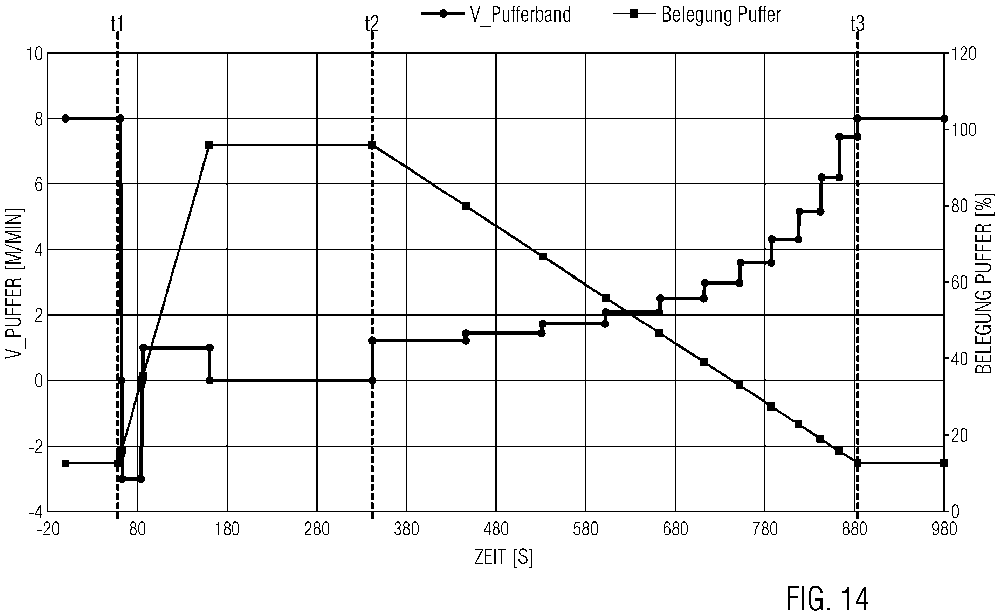

Die Figur 14 zeigt einen zweiten zeitabhängigen Verlauf der Geschwindigkeit und der Belegung des Pufferbands 235. Im Normalbetrieb, in der Darstellung bei Zeiten kleiner als t1 und größer als t3, wird das Pufferband 235 mit einer Geschwindigkeit von 8 m/min in der ersten Richtung 236 angetrieben. Die Behälterzuführvorrichtung 230 wird im Normalbetrieb angetrieben.

Nach dem Auftreten einer Störung stromab des Puffers 231 zurzeit t1 kann ein Puffern von Behältern auf dem Pufferband 235 erforderlich sein. Dazu erfolgt ein Umstellen eines Normalbetriebs des Puffers 231 zu einem Pufferbetrieb des Puffers 231. Das Pufferband 235 wird von 8 m/min in der ersten Richtung 236 kontinuierlich oder im Wesentlichen kontinuierlich auf 0 m/min abgebremst und auf 3 m/min in der zweiten Richtung 237 wieder beschleunigt. Das Pufferband 235 wird somit rückwärts angetrieben und kann auf dem Pufferband 235 befindliche Behälter zu einem Anfangsbereich des Pufferbands 235 zurück transportieren, wo diese Behälter sich anderen, von der Behälterzuführvorrichtung 230 gelieferten Behältern nähern und diese gegebenenfalls kontaktieren können.

Die Geschwindigkeit des Pufferbands 235 von 3 m/min in der zweiten Richtung 237 wird solange beibehalten, bis ein Behälter auf dem Pufferband 235, der am weitesten zur Behälterzuführvorrichtung 230 angeordnet ist, einen von der Behälterzuführvorrichtung 230 nachdrängelnden Behälter kontaktiert. Dann wird die Geschwindigkeit des Pufferbands 235 von 3 m/min in der zweiten Richtung 237 auf eine Geschwindigkeit von 1 m/min in der ersten Richtung 236 erhöht.

Dies ist beispielsweise der Fall, wenn etwa 35% des Pufferbands 235 mit Behältern gefüllt sind.

Die Geschwindigkeit von 1 m/min wird beibehalten, solange die Störung besteht und das Pufferband 235 nicht ganz bzw. im Wesentlichen nicht ganz mit Behältern gefüllt ist.

Wenn das Pufferband 235 zu etwa 90% gefüllt ist, stoppen das Pufferband 235 (Geschwindigkeit 0 m/min) und die Behälterzuführvorrichtung 230 (Geschwindigkeit 0 m/min).

Die Störung wird zurzeit t2 behoben. Die Geschwindigkeit des Pufferbands 235 wird zunächst auf 1,2 m/min in der ersten Richtung 236 erhöht, und die Geschwindigkeit der Behälterzuführvorrichtung 230 wird auf die im Normalbetrieb erhöht.

Die Geschwindigkeit des Pufferbands 235 wird danach weiter schrittweise über mehrere, jeweils größere Zwischengeschwindigkeiten von den 1,2 m/min auf 8 m/min in der ersten Richtung 236 erhöht. In der Darstellung betragen die Zwischengeschwindigkeiten etwa 1, 5 m/min, 1,73 m/min, 2,1 m/min, 2,5 m/min, 3 m/min, 3,6 m/min, 4,25 m/min, 5,1 m/min, 6,1 m/min und 7,5 m/min. Die Zeitdauern für die die Geschwindigkeit von 1,2 m/min und die verschiedenen Zwischengeschwindigkeiten jeweils verwendet werden, sind verschieden groß. In der Darstellung sind die Zeitdauern in etwa so lang, dass ein Abbau der Füllung/Belegung des Pufferbands 235 linear oder im Wesentlichen linear in Abhängigkeit von der Zeit verläuft bis die Füllung des Pufferbands 235 einer Füllung/Belegung im Normalbetrieb entspricht, hier etwa 15%. Diese Füllung des Pufferbands 235 wird zurzeit t3 erreicht.

Danach kann der Puffer 231 wieder im Normalbetrieb betrieben werden, d.h. das Pufferband 235 wird mit einer Geschwindigkeit von 8 m/min in der ersten Richtung 236 angetrieben.

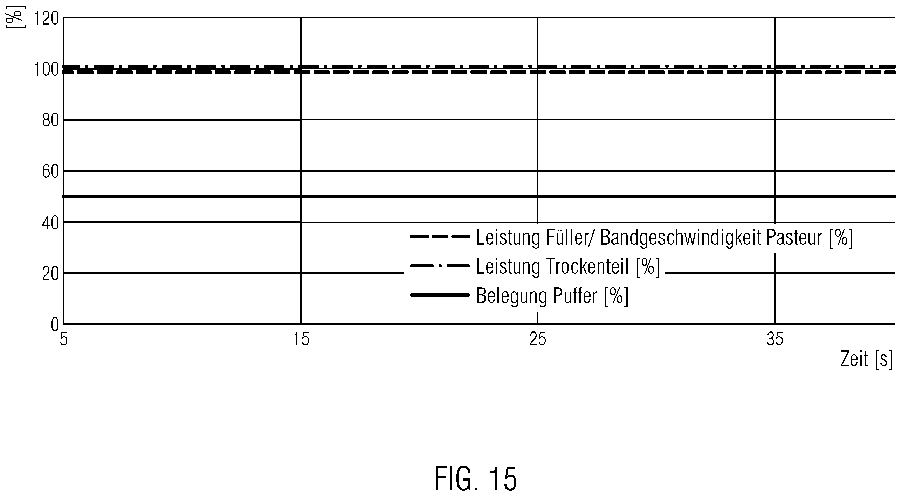

Die Figur 15 zeigt ein Diagramm für einen Normalbetrieb einer Abfülllinie ohne Störung, wobei die Abfülllinie einen Füller und einen Pasteur vor dem Puffer und ein Trockenteil nach dem Puffer umfasst. In Abhängigkeit von der Zeit in Sekunden sind die Belegung des Puffers in % (durchgezogene Linie), die Leistung des Füllers bzw. die Bandgeschwindigkeit des Pasteurs in % (gestrichelte Linie) und die Leistung des Trockenteils in % (strich-punktierte Linie) dargestellt. Die Belegung des Puffers liegt durchgehend bei 50%. Die Leistung des Füllers bzw. die Bandgeschwindigkeit des Pasteurs und die Leistung des Trockenteils liegen jeweils bei 100% (in der Darstellung wurden sie leicht versetzt dargestellt).

Durch die Belegung des Puffers, auch Füllgrad des Pufferbands genannt, ergeben sich die Pufferzeiten, die jeweils für Störungen vor und nach dem Pufferband zur Verfügung stehen. Je höher der Füllgrad des Pufferbands im Normalbetrieb ist, desto mehr Zeit steht für das Puffern bei Störungen vor dem Puffer zur Verfügung, umso weniger allerdings bei Störungen nach dem Puffer. Je niedriger der Füllgrad des Pufferbands im Normalbetrieb ist, desto mehr Zeit steht für das Puffern bei Störungen hinter dem Puffer zur Verfügung, umso weniger allerdings bei Störungen vor dem Puffer.

Das Verhältnis der Pufferzeiten zum Puffern von Störungen vor und nach dem Puffer kann durch den Füllgrad im Normalbetrieb angepasst werden. Beispielsweise kann das Anpassen während des Betriebs der Abfülllinie erfolgen, wobei Störungen vor und/oder nach dem Puffer, ihre Häufigkeit, ihre Dauer, und/oder ihre Korrelation mit Umgebungsbedingungen und/oder Produktionsbedingungen berücksichtigt werden können.

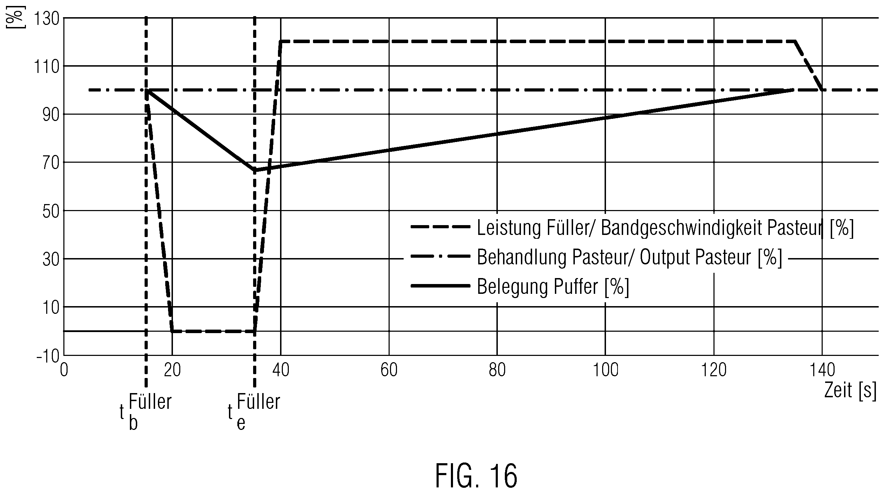

Die Figur 16 zeigt ein Diagramm für einen Betrieb bei Störung vor dem Puffer. In Abhängigkeit von der Zeit in Sekunden sind die Belegung des Puffers in % (durchgezogene Linie), die Leistung des Füllers bzw. die Bandgeschwindigkeit des Pasteurs in % (gestrichelte Linie) und die Behandlung im Pasteur bzw. der Output des Pasteurs in % (strich-punktierte Linie) dargestellt. Zum Zeitpunkt t_{b}^{Füller} beginnt eine Störung des Füllers und zum Zeitpunkt tₑ^{Füller} endet die Störung des Füllers. Mit Beginn der Störung wird das Hauptband des Pasteurs gestoppt, wobei im Pasteur die vorhandenen Behälter aber weiter behandelt werden. Das Pufferband transportiert die Behälter weiterhin mit 100% der Nennleistung, sodass die Belegung des Puffers während der Störung allmählich abnimmt. Sobald die Störung endet, läuft der Füller mit 120% der Nennleistung und das Hauptband des Pasteurs transportiert die Behälter mit 120% der Nennleistung. Wenn das Pufferband wieder den Füllgrad des Pufferbands im Normalbetrieb aufweist, läuft der Füller mit 100% der Nennleistung, das Hauptband des Pasteurs transportiert die Behälter dann mit 100% der Nennleistung und das Pufferband transportiert die Behälter mit weiterhin mit 100% der Nennleistung aus dem Pasteur. Statt 120% der Nennleistung (Füller und/oder Hauptband des Pasteurs) kann auch 105% oder 110% der Nennleistung vorgesehen sein.

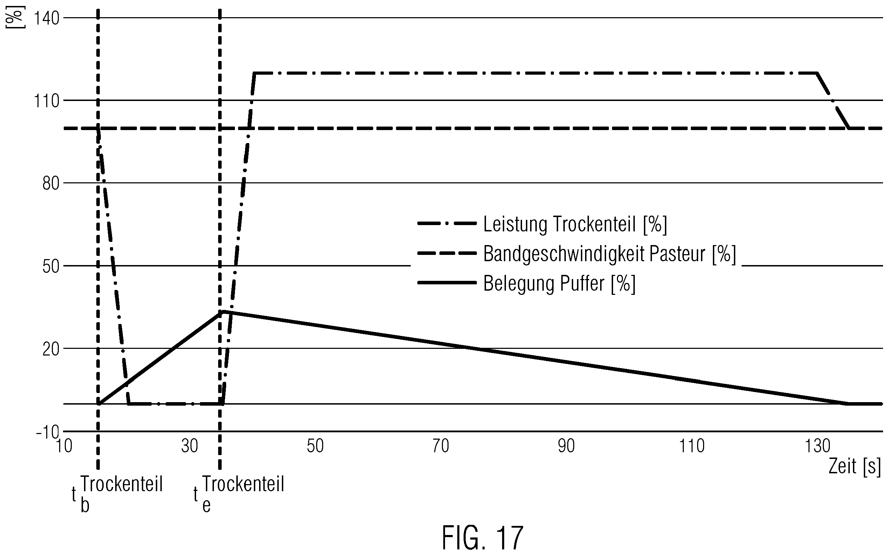

Die Figur 17 zeigt ein Diagramm für einen Betrieb bei Störung nach dem Puffer. In Abhängigkeit von der Zeit in Sekunden sind die Belegung des Puffers in % (durchgezogene Linie), die Bandgeschwindigkeit des Pasteurs in % (gestrichelte Linie) und die Leistung des Trockenteils in % (strich-punktierte Linie) dargestellt. Zum Zeitpunkt t_{b}^{Trockenteil} beginnt eine Störung des Trockenteils und zum Zeitpunkt tₑ^{Trockenteil} endet die Störung des Trockenteils. Mit Beginn der Störung werden keine Behälter mehr vom Pufferband an die nachfolgenden Komponenten abgegeben und ein an das Pufferband anschließender Auslauf, z.B. die Behälterabführvorrichtung, stoppt. Das Pufferband beginnt, Behälter, die an ihn übergeben werden, zu puffern, wodurch sich die Belegung des Puffers erhöht. Die Pufferzeit beträgt hierbei beispielhaft 60 Sekunden. Nach dem Ende der Störung des Trockenteils beginnen der Auslauf, die Inspektion und der Trockenteil mit 120% der Nennleistung zu arbeiten. Wenn das Pufferband wieder den Füllgrad des Pufferbands im Normalbetrieb aufweist, laufen der Auslauf, die Inspektion und das Trockenteil wieder mit 100% der Nennleistung. Der Pasteur arbeitet durchgehend mit 100% der Nennleistung.

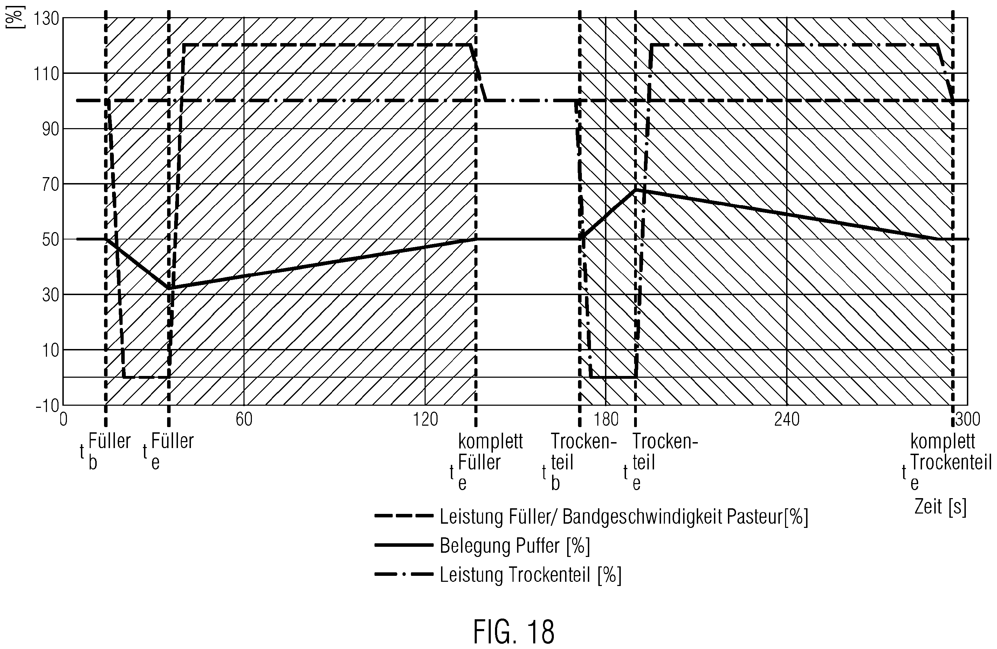

Die Figur 18 zeigt ein Diagramm für einen Betrieb bei zeitlich versetzt auftretenden Störungen vor und nach dem Puffer. In Abhängigkeit von der Zeit in Sekunden sind die Belegung des Puffers in % (durchgezogene Linie), die Leistung des Füllers bzw. die Bandgeschwindigkeit des Pasteurs in % (gestrichelte Linie) und die Leistung des Trockenteils in % (strich-punktierte Linie) dargestellt. Zum Zeitpunkt t_{b}^{Füller}, etwa 15 Sekunden, beginnt eine Störung des Füllers und zum Zeitpunkt tₑ^{Füller}, etwa 35 Sekunden, endet die Störung des Füllers. Mit Beginn dieser Störung wird das Hauptband des Pasteurs gestoppt, wobei im Pasteur die vorhandenen Behälter aber weiter behandelt werden. Das Pufferband transportiert die Behälter weiterhin mit 100% der Nennleistung, sodass die Belegung des Pufferbands während der Störung allmählich abnimmt. Sobald die Störung endet, läuft der Füller mit 120% der Nennleistung und das Hauptband des Pasteurs transportiert die Behälter mit 120% der Nennleistung und das Pufferband transportiert die Behälter mit 100% der Nennleistung. Wenn das Pufferband zum Zeitpunkt tₑ^{komplett, Füller}, etwa 120 Sekunden, wieder auf den Füllgrad des Pufferbands im Normalbetrieb gefüllt ist (hier beispielsweise 50%), läuft der Füller mit 100% der Nennleistung, das Hauptband des Pasteurs transportiert die Behälter dann mit 100% der Nennleistung und das Pufferband transportiert die Behälter mit 100% der Nennleistung.

Zum Zeitpunkt t_{b}^{Trockenteil}, etwa 175 Sekunden beginnt eine Störung des Trockenteils und zum Zeitpunkt tₑ^{Trockenteil}, etwa 195 Sekunden, endet die Störung des Trockenteils. Mit Beginn der Störung werden keine Behälter mehr vom Pufferband an die nachfolgenden Komponenten abgegeben und ein an das Pufferband anschließender Auslauf, z.B. die Behälterabführvorrichtung, stoppt. Der Pufferband beginnt, Behälter, die an ihn übergeben werden, zu puffern, wodurch sich die Belegung des Pufferbands erhöht. Die Pufferzeit beträgt hierbei beispielhaft 60 Sekunden.

Nach dem Ende der Störung des Trockenteils beginnen der Auslauf, die Inspektion und der Trockenteil mit 120% der Nennleistung zu arbeiten. Wenn das Pufferband zum Zeitpunkt tₑ^{komplett, Troeckenteil}, etwa 295 Sekunden, wieder auf den Füllgrad des Pufferbands im Normalbetrieb abgebaut ist, laufen der Auslauf, die Inspektion und das Trockenteil wieder mit 100% der Nennleistung. Der Pasteur arbeitet durchgehend mit 100% der Nennleistung.

Die Pufferzeit beträgt für die Störung vor dem Puffer und für die Störung nach dem Puffer jeweils 60 Sekunden, sodass sich eine Gesamtpufferzeit von 120 Sekunden ergibt.

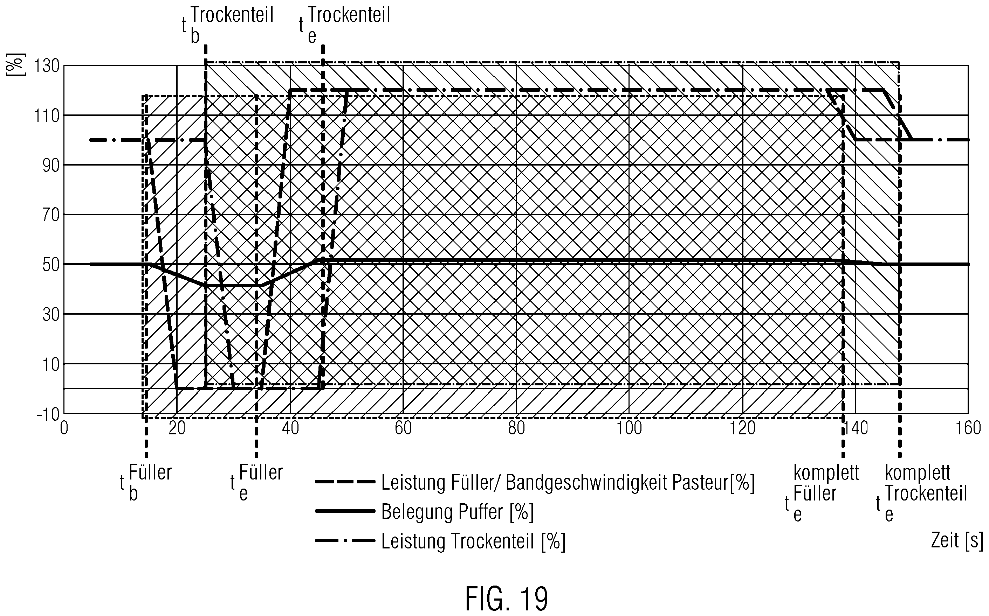

Die Figur 19 zeigt ein Diagramm für einen Betrieb bei sich zeitlich überschneidenden Störungen vor und nach dem Puffer. Zum Zeitpunkt t_{b}^{Füller} beginnt eine Störung des Füllers und mit Beginn der Störung des Füllers wird das Hauptband des Pasteurs gestoppt, wobei im Pasteur die vorhandenen Behälter aber weiter behandelt werden. Das Pufferband transportiert die Behälter weiterhin mit 100% der Nennleistung, sodass die Belegung des Pufferbands während der Störung des Füllers allmählich abnimmt. Zum Zeitpunkt t_{b}^{Trockenteil} beginnt eine Störung des Trockenteils. Mit Beginn der Störung des Trockenteils werden keine Behälter mehr vom Pufferband an die nachfolgenden Komponenten abgegeben und ein an das Pufferband anschließender Auslauf stoppt. Das Pufferband beginnt, Behälter, die an ihn übergeben werden, zu puffern. Da sich die Störung des Füllers und die des Trockenteils zeitlich überschneiden, bleibt während der Zeit, in der beide Störungen vorhanden sind, die Belegung des Pufferbands konstant.

Zum Zeitpunkt tₑ^{Füller} endet die Störung des Füllers. Sobald die Störung endet, läuft der Füller mit 120% der Nennleistung. Das Haupttransportband des Pasteurs transportiert die Behälter mit 120% der Nennleistung. Der Puffer füllt sich allmählich, da wegen der noch andauernden Störung des Trockenteils keine Behälter vom Pufferband abgegeben werden.

Zum Zeitpunkt tₑ^{Trockenteil} endet die Störung des Trockenteils. Nach dem Ende der Störung des Trockenteils beginnen der Puffer (inkl. z.B. Auslauf des Puffers), die Inspektion und der Trockenteil mit 120% der Nennleistung zu arbeiten. Der Füllgrad des Pufferbands des Puffers liegt noch einige %, beispielsweise 3%, über dem Füllgrad im Normalbetrieb. Zum Zeitpunkt tₑ^{komplett, Füller}, bei etwa 135 Sekunden, wird der Füller wieder auf 100% der Nennleistung gebracht. Zum Zeitpunkt tₑ^{komplett, Trockenteil}, bei etwa 148 Sekunden, wird der Puffer (inkl. z.B. der Auslauf des Puffers), die Inspektion und das Trockenteil wieder auf 100% der Nennleistung gebracht. Der Füllgrad des Pufferbands des Puffers wurde soweit abgebaut, dass er dem Füllgrad im Normalbetrieb entspricht. Die unterschiedlichen Zeitpunkte, zu denen die Leistung des Füllers wieder auf 100% der Nennleistung bzw. die Leistung des Trockenteils wieder auf 100% der Nennleistung gebracht wird, können sich aus der Auslegung und der Dimensionierung des Pufferbands des Puffers und der Abfülllinie ergeben.

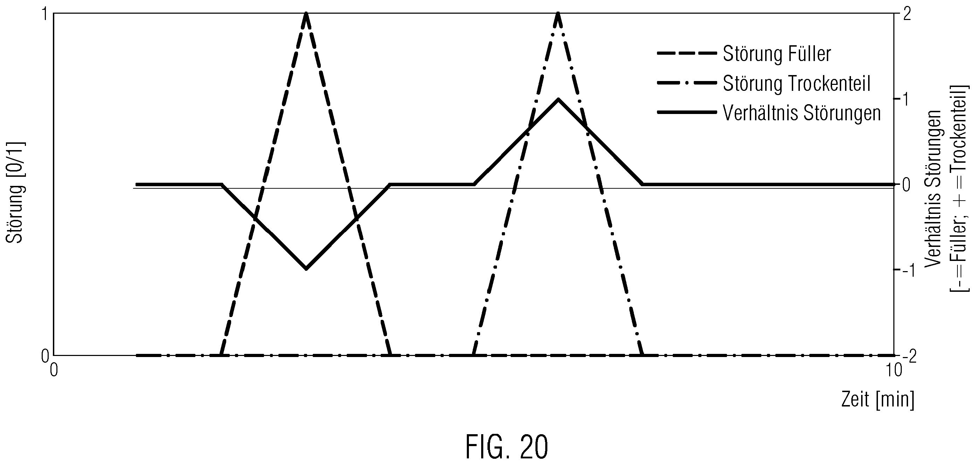

Die Figur 20 zeigt ein Diagramm für ein erstes Verhältnis von Störungen über einen Zeitabschnitt. Das erste Verhältnis von Störungen beträgt hierbei 1 : 1 für Störungen vor dem Puffer zu Störungen nach dem Puffer. Beispielhaft treten eine Störung des Füllers (gestrichelte Linie) und eine Störung des Trockenteils (strichpunktierte Linie) mit jeweils gleicher Zeitdauer auf. Im dargestellten "Verhältnis Störungen" sind negative Werte dem Füller und positive Werte dem Trockenteil zuzuordnen.

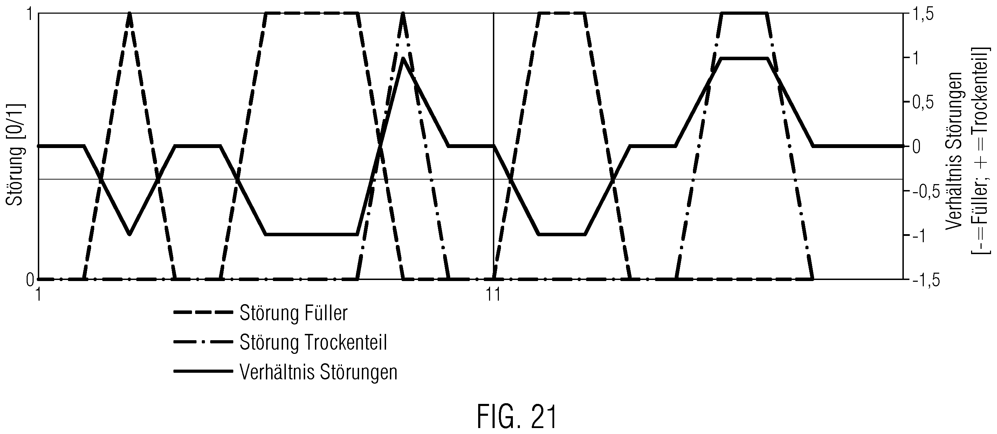

Die Figur 21 zeigt ein Diagramm für ein zweites Verhältnis von Störungen über einen Zeitabschnitt. Das zweite Verhältnis von Störungen beträgt hierbei 2 : 1 für Störungen vor dem Puffer zu Störungen nach dem Puffer. Beispielhaft treten drei Störungen des Füllers (gestrichelte Linie) und zwei Störung des Trockenteils (strichpunktierte Linie) auf, wobei die Zeitdauern ein Verhältnis von 67% : 33% ergeben. Im dargestellten "Verhältnis Störungen" sind negative Werte dem Füller und positive Werte dem Trockenteil zuzuordnen. Da viele Störungen vor dem Puffer auftreten, kann es sinnvoll sein, den Füllgrad des Pufferbands im Normalbetrieb derart zu wählen, dass ein Großteil der Pufferzeit für Störungen vor dem Puffer verwendbar ist.

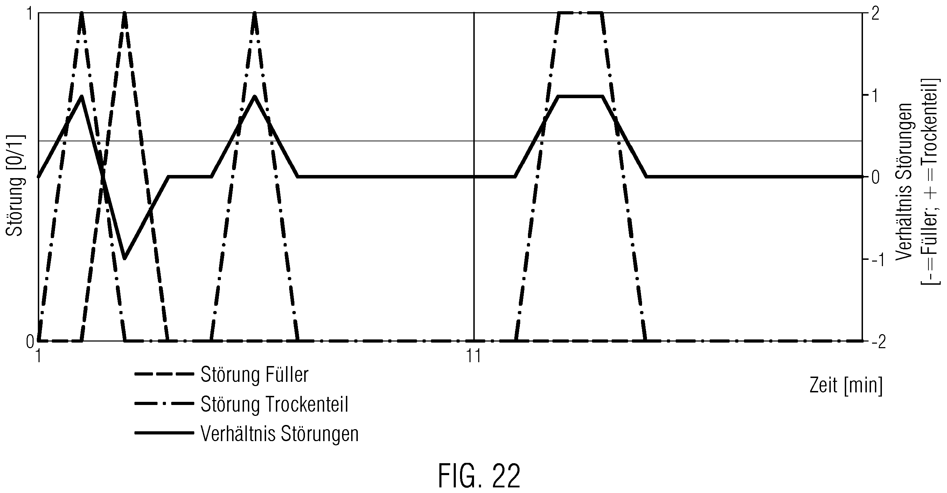

Die Figur 22 zeigt ein Diagramm für ein drittes Verhältnis von Störungen über einen Zeitabschnitt. Das dritte Verhältnis von Störungen beträgt hierbei 1 : 4 für Störungen vor dem Puffer zu Störungen nach dem Puffer. Beispielhaft treten eine Störung des Füllers (gestrichelte Linie) und drei Störungen des Trockenteils (strichpunktierte Linie) auf, wobei die Zeitdauern ein Verhältnis von 20% : 80% ergeben. Im dargestellten "Verhältnis Störungen" sind negative Werte dem Füller und positive Werte dem Trockenteil zuzuordnen. Da viele Störungen nach dem Puffer auftreten, kann es sinnvoll sein, den Füllgrad des Pufferbands im Normalbetrieb derart zu wählen, dass ein Großteil der Pufferzeit für Störungen nach dem Puffer verwendbar ist.

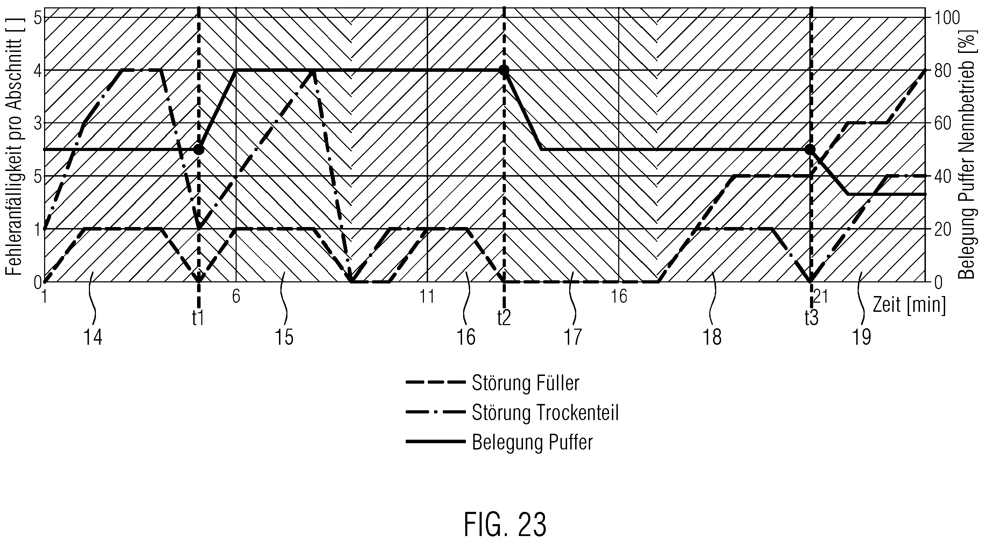

Die Figur 23 zeigt ein Diagramm für eine exemplarische dynamische Pufferregelung mit Anpassung der Pufferzeiten. In verschiedenen zeitlichen Abschnitten 14 - 19 wird eine Fehleranfälligkeit, hier des Füllers und des Trockenteils, ermittelt. Im ersten Abschnitt 14 ergeben sich eine maximale Fehleranfälligkeit des Füllers, also eine Anzahl von auftretenden Störungen des Füllers, von vier und eine maximale Fehleranfälligkeit des Trockenteils, also eine Anzahl von auftretenden Störungen des Trockenteils, von eins.

Im zweiten Abschnitt 15 ergeben sich ebenfalls eine maximale Fehleranfälligkeit des Füllers, also eine Anzahl von auftretenden Störungen des Füllers, von vier und eine maximale Fehleranfälligkeit des Trockenteils, also eine Anzahl von auftretenden Störungen des Trockenteils, von eins, wobei die zeitliche Dauer der Störungen des Füllers jedoch verschieden zu denen des ersten Abschnitts 14 ist.

Im dritten Abschnitt 16 ergeben sich eine maximale Fehleranfälligkeit des Füllers und des Trockenteils von jeweils eins.

Im vierten Abschnitt 17 treten keine Störungen auf.

Im fünften Abschnitt 18 ergeben sich eine maximale Fehleranfälligkeit des Füllers von eins und eine maximale Fehleranfälligkeit des Trockenteils von zwei.

Im sechsten Abschnitt 19 ergeben sich eine maximale Fehleranfälligkeit des Füllers, also auftretende Störungen des Füllers, von zwei und eine maximale Fehleranfälligkeit des Trockenteils von vier.

Zu den Zeitpunkten t1, t2 und t3 erfolgt eine Anpassung der Pufferzeiten anhand der ermittelten Fehleranfälligkeiten durch eine Anpassung des Füllgrads des Puffers während des Normalbetriebs. Da im ersten Abschnitt 14 die Störungen vor dem Puffer überwiegen, wird der Füllgrad des Puffers im Normalbetrieb erhöht. Da im dritten Abschnitt 16 die Störungen vor und nach dem Puffer gleich häufig sind, wird der Füllgrad des Puffers im Normalbetrieb verkleinert. Da im fünften Abschnitt 18 die Störungen nach dem Puffer überwiegen, wird der Füllgrad des Puffers im Normalbetrieb weiter verkleinert.

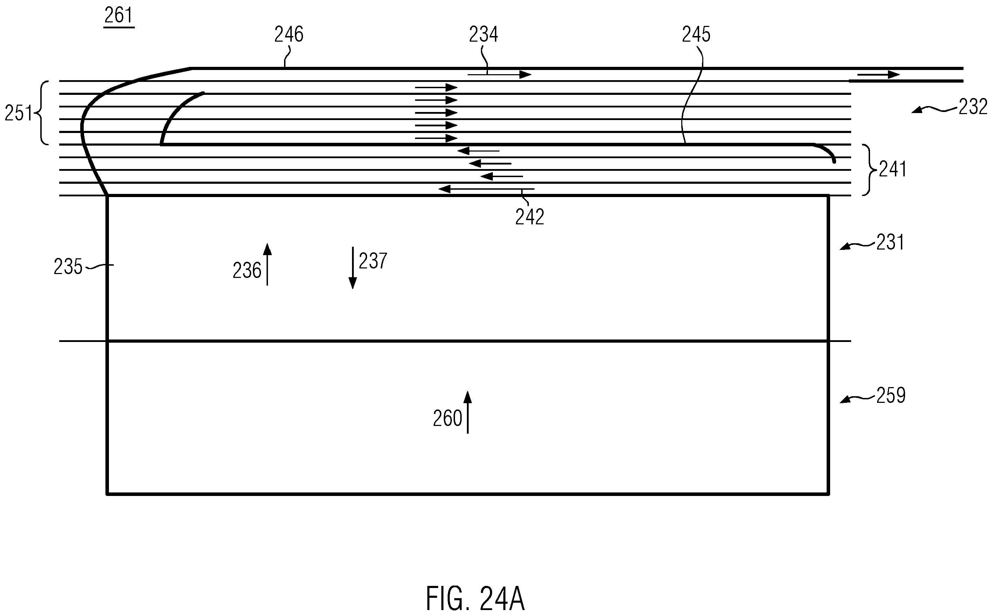

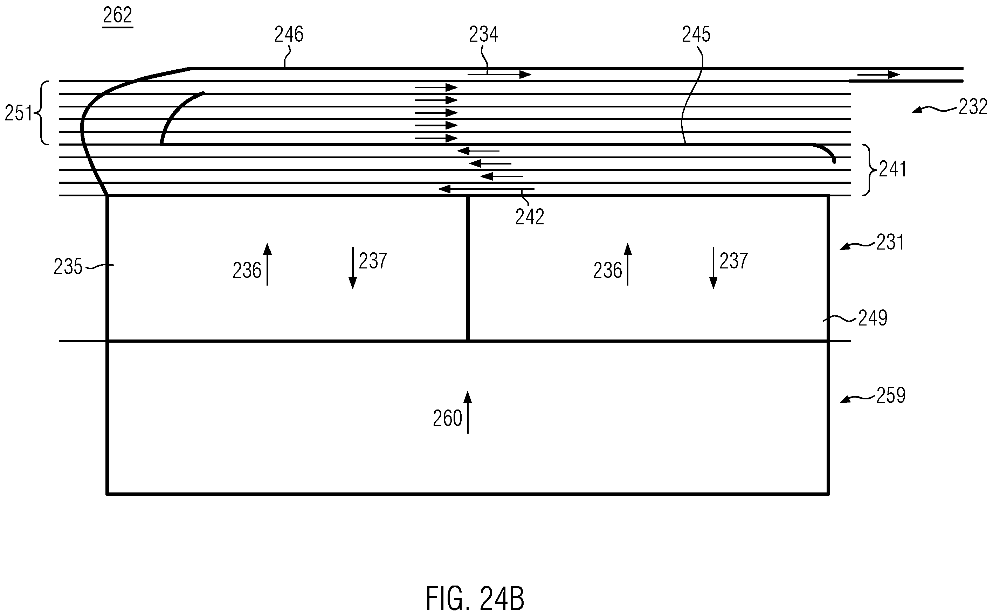

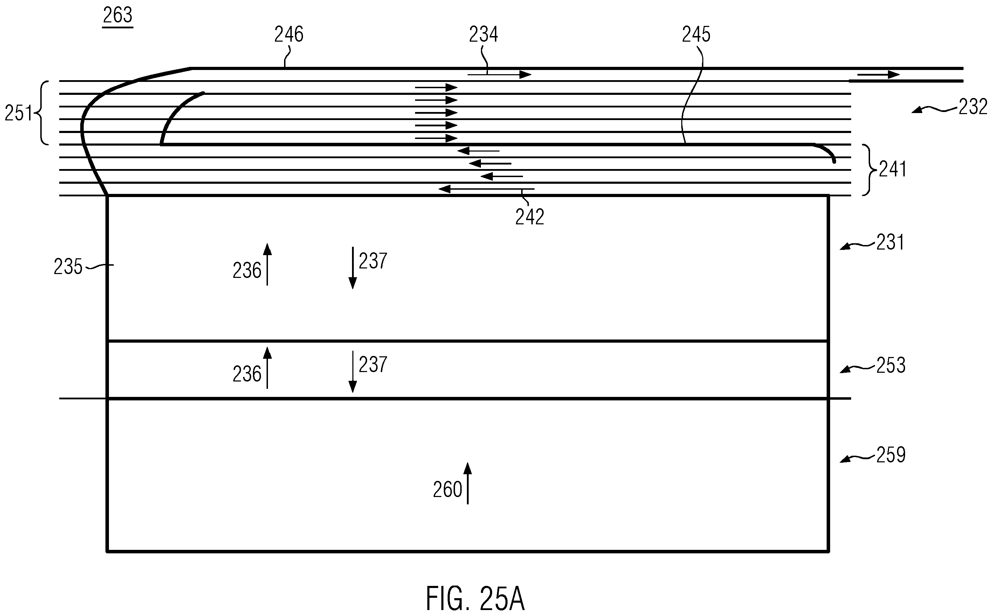

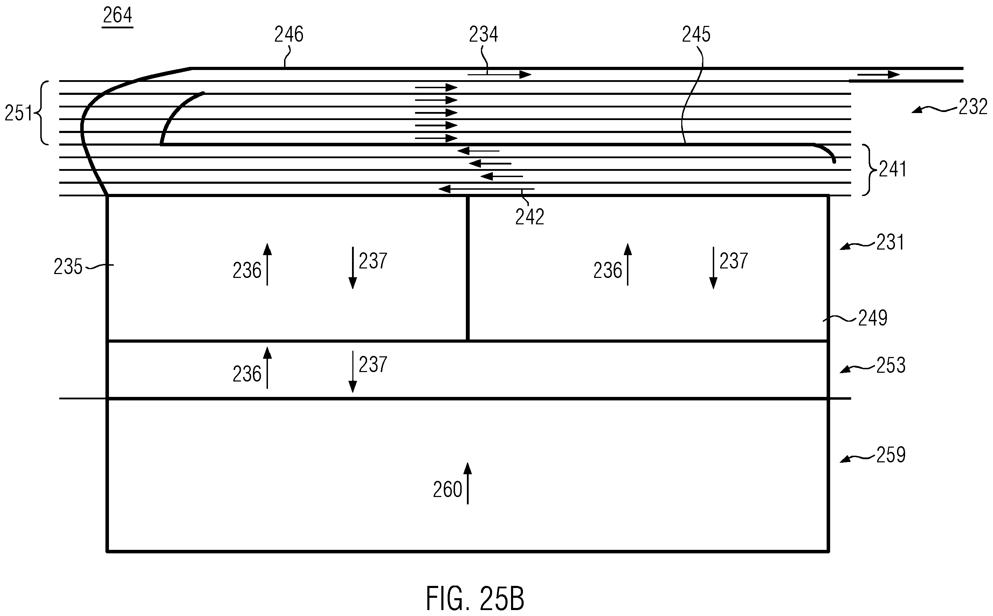

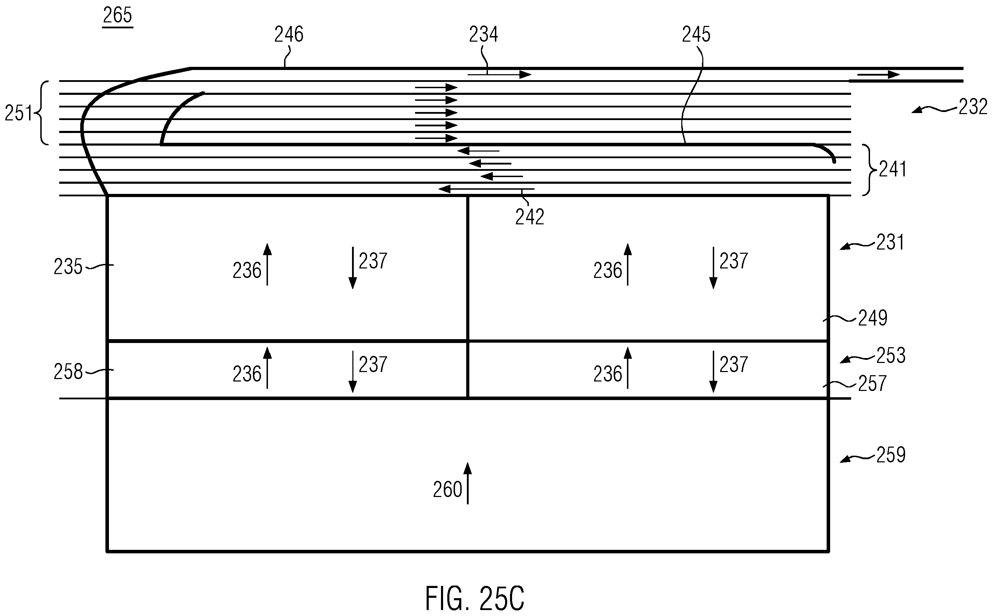

Die Figuren 24A, 24B, 25A, 25B und 25C zeigen verschiedene Ausführungsformen einer Puffervorrichtung, die jeweils eine Behälterreinigungsmaschine, einen Puffer mit einem antreibbaren Pufferband oder mehreren parallel angeordneten, antreibbaren Pufferbändern und eine Behälterabführvorrichtung umfasst.

Die Figur 24A zeigt eine schematische Draufsicht auf eine sechste Ausführungsform einer Puffervorrichtung 261. Die Puffervorrichtung 229 umfasst eine Behälterreinigungsmaschine 259, einen der Behälterreinigungsmaschine 259 nachfolgenden Puffer 231 und eine dem Puffer 231 nachfolgende Behälterabführvorrichtung 232. Die Behälterreinigungsmaschine 259 ist ausgebildet zu reinigende Behälter, beispielsweise Mehrwegglasbehälter, in eine erste Richtung 260 zu transportieren. Der Puffer 231 umfasst ein antreibbares Pufferband 235, das ausgebildet ist, Behälter in eine zweite Richtung 236 zu transportieren oder Behälter in eine dritte Richtung 237 zu transportieren, wobei die zweite 236 und die dritte Richtung 237 entgegengesetzt zueinander sind und die erste Richtung 260 und die zweite Richtung 236 gleich verlaufen. Alternativ kann vorgesehen sein, dass das Pufferband 235 nicht ausgebildet ist, Behälter in die dritte Richtung zu transportieren, dass es also nicht in die dritte Richtung antreibbar ist; das Pufferband 235 kann auch stillstehen. Die Behälterabführvorrichtung 232 ist ausgebildet zum Abführen und Vereinzeln von Behältern von dem Puffer 231 in eine vierte Richtung 242, die quer zur ersten 260, zur zweiten 236 und dritten Richtung 237 verläuft.

Die Behälterabführvorrichtung wurde in den Figuren 3A bis 8E näher erläutert.

Die Figur 24B eine schematische Draufsicht auf eine siebte Ausführungsform einer Puffervorrichtung 262. Die Behälterreinigungsmaschine 259 und die Behälterabführvorrichtung 232 sind baugleich zu denen der Figur 24A. Der Puffer 248 umfasst hier aber zwei parallel angeordnete, antreibbare Pufferbänder 249, 250, die jeweils ausgebildet sind, Behälter in die zweite Richtung 236 zu transportieren oder Behälter in die dritte Richtung 237 zu transportieren. Alternativ kann vorgesehen sein, dass die beiden Pufferbänder 249, 250 nicht ausgebildet sind, Behälter in die dritte Richtung zu transportieren, dass sie also nicht in die dritte Richtung antreibbar sind; die Pufferbänder 249, 250 können auch stillstehen.

Figur 25A eine schematische Draufsicht auf eine achte Ausführungsform einer Puffervorrichtung 263. Die Behälterreinigungsmaschine 259, der Puffer 231 und die Behälterabführvorrichtung sind baugleich zu denen der Figur 24A. Zwischen der Behälterreinigungsmaschine 259 und dem Puffer 231 ist ein Übergangsbereich 253 angeordnet, der als ein einziges antreibbares Band ausgebildet ist, das Behälter in die zweite Richtung 236 oder in die dritte Richtung 237 transportieren kann. Alternativ kann vorgesehen sein, dass das Pufferband 235 nicht ausgebildet ist, Behälter in die dritte Richtung zu transportieren, dass es also nicht in die dritte Richtung antreibbar ist, sondern nur in die zweite Richtung; das antreibbare Pufferband 235 kann auch stillstehen. Der Übergangsbereich 253 kann dabei derart ausgebildet sein, dass er Behälter nur in die zweite Richtung 236, aber nicht in die dritte Richtung transportieren kann; der Übergangsbereich 253 kann auch stillstehen.

Figur 25B eine schematische Draufsicht auf eine neunte Ausführungsform einer Puffervorrichtung 264. Die Behälterreinigungsmaschine 259, der Puffer 248 und die Behälterabführvorrichtung 232 sind baugleich zu denen der Figur 24B. Zwischen der Behälterreinigungsmaschine 259 und dem Puffer 231 ist ein Übergangsbereich 253 angeordnet, der als ein einziges antreibbares Band ausgebildet ist, das Behälter in die zweite Richtung 236 oder in die dritte Richtung 237 transportieren kann. Alternativ kann vorgesehen sein, dass die beiden Pufferbänder 249, 250 nicht ausgebildet sind, Behälter in die dritte Richtung zu transportieren, dass sie also nicht in die dritte Richtung antreibbar sind, sondern nur in die zweite Richtung; das antreibbare Pufferband 235 kann auch stillstehen. Der Übergangsbereich 253 kann dabei derart ausgebildet sein, dass er Behälter nur in die zweite Richtung 236, aber nicht in die dritte Richtung transportieren kann; der Übergangsbereich 253 kann auch stillstehen.

Figur 25C eine schematische Draufsicht auf eine zehnte Ausführungsform einer Puffervorrichtung 265. Die Behälterreinigungsmaschine 259, der Puffer 248 und die Behälterabführvorrichtung 232 sind baugleich zu denen der Figur 24B. Zwischen der Behälterreinigungsmaschine 259 und dem Puffer 248 ist ein Übergangsbereich 256 angeordnet, der eine gleiche Anzahl von antreibbaren Bänder 257, 258, hier also zwei, umfasst wie der Puffer 248, wobei die antreibbaren Bänder 257, 258 ausgebildet sind, Behälter in die zweite 236 oder in die dritte Richtung 237 zu transportieren. Alternativ kann vorgesehen sein, dass die beiden Pufferbänder 249, 250 nicht ausgebildet sind, Behälter in die dritte Richtung zu transportieren, dass sie also nicht in die dritte Richtung antreibbar sind, sondern nur in die zweite Richtung; die Pufferbänder 249, 250 können auch stillstehen. Die Bänder 257, 258 des Übergangsbereichs 256 können dabei derart ausgebildet sein, dass sie Behälter nur in die zweite Richtung 236, aber nicht in die dritte Richtung transportieren können; die Bänder 257, 258 des Übergangsbereichs 256 können auch stillstehen.

## Patentansprüche

1. Puffervorrichtung (229, 247, 252, 254, 255) umfassend eine Behälterzuführvorrichtung (230), einen der Behälterzuführvorrichtung (230) nachfolgenden Puffer (231, 248) und eine dem Puffer (231, 248) nachfolgende Behälterabführvorrichtung (232), wobei
- die Behälterzuführvorrichtung zum Zuführen von Behältern zu dem Puffer, die ausgebildet ist, Behälter mittels erster Transportbänder in eine erste Richtung (234) zu transportieren,
- den Puffer umfassend ein antreibbares Pufferband (235) oder mehrere parallel angeordnete, antreibbare Pufferbänder (249, 250), das ausgebildet ist/die jeweils ausgebildet sind, Behälter in eine zweite Richtung (236) zu transportieren, wobei die zweite Richtung (236) quer zur ersten Richtung (234) verläuft,
- die Behälterabführvorrichtung zum Abführen und Vereinzeln von Behältern von dem Puffer in die erste Richtung (234) oder in eine dritte Richtung (242), die zur ersten Richtung (234) entgegengesetzt ist,
- eine Steuerungsvorrichtung für den Puffer (231, 248), die ausgebildet ist, ein Verfahren zum Steuern des Puffers auszuführen, **dadurch gekennzeichnet, dass** die Steuerungsvorrichtung weiter ausgebildet ist zum:
Erfassen von Störungsdaten einer Störung vor oder nach dem Puffer, beispielsweise von Störungsdaten einer Vorrichtung, die dem Puffer vor- oder nachgeordnet sein kann,
Analysieren der Störungsdaten und Erhalten von Steuerungsdaten zum Steuern des Puffers, und
Steuern eines Füllgrads des oder der Pufferbänder während eines Normalbetriebs anhand der Steuerungsdaten
wobei die Störungsdaten umfassen:
Information, dass eine Störung vor oder nach dem Puffer aufgetreten ist und/oder
Information zu Stillstandzeiten, umfassend beispielsweise Häufigkeiten von Störungen Störungsdauer und oder Minderleistungen und/oder
Information zu Zeitabhängigkeiten von Störungen während einer Produktion und/oder
Information zu Umgebungsdruck und/oder Umgebungstemperatur und/oder Tageszeit während Störungen und/oder
eine Anzahl von Störungen vor und/oder nach dem Puffer und/oder
eine Anzahl von Störungen vor und/oder nach dem Puffer, die das oder die Pufferbänder ganz leelaufen oder ganz volllaufen haben lassen und/oder
akkumulierte Störungsdauern und/oder
klassifizierte Störungsdaten.

2. Die Puffervorrichtung nach Anspruch 1, wobei das antreibbare Pufferband (235) weiter ausgebildet ist oder die mehreren parallel angeordneten, antreibbaren Pufferbänder (249, 250) weiter jeweils ausgebildet sind, Behälter in eine vierte Richtung (237) zu transportieren, wobei die zweite und die vierte Richtung entgegengesetzt zueinander sind und die vierte Richtung (237) quer zur ersten Richtung (234) verläuft
und/oder
wobei das Pufferband (235) oder die Pufferbänder (249, 250) mit einer Geschwindigkeit von 0 m/min bis 20 m/min antreibbar sind, beispielsweise in die zweite Richtung (236) oder in die vierte Richtung (237)
und/oder
wobei zwischen der Behälterzuführvorrichtung und dem Puffer mindestens ein Übergangsbereich (253, 256) angeordnet ist, wobei eine Länge des Übergangsbereichs (253, 256) kürzer als eine Länge des Puffers (231, 248) ist, wobei beispielsweise der Übergangsbereich (253) als ein einziges antreibbares Band ausgebildet ist, um Behälter in die zweite Richtung (236) oder in die vierte Richtung (237) zu transportieren, oder wobei beispielsweise der Übergangsbereich (256) eine gleiche Anzahl von antreibbaren Bändern (257, 258) umfasst wie der Puffer (248), wobei die antreibbaren Bänder (257, 258) ausgebildet sind, Behälter in die zweite Richtung (236) oder in die vierte Richtung (237) zu transportieren
und/oder
wobei das Pufferband (235) oder die Pufferbänder (249, 250) mit einer Geschwindigkeit von -20 m/min bis 60 m/min, beispielsweise -10 m/min bis 30 m/min oder beispielsweise -5 m/min bis 15 m/min antreibbar sind, wobei beispielsweise bei mehreren parallel angeordneten, antreibbaren Pufferbändern (249, 250) ein separater Antrieb für jedes der Pufferbänder (249, 250) oder wobei ein gemeinsamer Antrieb für die Pufferbänder (249, 250) vorgesehen ist
und/oder
wobei eine Länge des Pufferbands (235) oder der Pufferbänder (249, 250) derart bemessen ist, dass in einem Pufferbetrieb ein Puffern von Behältern auf dem Pufferband (235) oder den Pufferbändern (249, 250) für eine Zeitdauer von 0 bis 30 Minuten, 0 bis 20 Minuten, 0 bis 10 Minuten, 0,15 bis 15 Minuten oder beispielweise 0,1 bis 10 Minuten oder beispielweise 0,1 bis 5 Minuten möglich ist.

3. Die Puffervorrichtung nach Anspruch 1 oder 2, wobei die Steuerungsvorrichtung weiter ausgebildet ist
- nach Auftreten einer Störung stromab des Puffers, die ein Puffern von Behältern auf dem Pufferband oder den Pufferbändern erforderlich macht:
- Umstellen eines Normalbetriebs des Puffers zu einem Pufferbetrieb des Puffers, wobei das Umstellen umfasst:
- Beibehalten einer ersten Geschwindigkeit der Behälterzuführvorrichtung in der ersten Richtung, wobei die erste Geschwindigkeit einen ersten Wert aufweist und
- gleichzeitiges Abbremsen des Pufferbands von einer zweiten Geschwindigkeit mit einem zweiten Wert in der zweiten Richtung auf eine dritte Geschwindigkeit mit einem dritten Wert in der zweiten Richtung,
oder
gleichzeitiges Abbremsen der Pufferbänder von einer zweiten Geschwindigkeit mit jeweils einem zweiten Wert in der zweiten Richtung auf eine dritte Geschwindigkeit mit jeweils einem dritten Wert in der zweiten Richtung.

4. Die Puffervorrichtung nach Anspruch 3, wobei das Umstellen weiter umfasst:
- wenn die Störung behoben wurde, Umstellen des Pufferbetriebs des Puffers zum Normalbetrieb, wobei dieses Umstellen umfasst:
- weiterhin Beibehalten der ersten Geschwindigkeit der Behälterzuführvorrichtung in der ersten Richtung, wobei die erste Geschwindigkeit den ersten Wert aufweist und
- gleichzeitiges Erhöhen der dritten Geschwindigkeit des Pufferbands zurück zur zweiten Geschwindigkeit in die zweite Richtung und Beibehalten der zweiten Geschwindigkeit in die zweite Richtung
oder
gleichzeitiges Erhöhen der jeweils dritten Geschwindigkeit der Pufferbänder zurück zur zweiten Geschwindigkeit in die zweite Richtung und Beibehalten der zweiten Geschwindigkeit in die zweite Richtung.

5. Die Puffervorrichtung nach Anspruch 3, wobei das Umstellen des Normalbetriebs zum Pufferbetrieb des Puffers weiter umfasst:
- weiterhin Beibehalten der ersten Geschwindigkeit der Behälterzuführvorrichtung in der ersten Richtung, wobei die erste Geschwindigkeit den ersten Wert aufweist und
- gleichzeitiges Abbremsen des Pufferbands von der dritten Geschwindigkeit mit einem dritten Wert in der zweiten Richtung auf eine Geschwindigkeit von 0 m/min und anschließendes Beschleunigen des Pufferbands von der Geschwindigkeit von 0 m/min auf eine vierte Geschwindigkeit in die vierte Richtung, wobei die vierte Geschwindigkeit einen vierten Wert aufweist, der kleiner als der zweite Wert ist, und Beibehalten der vierten Geschwindigkeit in die vierte Richtung
oder
gleichzeitiges Abbremsen der Pufferbänder von der dritten Geschwindigkeit mit jeweils einem dritten Wert in der zweiten Richtung auf eine Geschwindigkeit von 0 m/min und anschließendes Beschleunigen der Pufferbänder von der Geschwindigkeit von 0 m/min auf jeweils eine vierte Geschwindigkeit in die vierte Richtung, wobei die vierte Geschwindigkeit jeweils einen vierten Wert aufweist, der kleiner als der zweite Wert ist, und Beibehalten der jeweils vierten Geschwindigkeit in die vierte Richtung.

6. Die Puffervorrichtung nach Anspruch 5, wobei das Umstellen des Normalbetriebs zum Pufferbetrieb des Pufferbands weiter umfasst:
- wenn die von der Behälterzuführvorrichtung auf das Pufferband transportierten Behälter und die vom Pufferband zurückgeführten Behälter einen Anfangsbereich des Pufferbands füllen,
- weiterhin Beibehalten der ersten Geschwindigkeit der Behälterzuführvorrichtung in der ersten Richtung, wobei die erste Geschwindigkeit den ersten Wert aufweist und
- gleichzeitiges Abbremsen des Pufferbands von der vierten Geschwindigkeit in die vierte Richtung auf eine fünfte Geschwindigkeit mit einem fünften Wert von 0 m/min und anschließendes Beschleunigen des Pufferbands von der fünften Geschwindigkeit auf eine sechste Geschwindigkeit in die zweite Richtung, wobei die sechste Geschwindigkeit einen sechsten Wert aufweist, der gleich dem ersten Wert ist
oder
- wenn die von der Behälterzuführvorrichtung auf die Pufferbänder transportierten Behälter und die von den Pufferbändern zurückgeführten Behälter einen Anfangsbereich der Pufferbänder füllen,
- weiterhin Beibehalten der ersten Geschwindigkeit der Behälterzuführvorrichtung in der ersten Richtung, wobei die erste Geschwindigkeit den ersten Wert aufweist und
- gleichzeitiges Abbremsen der Pufferbänder von der jeweils vierten Geschwindigkeit in die vierte Richtung auf eine fünfte Geschwindigkeit mit einem fünften Wert von 0 m/min und anschließendes Beschleunigen der Pufferbänder von der fünften Geschwindigkeit auf eine sechste Geschwindigkeit in die zweite Richtung, wobei die sechste Geschwindigkeit einen sechsten Wert aufweist, der gleich dem ersten Wert ist.

7. Die Puffervorrichtung nach Anspruch 6, weiter umfassend:
- wenn die Störung behoben wurde, Umstellen des Pufferbetriebs des Puffers zum Normalbetrieb, wobei dieses Umstellen umfasst:
- weiterhin Beibehalten der ersten Geschwindigkeit der Behälterzuführvorrichtung in der ersten Richtung, wobei die erste Geschwindigkeit den ersten Wert aufweist und
- gleichzeitiges Erhöhen der sechsten Geschwindigkeit des Pufferbands auf eine siebte Geschwindigkeit in die zweite Richtung, wobei der siebte Wert gleich dem zweiten Wert ist und Beibehalten der siebten Geschwindigkeit in die zweite Richtung
oder
gleichzeitiges Erhöhen der sechsten Geschwindigkeit der Pufferbänder auf eine jeweils siebte Geschwindigkeit in die zweite Richtung, wobei der jeweils siebte Wert gleich dem jeweils zweiten Wert ist und Beibehalten der jeweils siebten Geschwindigkeit in die zweite Richtung.

8. Die Puffervorrichtung nach Anspruch 5 oder 6, weiter umfassend:
- wenn die Störung stromab des Puffers nicht behoben wurde und das Pufferband oder die Pufferbänder ganz oder im Wesentlichen ganz mit Behältern gefüllt ist/sind, beispielsweise wenn das Pufferband oder die Pufferbänder gleich oder mehr als 90% bis 95% mit Behältern gefüllt ist/sind, wobei das Verfahren umfasst:
- Abbremsen der Behälterzuführvorrichtung von der ersten Geschwindigkeit in der ersten Richtung auf eine neunte Geschwindigkeit mit einem neunten Wert von 0 m/min und
- gleichzeitig Abbremsen des Pufferbands oder der Pufferbänder von der jeweils sechsten Geschwindigkeit in der zweiten Richtung auf eine zehnte Geschwindigkeit mit einem zehnten Wert von 0 m/min.

9. Die Puffervorrichtung nach Anspruch 8, weiter umfassend:
- wenn die Störung behoben wurde, Umstellen des Pufferbetriebs des Puffers zum Normalbetrieb, wobei dieses Umstellen umfasst:
- Erhöhen von der neunten Geschwindigkeit der Behälterzuführvorrichtung auf eine elfte Geschwindigkeit in der ersten Richtung, wobei der elfte Wert gleich dem ersten Wert ist und Beibehalten der elften Geschwindigkeit in die erste Richtung und
- gleichzeitiges Erhöhen von der zehnten Geschwindigkeit des Pufferbands auf eine zwölfte Geschwindigkeit in die zweite Richtung
oder
gleichzeitiges Erhöhen von der zehnten Geschwindigkeit der Pufferbänder auf eine jeweils zwölfte Geschwindigkeit in die zweite Richtung.

10. Die Puffervorrichtung nach einem der Ansprüche 6 bis 9, wobei das gleichzeitige Erhöhen schrittweise über eine oder mehrere, jeweils größere Zwischengeschwindigkeiten erfolgt, wobei beispielsweise ein Erhöhen um jeweils 15 bis 20% vorgesehen ist, wobei beispielsweise eine der Zwischengeschwindigkeiten jeweils für eine gegebene oder anpassbare Zeitdauer beibehalten wird, bevor ein Erhöhen zu einer nächsten Zwischengeschwindigkeit erfolgt, wobei beispielsweise die jeweils gegebene oder anpassbare Zeitdauer für die verschiedenen Zwischengeschwindigkeiten verschieden groß oder gleich groß sind.

11. Die Puffervorrichtung nach einem der Ansprüche 1 bis 10, wobei bei einer Steuerung auf einen Füllgrad von 30%, auch erster Füllgrad genannt, eine Störung vor dem Puffer durch das oder die Pufferbänder für mindestens 20, 30, 40, 50 oder 60 Sekunden und eine Störung nach dem Puffer durch das oder die Pufferbänder für mindestens 20, 30, 40, 50, 60, 70, 80, 90, 100, 110 oder 120 Sekunden pufferbar ist oder
wobei bei einer Steuerung auf einen zweiten Füllgrad, der kleiner als der erste Füllgrad ist, eine Störung vor dem Puffer durch das Pufferband oder die Pufferbänder für weniger als 60 Sekunden und eine Störung nach dem Puffer durch das oder die Pufferbänder für mehr als 120 Sekunden pufferbar ist oder
wobei bei einer Steuerung auf einen dritten Füllgrad, der größer als der erste Füllgrad ist, eine Störung vor dem Puffer durch das oder die Pufferbänder für mehr als 60 Sekunden und eine Störung nach dem Puffer durch das oder die Pufferbänder für weniger als 120 Sekunden pufferbar ist.

12. Die Puffervorrichtung nach einem der Ansprüche 1 bis 10, wobei das Steuern den Füllgrad des Pufferbands oder der Pufferbänder auf 30% steuert, wobei beispielsweise eine Pufferzeit für eine Störung vor dem Puffer mindestens 60 Sekunden beträgt, wobei beispielsweise eine Pufferzeit für eine Störung nach dem Puffer mindestens 120 Sekunden beträgt oder wobei beispielsweis eine erste Pufferzeit für eine erste Störung vor dem Puffer mindestens 60 Sekunden beträgt und wobei eine zweite Pufferzeit für eine zweite Störung nach dem Puffer mindestens 60 Sekunden beträgt.

13. Die Puffervorrichtung nach einem der Ansprüche 1 bis 12, wobei die Steuerungsdaten mittels automatischer Analyse, beispielsweise mittels eines Analyseprogramms und/oder durch maschinelles Lernen, erhalten werden.

14. Die Puffervorrichtung nach einem der Ansprüche 1 bis 13, wobei ein Sollwert des Füllgrads des oder der Pufferbänder anhand der Störungsdaten erhöht oder erniedrigt wird und der erhöhte oder erniedrigte Sollwert für die Steuerung des Füllgrads genutzt wird
und/oder
wobei das Erfassen der Störungsdaten das Analysieren der Störungsdaten und das Erhalten der Steuerungsdaten und das Steuern des Füllgrads des Pufferbands während eines Normalbetriebs anhand der Steuerungsdaten in regelmäßigen Abstanden erfolgt, beispielsweise alle 10 Sekunden bis 20 Sekunden, alle 5 Minuten bis 45 Minuten, einmal pro Stunde, einmal pro Tag oder einmal pro Woche oder wobei das Steuern des Füllgrads des oder der Pufferbänder während eines Normalbetriebs anhand der Steuerungsdaten erfolgt: nach Überschreiten einer ersten gegebenen Maximalanzahl von Störungen vor und/oder nach dem Puffer und/oder nach Überschreiten einer zweiten gegebenen Maximalanzahl von Störungen vor und/oder nach dem Puffer, die das oder die Pufferbänder ganz leerlaufen oder ganz volllaufen haben lassen oder wobei das Steuern des Füllgrads des oder der Pufferbänder während eines Normalbetriebs anhand der Steuerungsdaten nach Überschreiten einer gegebenen Maximalanzahl von akkumulierten Störungsdauern von Störungen vor und/oder nach dem Puffer erfolgt.

15. Die Puffervorrichtung nach einem der Ansprüche 1 bis 14, wobei die Behälterzuführvorrichtung (186, 210) umfasst:
einen einspurigen Einlaufförderer (187), der in die dritte Richtung (201) antreibbar und ausgebildet ist, Behälter in die erste Richtung (201) zu fördern,
parallel anschließend an den einspurigen Einlaufförderer (187) eine erste Gruppe (193) von mehreren parallel angeordneten ersten Förderern (188, 189, 190, 191, 192), die in die dritte Richtung (201) antreibbar und ausgebildet sind, Behälter in die dritte Richtung (201) zu fördern,
parallel anschließend an die erste Gruppe (193) von mehreren parallel angeordneten ersten Förderern (188-192) eine zweite Gruppe (199) von mehreren parallel angeordneten zweiten Förderern (194, 195, 196, 197, 198), die in die erste Richtung (202) antreibbar und ausgebildet sind, Behälter in die erste Richtung (202) zu fördern,
wobei die Behälter von der zweiten Gruppe (199) von mehreren parallel angeordneten zweiten Förderern (194-198) quer zur ersten Richtung (202) in die zweite Richtung (207) zu dem Puffer (203) abgebbar sind
und/oder
wobei die Behälterabführvorrichtung (1, 33, 59, 89, 121, 154) umfasst:
- anschließend an den Puffer eine erste Gruppe (4, 34, 60, 90, 122, 155) von mehreren parallel angeordneten ersten Förderern (5-7, 35-39, 61-65, 91-94, 123-126, 156-159), die in die dritte Richtung (8, 40, 66, 95, 127, 160) quer zur zweiten Richtung antreibbar und ausgebildet sind, Behälter (32, 85, 117, 151, 182) zu vereinzeln und in die dritte Richtung zu fördern,
- parallel anschließend an die erste Gruppe von mehreren parallel angeordneten ersten Förderern eine zweite Gruppe (9, 41, 67, 96, 128, 161) von mehreren parallel angeordneten zweiten Förderern (10-18, 42-47, 68-73, 97-100, 129-136, 162-168), die in die erste Richtung (19, 48, 74, 101, 137, 169) antreibbar und ausgebildet sind, die vereinzelten Behälter in die erste Richtung zu fördern,
- ein oder mehrere dritte Förderer (20-22, 49, 75, 103-105, 140, 170), deren Anzahl kleiner als eine Anzahl der zweiten Förderer ist, wobei der dritte oder die dritten Förderer ausgebildet ist/sind, die vereinzelten Behälter abzutransportieren.

## Claims

1. Buffer device (229, 247, 252, 254, 255) comprising a container feed device (230), a buffer (231, 248) following the container feed device (230), and a container discharge device (232) following the buffer (231, 248), wherein
• the container feed device for feeding containers to the buffer, which is configured to transport containers by means of first conveyor belts in a first direction (234),
• the buffer comprising a drivable buffer belt (235) or a plurality of drivable buffer belts (249, 250) arranged in parallel, which is/are each configured to transport containers in a second direction (236), wherein the second direction (236) extends transversely to the first direction (234),
• the container discharge device for discharging and singulating containers from the buffer in the first direction (234) or in a third direction (242) which is opposite to the first direction (234),
• a control device for the buffer (231, 248), which is configured to carry out a method for controlling the buffer,
**characterized in that** the control device is further configured for:
acquiring fault data of a fault upstream or downstream of the buffer, for example fault data of a device which may be arranged upstream or downstream of the buffer,
analysing the fault data and obtaining control data for controlling the buffer, and
controlling a fill level of the buffer belt or buffer belts during normal operation on the basis of the control data,
wherein the fault data comprise:
information that a fault has occurred upstream or downstream of the buffer and/or
information relating to downtimes, comprising, for example, frequencies of faults, fault duration and/or reduced outputs and/or
information relating to time dependencies of faults during production and/or
information relating to ambient pressure and/or ambient temperature and/or time of day during faults and/or
a number of faults upstream and/or downstream of the buffer and/or
a number of faults upstream and/or downstream of the buffer which have caused the buffer belt or buffer belts to become completely empty or completely full and/or
accumulated fault durations and/or
classified fault data.

2. Buffer device according to claim 1, wherein the drivable buffer belt (235) is further configured, or the plurality of drivable buffer belts (249, 250) arranged in parallel are each further configured, to transport containers in a fourth direction (237), wherein the second and fourth directions are opposite to one another and the fourth direction (237) extends transversely to the first direction (234)
and/or
wherein the buffer belt (235) or the buffer belts (249, 250) can be driven at a speed of 0 m/min to 20 m/min, for example in the second direction (236) or in the fourth direction (237)
and/or
wherein at least one transition region (253, 256) is arranged between the container feed device and the buffer, wherein a length of the transition region (253, 256) is shorter than a length of the buffer (231, 248), wherein, for example, the transition region (253) is configured as a single drivable belt in order to transport containers in the second direction (236) or in the fourth direction (237), or wherein, for example, the transition region (256) comprises the same number of drivable belts (257, 258) as the buffer (248), wherein the drivable belts (257, 258) are configured to transport containers in the second direction (236) or in the fourth direction (237)
and/or
wherein the buffer belt (235) or the buffer belts (249, 250) can be driven at a speed of -20 m/min to 60 m/min, for example -10 m/min to 30 m/min or, for example, -5 m/min to 15 m/min, wherein, for example, in the case of a plurality of drivable buffer belts (249, 250) arranged in parallel, a separate drive is provided for each of the buffer belts (249, 250), or wherein a common drive is provided for the buffer belts (249, 250)
and/or
wherein a length of the buffer belt (235) or of the buffer belts (249, 250) is dimensioned such that, in buffer operation, buffering of containers on the buffer belt (235) or the buffer belts (249, 250) is possible for a period of 0 to 30 minutes, 0 to 20 minutes, 0 to 10 minutes, 0.15 to 15 minutes or, for example, 0.1 to 10 minutes or, for example, 0.1 to 5 minutes.

3. Buffer device according to claim 1 or 2, wherein the control device is further configured
• after occurrence of a fault downstream of the buffer which requires buffering of containers on the buffer belt or the buffer belts:
• to switch normal operation of the buffer to buffer operation of the buffer, wherein the switching comprises:
• maintaining a first speed of the container feed device in the first direction, wherein the first speed has a first value, and
• simultaneously decelerating the buffer belt from a second speed having a second value in the second direction to a third speed having a third value in the second direction,
or
simultaneously decelerating the buffer belts from a second speed each having a second value in the second direction to a third speed each having a third value in the second direction.

4. Buffer device according to claim 3, wherein the switching further comprises:
• when the fault has been remedied, switching the buffer operation of the buffer to normal operation, wherein this switching comprises:
• continuing to maintain the first speed of the container feed device in the first direction, wherein the first speed has the first value, and
• simultaneously increasing the third speed of the buffer belt back to the second speed in the second direction and maintaining the second speed in the second direction
or
simultaneously increasing the respective third speed of the buffer belts back to the second speed in the second direction and maintaining the second speed in the second direction.

5. Buffer device according to claim 3, wherein the switching of the normal operation to the buffer operation of the buffer further comprises:
• continuing to maintain the first speed of the container feed device in the first direction, wherein the first speed has the first value, and
• simultaneously decelerating the buffer belt from the third speed having a third value in the second direction to a speed of 0 m/min and subsequently accelerating the buffer belt from the speed of 0 m/min to a fourth speed in the fourth direction, wherein the fourth speed has a fourth value which is smaller than the second value, and maintaining the fourth speed in the fourth direction
or
simultaneously decelerating the buffer belts from the third speed each having a third value in the second direction to a speed of 0 m/min and subsequently accelerating the buffer belts from the speed of 0 m/min to a respective fourth speed in the fourth direction, wherein the fourth speed in each case has a fourth value which is smaller than the second value, and maintaining the respective fourth speed in the fourth direction.

6. Buffer device according to claim 5, wherein the switching of the normal operation to the buffer operation of the buffer belt further comprises:
• when the containers transported by the container feed device onto the buffer belt and the containers returned by the buffer belt fill an initial region of the buffer belt,
• continuing to maintain the first speed of the container feed device in the first direction, wherein the first speed has the first value, and
• simultaneously decelerating the buffer belt from the fourth speed in the fourth direction to a fifth speed having a fifth value of 0 m/min and subsequently accelerating the buffer belt from the fifth speed to a sixth speed in the second direction, wherein the sixth speed has a sixth value which is equal to the first value
or
• when the containers transported by the container feed device onto the buffer belts and the containers returned by the buffer belts fill an initial region of the buffer belts,
• continuing to maintain the first speed of the container feed device in the first direction, wherein the first speed has the first value, and
• simultaneously decelerating the buffer belts from the respective fourth speed in the fourth direction to a fifth speed having a fifth value of 0 m/min and subsequently accelerating the buffer belts from the fifth speed to a sixth speed in the second direction, wherein the sixth speed has a sixth value which is equal to the first value.

7. Buffer device according to claim 6, further comprising:
• when the fault has been remedied, switching the buffer operation of the buffer to normal operation, wherein this switching comprises:
• continuing to maintain the first speed of the container feed device in the first direction, wherein the first speed has the first value, and
• simultaneously increasing the sixth speed of the buffer belt to a seventh speed in the second direction, wherein the seventh value is equal to the second value, and maintaining the seventh speed in the second direction
or
simultaneously increasing the sixth speed of the buffer belts to a respective seventh speed in the second direction, wherein the respective seventh value is equal to the respective second value, and maintaining the respective seventh speed in the second direction.

8. Buffer device according to claim 5 or 6, further comprising:
• when the fault downstream of the buffer has not been remedied and the buffer belt or the buffer belts is/are completely or substantially completely filled with containers, for example when the buffer belt or the buffer belts is/are at least 90% to 95% filled with containers, wherein the method comprises:
• decelerating the container feed device from the first speed in the first direction to a ninth speed having a ninth value of 0 m/min, and
• simultaneously decelerating the buffer belt or the buffer belts from the respective sixth speed in the second direction to a tenth speed having a tenth value of 0 m/min.

9. Buffer device according to claim 8, further comprising:
• when the fault has been remedied, switching the buffer operation of the buffer to normal operation, wherein this switching comprises:
• increasing the ninth speed of the container feed device to an eleventh speed in the first direction, wherein the eleventh value is equal to the first value, and maintaining the eleventh speed in the first direction, and
• simultaneously increasing the tenth speed of the buffer belt to a twelfth speed in the second direction
or
simultaneously increasing the tenth speed of the buffer belts to a respective twelfth speed in the second direction.

10. Buffer device according to any one of claims 6 to 9, wherein the simultaneous increasing takes place stepwise via one or more respective increasing intermediate speeds, wherein, for example, an increase by 15 to 20% in each case is provided, wherein, for example, one of the intermediate speeds is maintained in each case for a given or adjustable period before an increase to a next intermediate speed takes place, wherein, for example, the respective given or adjustable period is different or the same for the different intermediate speeds.

11. Buffer device according to any one of claims 1 to 10, wherein, when controlling to a fill level of 30%, also referred to as a first fill level, a fault upstream of the buffer can be buffered by the buffer belt or buffer belts for at least 20, 30, 40, 50 or 60 seconds and a fault downstream of the buffer can be buffered by the buffer belt or buffer belts for at least 20, 30, 40, 50, 60, 70, 80, 90, 100, 110 or 120 seconds, or
wherein, when controlling to a second fill level which is smaller than the first fill level, a fault upstream of the buffer can be buffered by the buffer belt or buffer belts for less than 60 seconds and a fault downstream of the buffer can be buffered by the buffer belt or buffer belts for more than 120 seconds, or
wherein, when controlling to a third fill level which is greater than the first fill level, a fault upstream of the buffer can be buffered by the buffer belt or buffer belts for more than 60 seconds and a fault downstream of the buffer can be buffered by the buffer belt or buffer belts for less than 120 seconds.

12. Buffer device according to any one of claims 1 to 10, wherein the controlling controls the fill level of the buffer belt or buffer belts to 30%, wherein, for example, a buffering time for a fault upstream of the buffer is at least 60 seconds, wherein, for example, a buffering time for a fault downstream of the buffer is at least 120 seconds, or wherein, for example, a first buffering time for a first fault upstream of the buffer is at least 60 seconds and wherein a second buffering time for a second fault downstream of the buffer is at least 60 seconds.

13. Buffer device according to any one of claims 1 to 12, wherein the control data are obtained by means of automatic analysis, for example by means of an analysis program and/or by machine learning.

14. Buffer device according to any one of claims 1 to 13, wherein a setpoint of the fill level of the buffer belt or buffer belts is increased or decreased on the basis of the fault data and the increased or decreased setpoint is used for controlling the fill level
and/or
wherein the acquiring of the fault data, the analysing of the fault data and the obtaining of the control data and the controlling of the fill level of the buffer belt during normal operation on the basis of the control data take place at regular intervals, for example every 10 seconds to 20 seconds, every 5 minutes to 45 minutes, once per hour, once per day or once per week, or wherein the controlling of the fill level of the buffer belt or buffer belts during normal operation on the basis of the control data takes place: after a first given maximum number of faults upstream and/or downstream of the buffer has been exceeded and/or after a second given maximum number of faults upstream and/or downstream of the buffer which have caused the buffer belt or buffer belts to become completely empty or completely full has been exceeded, or wherein the controlling of the fill level of the buffer belt or buffer belts during normal operation on the basis of the control data takes place after a given maximum number of accumulated fault durations of faults upstream and/or downstream of the buffer has been exceeded.

15. Buffer device according to any one of claims 1 to 14, wherein the container feed device (186, 210) comprises:
a single-track infeed conveyor (187), which can be driven in the third direction (201) and is configured to convey containers in the first direction (201),
following in parallel the single-track infeed conveyor (187), a first group (193) of a plurality of first conveyors (188, 189, 190, 191, 192) arranged in parallel, which can be driven in the third direction (201) and are configured to convey containers in the third direction (201),
following in parallel the first group (193) of a plurality of first conveyors (188-192) arranged in parallel, a second group (199) of a plurality of second conveyors (194, 195, 196, 197, 198) arranged in parallel, which can be driven in the first direction (202) and are configured to convey containers in the first direction (202),
wherein the containers can be transferred from the second group (199) of the plurality of second conveyors (194-198) arranged in parallel transversely to the first direction (202) in the second direction (207) to the buffer (203)
and/or
wherein the container discharge device (1, 33, 59, 89, 121, 154) comprises:
• following the buffer, a first group (4, 34, 60, 90, 122, 155) of a plurality of first conveyors (5-7, 35-39, 61-65, 91-94, 123-126, 156-159) arranged in parallel, which can be driven in the third direction (8, 40, 66, 95, 127, 160) transversely to the second direction and are configured to singulate containers (32, 85, 117, 151, 182) and convey them in the third direction,
• following in parallel the first group of the plurality of first conveyors arranged in parallel, a second group (9, 41, 67, 96, 128, 161) of a plurality of second conveyors (10-18, 42-47, 68-73, 97-100, 129-136, 162-168) arranged in parallel, which can be driven in the first direction (19, 48, 74, 101, 137, 169) and are configured to convey the singulated containers in the first direction,
• one or more third conveyors (20-22, 49, 75, 103-105, 140, 170), the number of which is smaller than a number of the second conveyors, wherein the third conveyor or third conveyors is/are configured to convey away the singulated containers.

## Revendications

1. Dispositif tampon (229, 247, 252, 254, 255) comprenant un dispositif d'alimentation de récipients (230), un tampon (231, 248) faisant suite au dispositif d'alimentation de récipients (230) et un dispositif d'évacuation de récipients (232) faisant suite au tampon (231, 248), dans lequel
• le dispositif d'alimentation de récipients destiné à alimenter le tampon en récipients, qui est configuré pour transporter des récipients au moyen de premières bandes transporteuses dans une première direction (234),
• le tampon comprenant une bande tampon entraînable (235) ou plusieurs bandes tampons entraînables (249, 250) disposées en parallèle, qui est/sont respectivement configurée(s) pour transporter des récipients dans une deuxième direction (236), la deuxième direction (236) étant transversale à la première direction (234),
• le dispositif d'évacuation de récipients destiné à évacuer et séparer les récipients du tampon dans la première direction (234) ou dans une troisième direction (242) opposée à la première direction (234),
• un dispositif de commande pour le tampon (231, 248), qui est configuré pour exécuter un procédé de commande du tampon,
**caractérisé en ce que** le dispositif de commande est en outre configuré pour :
acquérir des données de perturbation relatives à une perturbation en amont ou en aval du tampon, par exemple des données de perturbation relatives à un dispositif pouvant être disposé en amont ou en aval du tampon,
analyser les données de perturbation et obtenir des données de commande pour commander le tampon, et
commander un niveau de remplissage de la ou des bandes tampons pendant un fonctionnement normal sur la base des données de commande,
dans lequel les données de perturbation comprennent :
une information indiquant qu'une perturbation s'est produite en amont ou en aval du tampon et/ou
des informations relatives à des temps d'arrêt, comprenant par exemple des fréquences de perturbations, une durée de perturbation et/ou des baisses de rendement et/ou
des informations relatives à des dépendances temporelles de perturbations pendant une production et/ou
des informations relatives à la pression ambiante et/ou à la température ambiante et/ou à l'heure de la journée pendant des perturbations et/ou
un nombre de perturbations en amont et/ou en aval du tampon et/ou
un nombre de perturbations en amont et/ou en aval du tampon ayant entraîné un vidage complet ou un remplissage complet de la ou des bandes tampons et/ou
des durées de perturbation cumulées et/ou
des données de perturbation classifiées.

2. Dispositif tampon selon la revendication 1, dans lequel la bande tampon entraînable (235) est en outre configurée, ou les plusieurs bandes tampons entraînables (249, 250) disposées en parallèle sont en outre respectivement configurées, pour transporter des récipients dans une quatrième direction (237), les deuxième et quatrième directions étant opposées l'une à l'autre et la quatrième direction (237) étant transversale à la première direction (234)
et/ou
dans lequel la bande tampon (235) ou les bandes tampons (249, 250) peuvent être entraînées à une vitesse de 0 m/min à 20 m/min, par exemple dans la deuxième direction (236) ou dans la quatrième direction (237)
et/ou
dans lequel au moins une zone de transition (253, 256) est disposée entre le dispositif d'alimentation de récipients et le tampon, une longueur de la zone de transition (253, 256) étant inférieure à une longueur du tampon (231, 248), dans lequel, par exemple, la zone de transition (253) est réalisée sous la forme d'une unique bande entraînable afin de transporter des récipients dans la deuxième direction (236) ou dans la quatrième direction (237), ou dans lequel, par exemple, la zone de transition (256) comprend le même nombre de bandes entraînables (257, 258) que le tampon (248), les bandes entraînables (257, 258) étant configurées pour transporter des récipients dans la deuxième direction (236) ou dans la quatrième direction (237)
et/ou
dans lequel la bande tampon (235) ou les bandes tampons (249, 250) peuvent être entraînées à une vitesse de -20 m/min à 60 m/min, par exemple de -10 m/min à 30 m/min ou, par exemple, de -5 m/min à 15 m/min, dans lequel, par exemple, dans le cas de plusieurs bandes tampons entraînables (249, 250) disposées en parallèle, un entraînement séparé est prévu pour chacune des bandes tampons (249, 250), ou un entraînement commun est prévu pour les bandes tampons (249, 250)
et/ou
dans lequel une longueur de la bande tampon (235) ou des bandes tampons (249, 250) est dimensionnée de telle sorte que, dans un fonctionnement en mode tampon, un tamponnement de récipients sur la bande tampon (235) ou les bandes tampons (249, 250) soit possible pendant une durée de 0 à 30 minutes, de 0 à 20 minutes, de 0 à 10 minutes, de 0,15 à 15 minutes ou, par exemple, de 0,1 à 10 minutes ou, par exemple, de 0,1 à 5 minutes.

3. Dispositif tampon selon la revendication 1 ou 2, dans lequel le dispositif de commande est en outre configuré
• après l'apparition d'une perturbation en aval du tampon nécessitant un tamponnement de récipients sur la bande tampon ou les bandes tampons :
• pour faire passer le tampon d'un fonctionnement normal à un fonctionnement en mode tampon, le passage comprenant :
• le maintien d'une première vitesse du dispositif d'alimentation de récipients dans la première direction, la première vitesse présentant une première valeur, et
• le ralentissement simultané de la bande tampon d'une deuxième vitesse présentant une deuxième valeur dans la deuxième direction à une troisième vitesse présentant une troisième valeur dans la deuxième direction,
ou
le ralentissement simultané des bandes tampons d'une deuxième vitesse présentant chacune une deuxième valeur dans la deuxième direction à une troisième vitesse présentant chacune une troisième valeur dans la deuxième direction.

4. Dispositif tampon selon la revendication 3, dans lequel le passage comprend en outre :
• lorsque la perturbation a été supprimée, le passage du fonctionnement en mode tampon du tampon au fonctionnement normal, ce passage comprenant :
• la poursuite du maintien de la première vitesse du dispositif d'alimentation de récipients dans la première direction, la première vitesse présentant la première valeur, et
• l'augmentation simultanée de la troisième vitesse de la bande tampon jusqu'à la deuxième vitesse dans la deuxième direction et le maintien de la deuxième vitesse dans la deuxième direction
ou
l'augmentation simultanée de la troisième vitesse respective des bandes tampons jusqu'à la deuxième vitesse dans la deuxième direction et le maintien de la deuxième vitesse dans la deuxième direction.

5. Dispositif tampon selon la revendication 3, dans lequel le passage du fonctionnement normal au fonctionnement en mode tampon du tampon comprend en outre :
• la poursuite du maintien de la première vitesse du dispositif d'alimentation de récipients dans la première direction, la première vitesse présentant la première valeur, et
• le ralentissement simultané de la bande tampon de la troisième vitesse présentant une troisième valeur dans la deuxième direction à une vitesse de 0 m/min, puis l'accélération de la bande tampon de la vitesse de 0 m/min à une quatrième vitesse dans la quatrième direction, la quatrième vitesse présentant une quatrième valeur inférieure à la deuxième valeur, et le maintien de la quatrième vitesse dans la quatrième direction
ou
le ralentissement simultané des bandes tampons de la troisième vitesse présentant chacune une troisième valeur dans la deuxième direction à une vitesse de 0 m/min, puis l'accélération des bandes tampons de la vitesse de 0 m/min à une quatrième vitesse respective dans la quatrième direction, la quatrième vitesse présentant respectivement une quatrième valeur inférieure à la deuxième valeur, et le maintien de la quatrième vitesse respective dans la quatrième direction.

6. Dispositif tampon selon la revendication 5, dans lequel le passage du fonctionnement normal au fonctionnement en mode tampon de la bande tampon comprend en outre :
• lorsque les récipients transportés par le dispositif d'alimentation de récipients sur la bande tampon et les récipients ramenés par la bande tampon remplissent une zone initiale de la bande tampon,
• la poursuite du maintien de la première vitesse du dispositif d'alimentation de récipients dans la première direction, la première vitesse présentant la première valeur, et
• le ralentissement simultané de la bande tampon de la quatrième vitesse dans la quatrième direction à une cinquième vitesse présentant une cinquième valeur de 0 m/min, puis l'accélération de la bande tampon de la cinquième vitesse à une sixième vitesse dans la deuxième direction, la sixième vitesse présentant une sixième valeur égale à la première valeur
ou
• lorsque les récipients transportés par le dispositif d'alimentation de récipients sur les bandes tampons et les récipients ramenés par les bandes tampons remplissent une zone initiale des bandes tampons,
• la poursuite du maintien de la première vitesse du dispositif d'alimentation de récipients dans la première direction, la première vitesse présentant la première valeur, et
• le ralentissement simultané des bandes tampons de la quatrième vitesse respective dans la quatrième direction à une cinquième vitesse présentant une cinquième valeur de 0 m/min, puis l'accélération des bandes tampons de la cinquième vitesse à une sixième vitesse dans la deuxième direction, la sixième vitesse présentant une sixième valeur égale à la première valeur.

7. Dispositif tampon selon la revendication 6, comprenant en outre :
• lorsque la perturbation a été supprimée, le passage du fonctionnement en mode tampon du tampon au fonctionnement normal, ce passage comprenant :
• la poursuite du maintien de la première vitesse du dispositif d'alimentation de récipients dans la première direction, la première vitesse présentant la première valeur, et
• l'augmentation simultanée de la sixième vitesse de la bande tampon à une septième vitesse dans la deuxième direction, la septième valeur étant égale à la deuxième valeur, et le maintien de la septième vitesse dans la deuxième direction
ou
l'augmentation simultanée de la sixième vitesse des bandes tampons à une septième vitesse respective dans la deuxième direction, la septième valeur respective étant égale à la deuxième valeur respective, et le maintien de la septième vitesse respective dans la deuxième direction.

8. Dispositif tampon selon la revendication 5 ou 6, comprenant en outre :
• lorsque la perturbation en aval du tampon n'a pas été supprimée et que la bande tampon ou les bandes tampons est/sont complètement ou sensiblement complètement remplie(s) de récipients, par exemple lorsque la bande tampon ou les bandes tampons est/sont remplie(s) à au moins 90 % à 95 % de récipients, le procédé comprenant :
• le ralentissement du dispositif d'alimentation de récipients de la première vitesse dans la première direction à une neuvième vitesse présentant une neuvième valeur de 0 m/min, et
• simultanément, le ralentissement de la bande tampon ou des bandes tampons de la sixième vitesse respective dans la deuxième direction à une dixième vitesse présentant une dixième valeur de 0 m/min.

9. Dispositif tampon selon la revendication 8, comprenant en outre :
• lorsque la perturbation a été supprimée, le passage du fonctionnement en mode tampon du tampon au fonctionnement normal, ce passage comprenant :
• l'augmentation de la neuvième vitesse du dispositif d'alimentation de récipients à une onzième vitesse dans la première direction, la onzième valeur étant égale à la première valeur, et le maintien de la onzième vitesse dans la première direction, et
• l'augmentation simultanée de la dixième vitesse de la bande tampon à une douzième vitesse dans la deuxième direction
ou
l'augmentation simultanée de la dixième vitesse des bandes tampons à une douzième vitesse respective dans la deuxième direction.

10. Dispositif tampon selon l'une quelconque des revendications 6 à 9, dans lequel l'augmentation simultanée s'effectue par étapes via une ou plusieurs vitesses intermédiaires respectivement croissantes, dans lequel, par exemple, une augmentation respective de 15 à 20 % est prévue, dans lequel, par exemple, l'une des vitesses intermédiaires est respectivement maintenue pendant une durée donnée ou réglable avant qu'une augmentation à une vitesse intermédiaire suivante n'ait lieu, dans lequel, par exemple, la durée respective donnée ou réglable est différente ou identique pour les différentes vitesses intermédiaires.

11. Dispositif tampon selon l'une quelconque des revendications 1 à 10, dans lequel, lors d'une commande à un niveau de remplissage de 30 %, également appelé premier niveau de remplissage, une perturbation en amont du tampon peut être tamponnée par la ou les bandes tampons pendant au moins 20, 30, 40, 50 ou 60 secondes et une perturbation en aval du tampon peut être tamponnée par la ou les bandes tampons pendant au moins 20, 30, 40, 50, 60, 70, 80, 90, 100, 110 ou 120 secondes, ou
dans lequel, lors d'une commande à un deuxième niveau de remplissage inférieur au premier niveau de remplissage, une perturbation en amont du tampon peut être tamponnée par la bande tampon ou les bandes tampons pendant moins de 60 secondes et une perturbation en aval du tampon peut être tamponnée par la ou les bandes tampons pendant plus de 120 secondes, ou
dans lequel, lors d'une commande à un troisième niveau de remplissage supérieur au premier niveau de remplissage, une perturbation en amont du tampon peut être tamponnée par la ou les bandes tampons pendant plus de 60 secondes et une perturbation en aval du tampon peut être tamponnée par la ou les bandes tampons pendant moins de 120 secondes.

12. Dispositif tampon selon l'une quelconque des revendications 1 à 10, dans lequel la commande commande le niveau de remplissage de la bande tampon ou des bandes tampons à 30 %, dans lequel, par exemple, une durée de tamponnement pour une perturbation en amont du tampon est d'au moins 60 secondes, dans lequel, par exemple, une durée de tamponnement pour une perturbation en aval du tampon est d'au moins 120 secondes, ou dans lequel, par exemple, une première durée de tamponnement pour une première perturbation en amont du tampon est d'au moins 60 secondes et une deuxième durée de tamponnement pour une deuxième perturbation en aval du tampon est d'au moins 60 secondes.

13. Dispositif tampon selon l'une quelconque des revendications 1 à 12, dans lequel les données de commande sont obtenues au moyen d'une analyse automatique, par exemple au moyen d'un programme d'analyse et/ou par apprentissage automatique.

14. Dispositif tampon selon l'une quelconque des revendications 1 à 13, dans lequel une valeur de consigne du niveau de remplissage de la ou des bandes tampons est augmentée ou diminuée sur la base des données de perturbation et la valeur de consigne augmentée ou diminuée est utilisée pour commander le niveau de remplissage
et/ou
dans lequel l'acquisition des données de perturbation, l'analyse des données de perturbation et l'obtention des données de commande ainsi que la commande du niveau de remplissage de la bande tampon pendant un fonctionnement normal sur la base des données de commande ont lieu à intervalles réguliers, par exemple toutes les 10 secondes à 20 secondes, toutes les 5 minutes à 45 minutes, une fois par heure, une fois par jour ou une fois par semaine, ou dans lequel la commande du niveau de remplissage de la ou des bandes tampons pendant un fonctionnement normal sur la base des données de commande a lieu : après dépassement d'un premier nombre maximal donné de perturbations en amont et/ou en aval du tampon et/ou après dépassement d'un deuxième nombre maximal donné de perturbations en amont et/ou en aval du tampon ayant entraîné un vidage complet ou un remplissage complet de la ou des bandes tampons, ou dans lequel la commande du niveau de remplissage de la ou des bandes tampons pendant un fonctionnement normal sur la base des données de commande a lieu après dépassement d'un nombre maximal donné de durées cumulées de perturbations en amont et/ou en aval du tampon.

15. Dispositif tampon selon l'une quelconque des revendications 1 à 14, dans lequel le dispositif d'alimentation de récipients (186, 210) comprend :
un convoyeur d'entrée à une seule voie (187), qui peut être entraîné dans la troisième direction (201) et est configuré pour transporter des récipients dans la première direction (201),
faisant suite en parallèle au convoyeur d'entrée à une seule voie (187), un premier groupe (193) de plusieurs premiers convoyeurs (188, 189, 190, 191, 192) disposés en parallèle, qui peuvent être entraînés dans la troisième direction (201) et sont configurés pour transporter des récipients dans la troisième direction (201),
faisant suite en parallèle au premier groupe (193) de plusieurs premiers convoyeurs (188-192) disposés en parallèle, un deuxième groupe (199) de plusieurs deuxièmes convoyeurs (194, 195, 196, 197, 198) disposés en parallèle, qui peuvent être entraînés dans la première direction (202) et sont configurés pour transporter des récipients dans la première direction (202),
dans lequel les récipients peuvent être transférés du deuxième groupe (199) de plusieurs deuxièmes convoyeurs (194-198) disposés en parallèle, transversalement à la première direction (202), dans la deuxième direction (207), vers le tampon (203)
et/ou
dans lequel le dispositif d'évacuation de récipients (1, 33, 59, 89, 121, 154) comprend:
• faisant suite au tampon, un premier groupe (4, 34, 60, 90, 122, 155) de plusieurs premiers convoyeurs (5-7, 35-39, 61-65, 91-94, 123-126, 156-159) disposés en parallèle, qui peuvent être entraînés dans la troisième direction (8, 40, 66, 95, 127, 160), transversalement à la deuxième direction, et sont configurés pour séparer des récipients (32, 85, 117, 151, 182) et les transporter dans la troisième direction,
• faisant suite en parallèle au premier groupe de plusieurs premiers convoyeurs disposés en parallèle, un deuxième groupe (9, 41, 67, 96, 128, 161) de plusieurs deuxièmes convoyeurs (10-18, 42-47, 68-73, 97-100, 129-136, 162-168) disposés en parallèle, qui peuvent être entraînés dans la première direction (19, 48, 74, 101, 137, 169) et sont configurés pour transporter les récipients séparés dans la première direction,
• un ou plusieurs troisièmes convoyeurs (20-22, 49, 75, 103-105, 140, 170), dont le nombre est inférieur au nombre des deuxièmes convoyeurs, le troisième convoyeur ou les troisièmes convoyeurs étant configuré(s) pour évacuer les récipients séparés.
